# EUROPEAN PATENT SPECIFICATION

(11) **EP 3 193 303 B1**
(45) Date of publication and mention of the grant of the patent: **31.01.2024**
(21) Application number: 15839297.7
(22) Date of filing: 28.08.2015
(51) Int. Cl.: G06Q 50/02, A01G 7/00

(54) **SYSTEM AND METHOD FOR GENERATING A RELATIONSHIP GRAPHS**
VORRICHTUNG UND VERFAHREN ZUM ERSTELLEN VON BEZIEHUNGSDIAGRAMMEN
SYSTÈME ET PROCÉDÉ POUR GÉNÉRER DES GRAPHIQUES DE RELATION

(30) Priority: 11.09.2014 JP 2014185142
(43) Date of publication of application: 19.07.2017
(73) Proprietor: Sony Group Corporation, Tokyo 108-0075 (JP)
(72) Inventor: FUNABASHI, Masatoshi, Tokyo 141-0022 (JP)
(74) Representative: Witte, Weller & Partner Patentanwälte mbB
(86) International application number: PCT/JP2015/074356
(87) International publication number: WO 2016/039176

(56) References cited:
- JP-A- 2002 073 689
- JP-A- 2006 023 947
- JP-A- 2007 058 088
- JP-A- 2010 061 416
- JP-A- 2013 255 473
- JP-A- 2014 023 456
- US-A1- 2012 169 504

## Description

### TECHNICAL FIELD

The present technology relates to a system, an information processing method, and a program, and more particularly, to a system, an information processing method, and a program for aiding ecosystem utilization, for example.

### BACKGROUND ART

The earth's ecosystem is being destroyed by various kinds of human activities today, and it will probably become difficult to extract natural resources in the near future. In view of this, ecosystem utilization has recently being drawing attention.

Ecosystem utilization includes the use of ladybugs in disinfecting agricultural crops without any pesticide, and synecoculture based on symbiotic effects of ecosystems and utilization of useful species, for example.

Here, synecoculture is a farming method based on a biodiversity that is made greater than that in a natural state by virtue of vegetation arrangement and reduced harvesting from mixed and closed vegetation under constraint conditions that nothing other than seeds and seedlings is used in no-tilling and pesticide- and chemical-free environments.

This farming method is to realize a yield amount in total.

There is a device suggested to aid synecoculture so that workers can determine optimum combinations of vegetation (see Patent Literature 1). Patent Document 2 discloses systems and methods for controlling spraying applications based at least on the presence of plants or animals that may be sensitive to a sprayed substance or that may be marketed with a certain property that is inconsistent with the sprayed substance.

### CITATION LIST

### PATENT DOCUMENT

Patent Document 1: WO 2014/007109 A
Patent Document 2: US 2012/169504 A1

### SUMMARY OF THE INVENTION

### PROBLEMS TO BE SOLVED BY THE INVENTION

However, it is hard to say that ecosystems are being actively utilized.

The present technology has been developed in view of those circumstances, and is to aid ecosystem utilization.

### SOLUTIONS TO PROBLEMS

According to the present invention a system, an information processing method and a program are presented as defined in the claims.

The program to be provided may be transmitted via a transmission medium or may be recorded on a recording medium.

### EFFECTS OF THE INVENTION

According to the present technology, ecosystem utilization can be aided.

It should be noted that effects of the present technology are not limited to the effect described above, and may include any of the effects described in the present disclosure.

### BRIEF DESCRIPTION OF DRAWINGS

Fig. 1 is a block diagram showing an example configuration of an embodiment of an ecosystem utilization system to which the present technology is applied.
Fig. 2 is a diagram showing an example configuration of a network 10.
Fig. 3 is a block diagram showing an example structure of a terminal 12.
Fig. 4 is a block diagram showing an example functional structure of a server 13.
Fig. 5 is a diagram showing an example structure of a synecoculture DB.
Fig. 6 is a diagram showing an example structure of a seeding DB.
Fig. 7 is a diagram showing an example structure of a vegetation DB.
Fig. 8 is a diagram showing an example structure of a yield DB.
Fig. 9 is a diagram showing an example structure of a maintenance record DB.
Fig. 10 is a diagram showing an example structure of a phenology DB formed with characters.
Fig. 11 is a diagram showing an example structure of a phenology DB formed with images.
Fig. 12 is a diagram showing an example structure of an insects and animals DB.
Fig. 13 is a diagram showing an example structure of a weather DB.
Fig. 14 is a diagram showing an example structure of an allelopathy DB.
Fig. 15 is a diagram showing an example structure of a rotation suitability DB.
Fig. 16 is a flowchart for explaining an example process to aid a vegetation plan.
Fig. 17 is a diagram showing an example output of symbiotic allelopathy.
Fig. 18 is a schematic view of an example of display of an AR tag.
Fig. 19 is a diagram showing an example of the site map of a web page as a synecoculture page.
Fig. 20 is a diagram showing an example of display of a field distribution on a map provided through the synecoculture page.
Fig. 21 is a flowchart for explaining an example process to be performed in a case where a user refers to information about a farm field (a field).
Fig. 22 is a flowchart for explaining an example of a photograph uploading process.
Fig. 23 is a flowchart for explaining an example process to register a key event.
Fig. 24 is a diagram for explaining a relationship graph to be generated by the graph display control unit 72 of the server 13 (or the acquiring unit 51 of a terminal 12).
Fig. 25 is a diagram showing an example of relationship scores determined from a bipartite graph of a vegetation/farm field DB.
Fig. 26 is a diagram showing an example of a graph display screen.
Fig. 27 is a diagram showing another example of a graph display screen.
Fig. 28 is a diagram showing yet another example of a graph display screen.
Fig. 29 is a diagram showing an example of relationship scores.
Fig. 30 is a diagram showing an example of a graph display screen.
Fig. 31 is a diagram showing an example of a graph display screen displaying a relationship graph showing the node of a farm field #3 as the attention node.
Fig. 32 is a diagram showing an example of a bipartite graph generated from a vegetation/recipe DB.
Fig. 33 is a diagram showing an example of relationship scores.
Fig. 34 is a diagram showing an example of a graph display screen.
Fig. 35 is a diagram showing an example of a bipartite graph generated from two DBs.
Fig. 36 is a diagram showing an example of a DB to be used in generating a relationship graph.
Fig. 37 is a diagram showing an example of a graph display screen.
Fig. 38 is a diagram showing an example of a graph display screen generated with Gephi.
Fig. 39 is a diagram showing another example of a graph display screen generated with Gephi.
Fig. 40 is a diagram showing yet another example of a graph display screen generated with Gephi.
Fig. 41 is a diagram showing still another example of a graph display screen generated with Gephi.
Fig. 42 is a flowchart for explaining an example process to display a graph display screen.
Fig. 43 is a diagram showing an example of sensor data obtained as a result of sensing performed with a sensor.
Fig. 44 is a diagram showing an example of a Voronoi diagram obtained as a result of Voronoi division using AMeDAS data.
Fig. 45 is a diagram showing an example of a Voronoi diagram.
Fig. 46 is a diagram for explaining a first example of estimation of a niche for a species based on a Voronoi diagram.
Fig. 47 is a diagram for explaining a second example of estimation of a niche for a species based on a Voronoi diagram.
Fig. 48 is a diagram showing an example of prediction of co-occurrence of species based on a Voronoi diagram.
Fig. 49 is a flowchart for explaining an example process to generate and analyze a Voronoi diagram.
Fig. 50 is a diagram showing an example of display of a vegetation distribution screen displaying a vegetation distribution.
Fig. 51 is a diagram showing an example of a vegetation distribution screen displaying a track of movement of a user.
Fig. 52 is a diagram showing an example of display of a vegetation distribution screen reflecting posted information.
Fig. 53 is a diagram showing another example of display of a vegetation distribution screen reflecting posted information.
Fig. 54 is a flowchart for explaining an example process to associate posted information submitted by a user with a vegetation distribution.
Fig. 55 is a flowchart for explaining an example process to display a vegetation distribution screen reflecting self-posted information.
Fig. 56 is a flowchart for explaining an example process to display a vegetation distribution screen reflecting a list of others' posted information.
Fig. 57 is a diagram for explaining evaluation to be performed by the evaluating unit 73 of the server 13 on the ecosystems in utilization areas.
Fig. 58 is a diagram showing an example of degrees of reliability of observation values.
Fig. 59 is a diagram showing an example of degrees of reliability of observation values.
Fig. 60 is a diagram showing an example of degrees of reliability of observation values.
Fig. 61 is a flowchart for explaining an example process to generate advice on ecosystem observation in accordance with the reliability of observation values obtained by a user observing ecosystems, and present the advice to the user.

### MODE FOR CARRYING OUT THE INVENTION

### <Embodiment of an Ecosystem Utilization System>

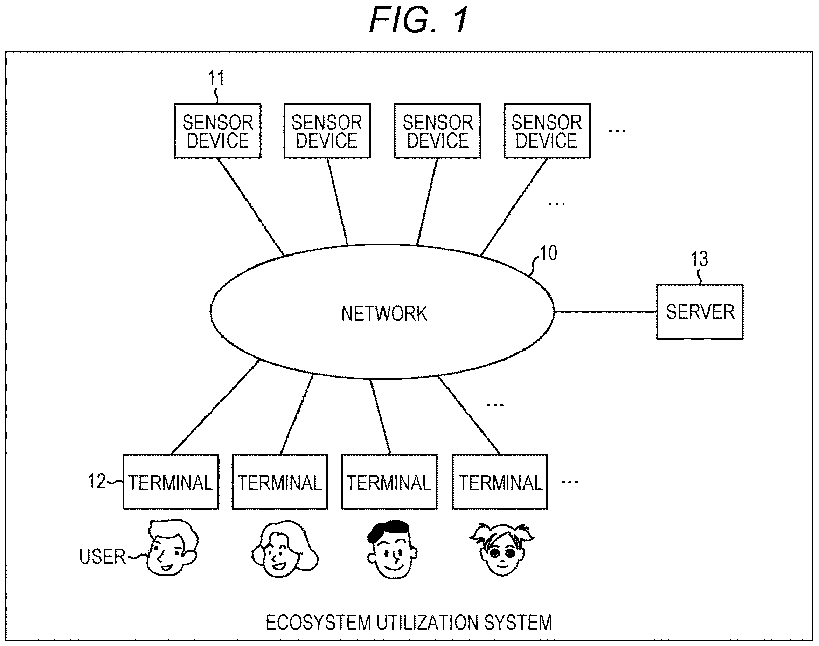

Fig. 1 is a block diagram showing an example configuration of an embodiment of an ecosystem utilization system to which the present technology is applied.

In Fig. 1, the ecosystem utilization system includes a network 10, one or more sensor devices 11, one or more terminals 12, and one or more servers 13. The ecosystem utilization system collects various kinds of information observed in an ecosystem, acquires information for utilizing the ecosystem on the basis of the collected various kinds of information, and provides a user with the information.

The sensor devices 11, the terminals 12, and the server 13 are connected to the network 10 in a wired or wireless manner, so that communication can be performed among them.

Each sensor device 11 includes a sensor that senses various kinds of physical amounts, and a communication function that transmits the sensor data obtained as a result of the sensing performed by the sensor (the data indicating the sensed physical data). Each sensor device 11 further includes a location detecting function that detects the location of the sensor device 11, using global positioning system (GPS) or the like, if necessary.

Each sensor device 11 senses physical amounts with the sensor. With the communication function, each sensor device 11 further transmits the sensor data obtained by the sensing to the server 13 via the network 10. The sensor data, together with the location information indicating the location of a sensor device 11 detected by the location detecting function of the sensor device 11, if necessary, is transmitted from the sensor device 11 to the server 13.

The sensor included in each sensor device 11 may be a sensor that senses electromagnetic waves containing light such as a sensor that captures an image by sensing light (an image sensor), or a sensor that senses sound (a microphone), for example. Further, the sensor included in each sensor device 11 may be a sensor that senses physical amounts as various kinds of environmental information, such as temperature, humidity, geomagnetism, atmospheric pressure, and odor.

The sensor devices 11 are installed in places where ecosystems should be observed (sensed), such as mountain forests, rivers, oceans, lakes, and farm fields (agricultural farms) in areas where the ecosystems are to be utilized (such areas will be hereinafter referred to as utilization areas). The sensor devices 11 can be manually installed at predetermined locations. The sensor devices 11 can also be distributed while being transported by an aircraft, a ship, or an automobile, for example.

With the sensor devices 11, images of plants and insects, sounds such as sounds of wind, sounds of insects, and sounds of leaves rubbing against one another, temperatures of the air and the ground, humidity, geomagnetism, and the like are sensed in various places throughout the utilization areas, and the sensor data obtained as a result of the sensing is transmitted to the server 13 via the network 10.

Here, the utilization areas may be all or some of the cities, towns, and villages, or may be the prefectures, the whole country of Japan, or countries throughout the world. The utilization areas may be areas distant from each other, like Hokkaido and Kyushu, or Japan and the United States.

Each terminal 12 is an information processing device that is used by a user who is aided by ecosystem utilization, or a user who cooperates in ecosystem utilization. Each terminal 12 may be a portable terminal such as a smartphone, a tablet, or a wearable terminal. Alternatively, each terminal 12 may be a notebook Personal Computer (PC), a desktop PC, or a device having a communication function and an input/output function (an interface) for information directed to users.

Using a terminal 12, a user conducts observation in various places in the utilization areas, and transmits observation values indicating results of the observation to the server 13 via the network 10.

Here, the observation values to be transmitted from the terminals 12 to the server 13 may be a report that some kind of vegetation, an insect, or a species of a living creature has been observed, an image of a species, a report that a certain crop has been harvested and the yield amount of the crop, a report that the leaves of napa cabbage have grown like rosettes, and any other kind of information obtained by the user observing an ecosystem (including images and sounds obtained by the users operating the terminals 12).

The terminals 12 transmit data other than observation values to the server 13 via the network 10. The terminals 12 also receive necessary data from the server 13 via the network 10. For example, each terminal 12 receives (acquires) information for utilizing an ecosystem from the server 13, and presents the information to a user. The information is presented to the user through display of an image, output of a sound, or the like.

The server 13 is an information processing device managed by a supporter who aids ecosystem utilization.

The server 13 receives and registers sensor data transmitted from the sensor devices 11 via the network 10, and observation values transmitted from the terminals 12 via the network 10. The server 13 further generates information for utilizing ecosystems on the basis of sensor data from the sensor devices 11 (including location information about the sensor devices 11, if necessary), observation values from the terminals 12, and other necessary information, and then transmits the information for utilizing ecosystems to the terminals 12 via the network 10.

The terminals 12 receive information transmitted from the server 13 via the network 10, and present the information from the server 13 to users by displaying the information as an image or outputting the information as a sound.

It should be noted that the later described processes to be performed by the terminals 12, and the later described processes to be performed by the server 13 can be shared between the terminals 12 and the server 13 Also, the processes to be performed by the server 13 can be shared among servers.

### <Example Configuration of the Network 10>

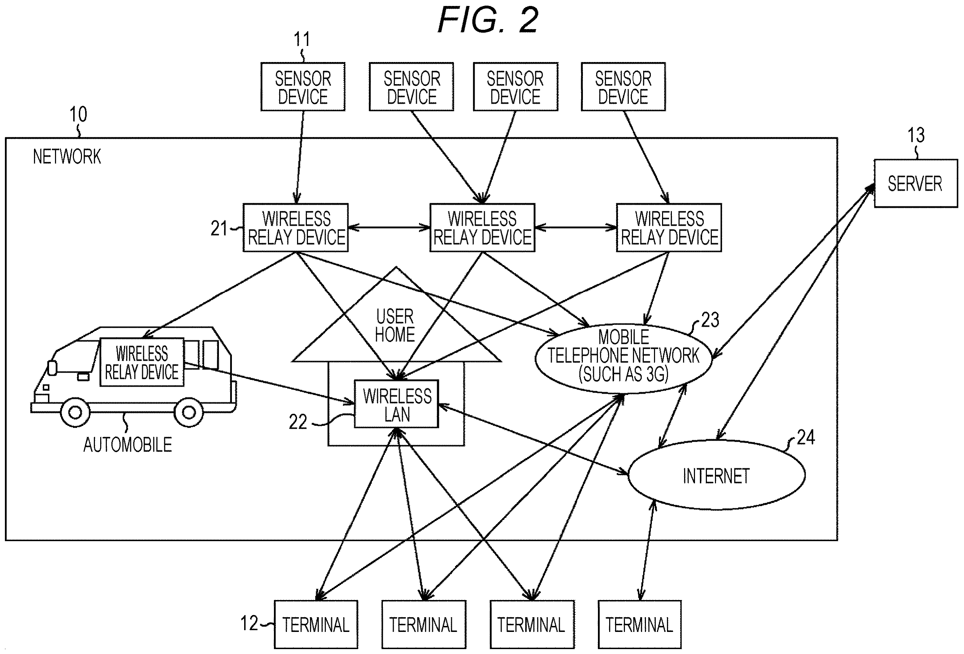

Fig. 2 is a diagram showing an example configuration of the network 10 shown in Fig. 1.

The network 10 includes an arbitrary number of wireless relay devices 21, an arbitrary number of wireless local area network (LAN) 22, a mobile telephone network 23, and the Internet 24.

Each wireless relay device 21 is a device that wirelessly performs communication, and has a router function.

The wireless relay devices 21 are installed throughout the utilization areas so that sensor data obtained by the sensor devices 11 can be collected.

Like the sensor devices 11, the wireless relay devices 21 can be manually installed, or be distributed while being transported by an aircraft, a ship, or an automobile, for example. The wireless relay devices 21 can also be installed on transportation means such as automobiles (regularly-operated buses, for example), motorbikes, and boats and ships.

The wireless relay devices 21 communicate with the sensor devices 11, to receive sensor data transmitted from the sensor devices 11. Each wireless relay device 21 also communicates with the other wireless relay devices 21, to receive sensor data transmitted from the other wireless relay devices 21. Each wireless relay device 21 further communicates with the other wireless relay devices 21, to transmit sensor data to the other wireless relay devices 21.

Further, each wireless relay device 21 also communicates with the wireless LAN 22 and the mobile telephone network 23, to transmit sensor data received from the sensor devices 11 and the other wireless relay devices 21 to the wireless LAN 22 and the mobile telephone network 23.

The wireless LAN 22 is constructed at a user's home or in any desired place. The wireless LAN 22 communicates with the terminals 12, the wireless relay devices 21, and the Internet 24, to transmit data from the terminals 12 and sensor data from the wireless relay devices 21 to the server 13 via the Internet 24.

Further, the wireless LAN 22 also receives data transmitted from the server 13 via the Internet 24, and transmits the data to the terminals 12.

The mobile telephone network 23 is a 3G line, for example, and communicates with the terminals 12, the server 13, the wireless relay devices 21, and the Internet 24.

The Internet 24 communicates with the terminals 12, the server 13, the wireless LAN 22, and the mobile telephone network 23.

Here, sensor data transmitted from the wireless relay devices 21, data transmitted via the wireless LAN 22, and data transmitted from the terminals 12 are transmitted to the server 13 via the mobile telephone network 23 and/or the Internet 24. Meanwhile, data transmitted from the server 13 is transmitted to the terminals 12 via the mobile telephone network 23 and/or the Internet 24.

In the network 10 having the above described configuration, each wireless relay device 21 has a router function. Therefore, even if a wireless relay device 21 becomes unable to conduct communication due to a failure or the like, and the wireless communication path running through the wireless relay device 21 becomes unavailable, another wireless communication path running through another wireless relay device 21 can be used to transmit sensor data transmitted from the sensor devices 11 to the server 13.

That is, as the wireless relay devices 21 each have a router function, sensor data obtained by the sensor devices 11 can be transmitted to the server 13 via various wireless communication paths running through the wireless relay devices 21. Accordingly, even if a wireless relay device 21 becomes unable to conduct communication, the server 13 can collect (receive) sensor data obtained by the sensor devices 11.

Also, the user of an automobile having a wireless relay device 21 installed therein can contribute to collection of information for utilizing ecosystems, simply by driving through mountain roads in a utilization area.

Specifically, as an automobile having a wireless relay device 21 installed therein travels through a utilization area, the wireless relay device 21 installed in the automobile creates a wireless communication path with the other wireless relay devices existing near the location of the automobile in various places, and contributes to collection of sensor data from the sensor devices 11 with the server 13.

It should be noted that each wireless relay device 21 may be a wireless communication device compliant with ZIGBEE (a registered trade name), for example, which is a standard of near field communication networks, or a wireless communication device that can have a router function provided therein, is capable of performing wireless communication at a certain distance, is small in size, and consumes less power.

### <Example Structure of a Terminal 12>

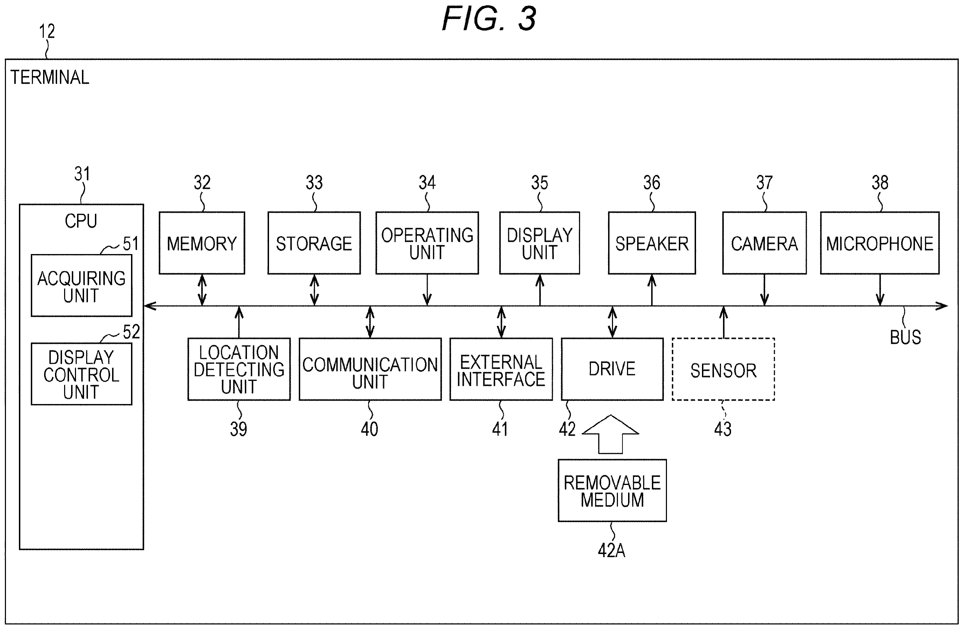

Fig. 3 is a block diagram showing an example structure of a terminal 12 shown in Fig. 1.

The terminal 12 includes a central processing unit (CPU) 31, a memory 32, a storage 33, an operating unit 34, a display unit 35, a speaker 36, a camera 37, a microphone 38, a location detecting unit 39, a communication unit 40, an external interface (I/F) 41, and a drive 42. The components from the CPU 31 through the drive 42 are connected to a bus, and perform necessary communication with one another.

The CPU 31 executes a program installed into the memory 32 or the storage 33, to perform various kinds of processes.

The memory 32 is formed with a volatile memory, for example, and temporarily stores the program to be executed by the CPU 31, and necessary data.

The storage 33 is formed with a hard disk or a nonvolatile memory, for example, and stores the program to be executed by the CPU 31, and necessary data.

The operating unit 34 is formed with physical keys (including a keyboard), a mouse, a touch panel, or the like. The operating unit 34 outputs an operating signal corresponding to an operation performed by a user, to the bus.

The display unit 35 is formed with a liquid crystal display (LCD), for example, and displays an image in accordance with data supplied from the bus.

Here, the touch panel serving as the operating unit 34 is formed with a transparent material, and can be formed integrally with the display unit 35. With this, a user can input information by operating icons or buttons or the like displayed on the display unit 35.

The speaker 36 outputs sound in accordance with data supplied from the bus.

The camera 37 captures an image (a still image or a moving image) (or senses light), and outputs the corresponding image data to the bus.

The microphone 38 collects sound (or senses sound), and outputs the corresponding sound data to the bus.

Using global positioning system (GPS), for example, the location detecting unit 39 detects the location of the terminal 12 as the location of a user or the like, and outputs location information indicating the location to the bus.

The communication unit 40 communicates with the wireless LAN 22, the mobile telephone network 23, the Internet 24, and the like.

The external I/F 41 is an interface for exchanging data with headphones or some other external device, for example.

A removable medium 42A such as a memory card can be detachably attached to the drive 42, and the drive 42 drives the removable medium 42A attached thereto.

In the terminal 12 having the above described structure, the program to be executed by the CPU 31 can be recorded beforehand into the storage 33 as a recording medium provided in the terminal 12.

Further, the program can also be stored (recorded) into the removable medium 42A, be provided as so-called packaged software, and be installed into the terminal 12 from the removable medium 42A.

Alternatively, the program can be downloaded from the Internet 24 via the communication unit 40, and be installed into the terminal 12.

The CPU 31 executes the program installed in the terminal 12, to function as an acquiring unit 51 and a display control unit 52.

The acquiring unit 51 acquires various kinds of information (data).

The display control unit 52 controls display to be presented to the user, by causing the display unit 35 to display the information or the like acquired by the acquiring unit 51.

It should be noted that the terminal 12 further includes a sensor other than the camera 37 that senses light and the microphone 38 that senses sound, or a sensor 43 that senses a physical amount other than light and sound, such as temperature, pressure, or the like. In a case where the sensor 43 is provided in the terminal 12, the terminal 12 can also serve as a sensor device 11.

### <Example Structure of the Server 13>

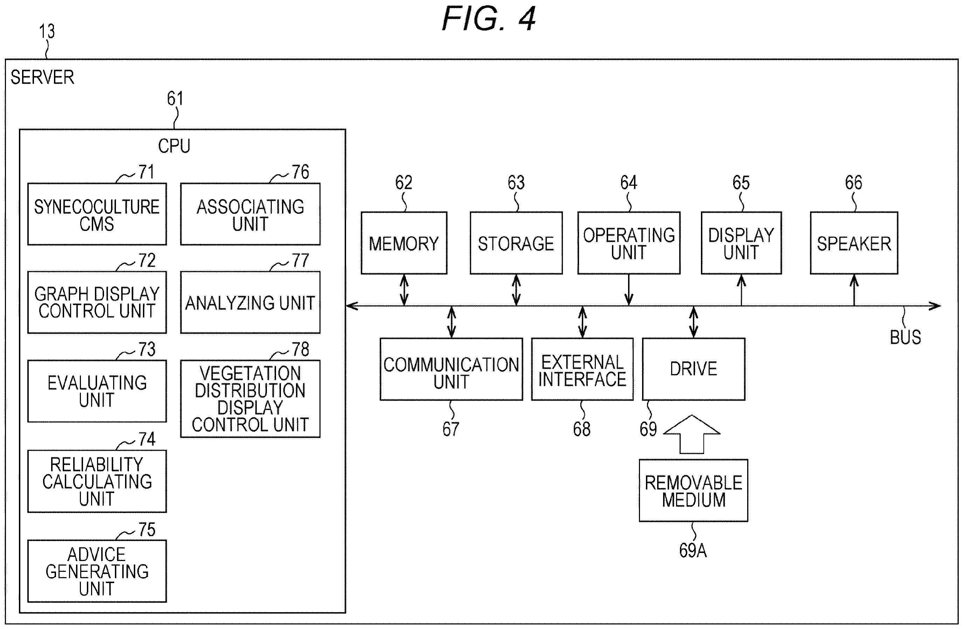

Fig. 4 is a block diagram showing an example functional structure of the server 13 shown in Fig. 1.

The server 13 includes a CPU 61, a memory 62, a storage 63, an operating unit 64, a display unit 65, a speaker 66, a communication unit 67, an external I/F 68, and a drive 69.

The components from the CPU 61 through the drive 69 have structures similar to the components from the CPU 31 through the speaker 36 and from the communication unit 40 through the drive 42 shown in Fig. 3, respectively.

In the server 13, the program to be executed by the CPU 61 can be recorded beforehand into the storage 63 as a recording medium provided in the server 13, as in the terminal 12.

Further, the program can also be stored (recorded) into a removable medium 69A, be provided as packaged software, and be installed into the server 13 from the removable medium 69A.

Alternatively, the program can be downloaded from the Internet 24 via the communication unit 67, and be installed into the server 13.

The CPU 61 executes the program installed in the server 13, to function as a synecoculture content management system (CMS) 71, a graph display control unit 72, an evaluating unit 73, a reliability calculating unit 74, an advice generating unit 75, an associating unit 76, an analyzing unit 77, and a vegetation distribution display control unit 78.

The synecoculture CMS 71 registers and manages content (such as text and images) forming a web page that provides and receives information about synecoculture (the web page will be hereinafter also referred to as the synecoculture page), layout information about the web page, and the like in a database (DB). The synecoculture CMS further constructs the synecoculture page, and, as a web server on the Internet 24, transmits the synecoculture page from the communication unit 67 to the terminal 12 (a device functioning as another web browser).

In the terminal 12 (Fig. 3), the acquiring unit 51 acquires the synecoculture page from the synecoculture CMS 71 via the communication unit 40, and the display control unit 52 causes the display unit 35 to display the synecoculture page.

The graph display control unit 72 generates a bipartite graph necessary for generating the later described relationship graph from the DB recorded in the storage 63 or the like, and transmits the bipartite graph from the communication unit 67 to the terminal 12, so that the terminal 12 generates the relationship graph from the bipartite graph and displays the relationship graph. Alternatively, the graph display control unit 72 generates the relationship graph from the bipartite graph, and transmits the relationship graph from the communication unit 67 to the terminal 12, so that the terminal 12 displays the relationship graph.

Specifically, in the terminal 12 (Fig. 3), the acquiring unit 51 acquires the bipartite graph or the relationship graph from the graph display control unit 72 via the communication unit 40. When having acquired the bipartite graph, the acquiring unit 51 acquires the relationship graph by generating the relationship graph from the bipartite graph. In the terminal 12, in turn, the display control unit 52 causes the display unit 35 to display the relationship graph.

Using the data registered in the DB (such as sensor data supplied from the sensor devices 11, observation values supplied from the terminals 12, and the like), the evaluating unit 73 evaluates ecosystems in utilization area, such as biodiversity, environments, and the like in the utilization areas.

The reliability calculating unit 74 calculates the reliability of each observation value supplied from the terminal 12, the observation value having being obtained by a user observing the ecosystem in a utilization area.

In accordance with the reliability obtained by the reliability calculating unit 74, the advice generating unit 75 generates advice to be presented by the terminal 12 about the observation conducted by the user on the ecosystem in the utilization area, and transmits the advice from the communication unit 67 to the terminal 12.

In the terminal 12 (Fig. 3), the acquiring unit 51 acquires the advice from the advice generating unit 75 via the communication unit 40, and the display control unit 52 causes the display unit 35 to display the advice to the user. The display control unit 52 can also present the advice acquired by the acquiring unit 51 to the user, by causing the speaker 36 to output sound.

The associating unit 76 associates, through Voronoi division, sensor data obtained as a result of sensing performed by sensors with symbols indicating results of observation performed by users, constructs a DB in which the sensor data is associated with the symbols, and registers (records or stores) the DB in the storage 63.

Here, in a case where a user observes (the existence of) vegetation A, for example, the symbol indicating a result of the observation conducted by the user is any symbol (including a character, a number, and the like) defined to indicate (the observation of) the vegetation A, such as a character string "vegetation A". In a case where a user observes rosette in the vegetation A, for example, the symbol indicating a result of the observation is any symbol defined to indicate rosette in the vegetation A, such as a character string "rosette in vegetation A".

The analyzing unit 77 analyzes the DB in which sensor data is associated with symbols, and deduces a niche or the like for the vegetation indicated by a symbol, for example.

The vegetation distribution display control unit 78 transmits a vegetation distribution and related information associated with the vegetation distribution to the terminal 12 via the communication unit 67, so that the terminal 12 displays the vegetation distribution and the related information associated with the vegetation distribution.

Specifically, in the terminal 12 (Fig. 3), the acquiring unit 51 acquires the vegetation distribution and the related information associated with the vegetation distribution from the vegetation distribution display control unit 78 via the communication unit 40, and the display control unit 52 causes the display unit 35 to display the vegetation distribution and the related information acquired by the acquiring unit 51.

Meanwhile, in the server 13, various DBs are registered in the storage 63, and some of the various DBs are DBs for aiding management of synecoculture (the DBs will be hereinafter collectively referred to as the synecoculture DB).

In the description below, the synecoculture DB registered in the storage 63 of the server 13 is described.

### <Example Structure of the Synecoculture DB>

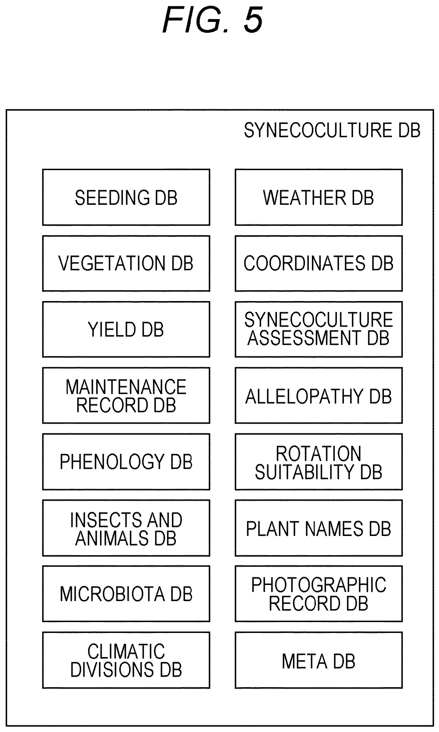

Fig. 5 is a diagram showing an example structure of the synecoculture DB.

In Fig. 5, the synecoculture DB includes a seeding DB, a vegetationDB, ayieldDB, a maintenance record DB, a phenology DB, an insects and animals DB, a microbiota DB, a climatic divisions DB, a weather DB, a coordinates DB, a synecoculture assessment DB, an allelopathy DB, a rotation suitability DB, a plant names DB, a photographic record DB, and a meta DB.

In the synecoculture DB, data is stored in comma separated values (csv) files (two-dimensional matrix files, for example), and image files . All or some of the synecoculture DB is placed independently of the server 13, and can be connected to the server 13 via the network 10.

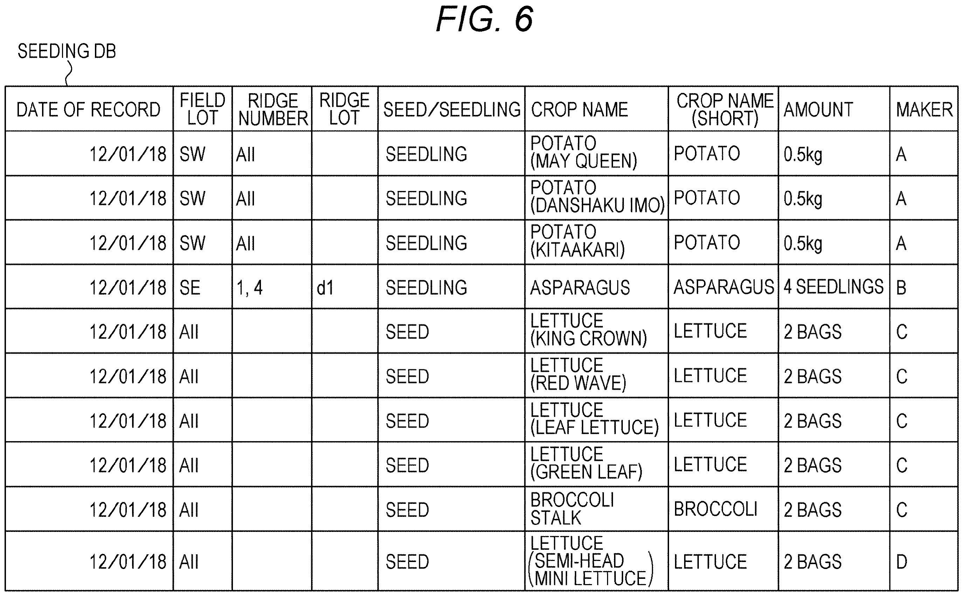

Fig. 6 is a diagram showing an example structure of the seeding DB.

The seeding DB is formed with a csv file, for example. In this example, dates of record, field lots, ridge numbers, ridge lots, distinction between seeds and seedlings, crop names, crop names (short), amounts, and information about makers are recorded. Seeds or seedlings of the same variety are grown and picked in different manners among makers, and the names of the makers can be included in conditions for cultivation. Therefore, it is preferable to also manage and record the names of the makers.

Here, the fields (agricultural farms) in a utilization area are divided into field lot. Ridges are formed in each of the field lot, and each ridge is divided into one or more ridge lots. Each ridge has a ridge number allotted thereto, the ridge number identifying the ridge.

For example, there is a record that, on January 18, 2012, 0.5 Kg of seedlings of potato (May Queen) of a maker A were planted in all the ridges in a field lot SW. Also, there is a record that two bags of seeds of lettuce (King Crown) of a maker C were planted in all the field lots.

It should be noted that, as a crop name, information indicating a variety and containing Chinese characters, such as "potato (Danshaku Imo) ", is recorded. As a crop name (short), on the other hand, only the name of the crop is simply recorded as "potato", without any indication of a variety. Such representation with characters of the same kind makes searches easier.

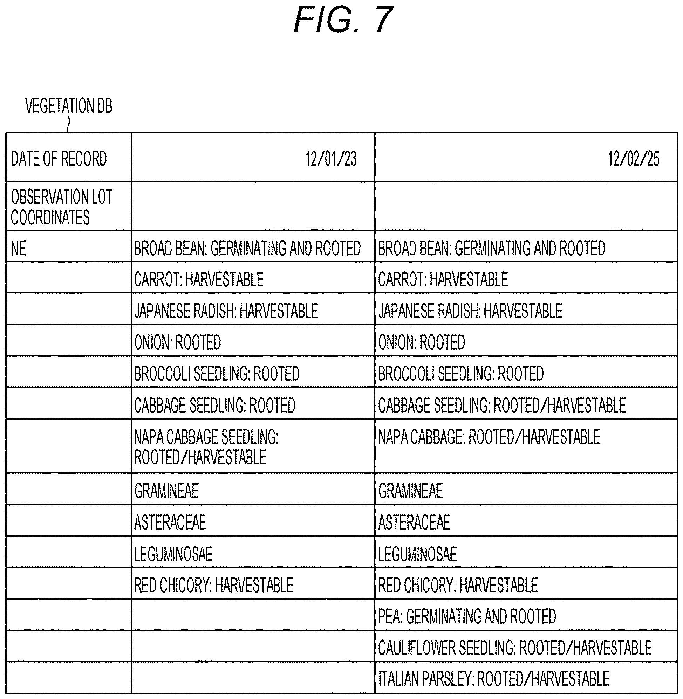

Fig. 7 is a diagram showing an example structure of the vegetation DB.

The vegetation DB is formed with a csv file, for example . In this example, dates of record and location information as observation lot coordinates are recorded. For example, there are records of the observations described below at the observation lot coordinates NE. There are records that, on January 23, 2012, broad beans were germinated and rooted, carrots were harvestable, Japanese radishes were harvestable, onions were rooted, broccoli seedlings were rooted, cabbage seedlings were rooted, and napa cabbage seedlings were rooted and harvestable.

Also, there are records that weeds of Gramineae, Asteraceae, and Leguminosae were observed, and red chicories were harvestable. Although it is theoretically possible to further classify a predetermined plant of Gramineae, for example, but doing so is hardly beneficial in practice.

Also, there are records of observations conducted at the observation lot coordinates NE on February 25, 2012.

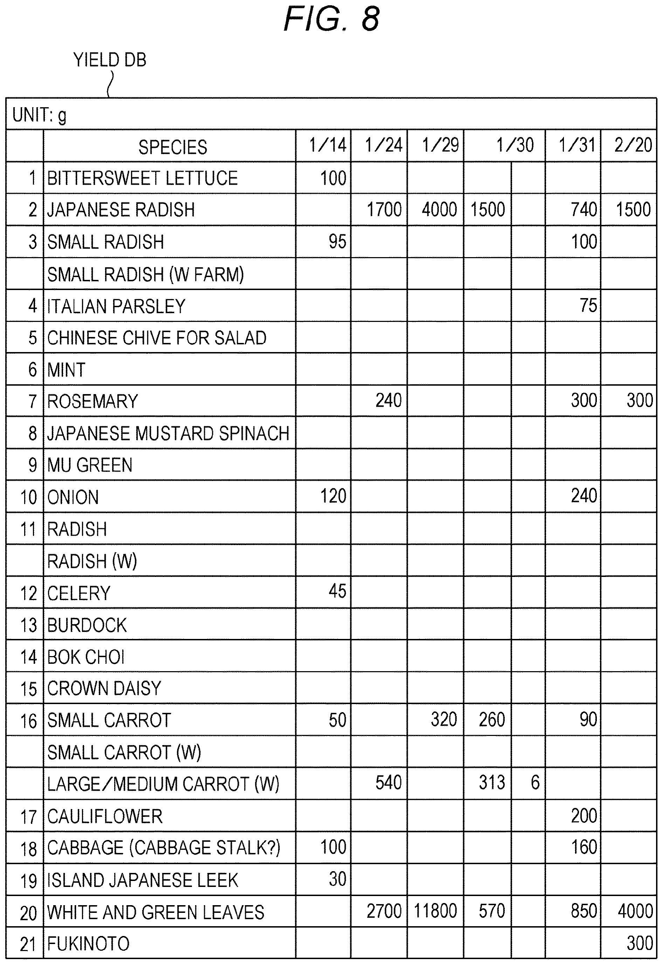

Fig. 8 is a diagram showing an example structure of the yield DB.

The yield DB is formed with a csv file, for example. In this example, the yield amounts of harvested crops are recorded on the respective days of harvest. For example, 100 g of bittersweet lettuce was harvested on January 14, 2012. As for Japanese radish, 1700 g was harvested on January 24, 4000 g was harvested on January 29, 1500 g was harvested on January 30, 740 g was harvested on January 31, and 1500 g was harvested on February 20.

Other than that, yield amounts of small radish, small radish of the W farm, Italian parsley, Chinese chive for salad, mint, rosemary, Japanese mustard spinach, Mu Green, onion, radish, radish of the W farm, celery, burdock, bok choi, crown daisy, small carrot, small carrot of the W farm, large/medium carrot of the W farm, cauliflower, cabbage (cabbage stalk), island Japanese leek, white and green leaves, fukinoto, and the like are recorded. It should be noted that "the W farm" is the name of an agricultural farm, and "cabbage stalk?" indicates that the observer (user) failed to accurately determine whether the cabbage was cabbage stalks. "Mu Green" is not a general name, but is the name given to the plant by the observer. Although the records of coordinates as location information are not shown in Fig. 8, it is possible to record GPS coordinates or the like as the location information about field and ridge lots and the like where crops were observed.

It should be noted that, in inputting information to the yield DB, it is possible to use the information input in the seeding DB. In a case where information is input to the yield DB, the information about the plants being managed by the seeding DB can be displayed as it is.

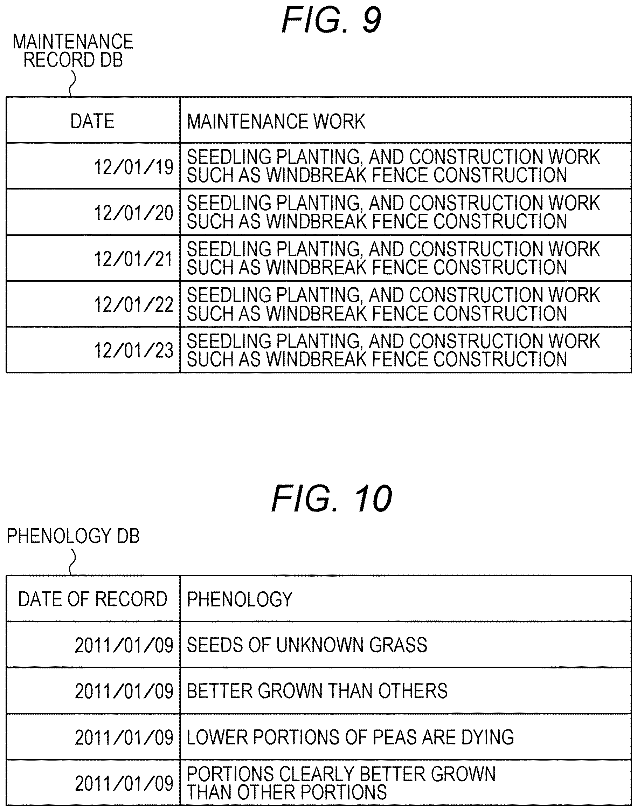

Fig. 9 is a diagram showing an example structure of the maintenance record DB.

The maintenance record DB is formed with a csv file, for example. In this example, completed maintenance works and the dates of the maintenance works are recorded. For example, there are records that, on January 19, 20, 21, 22, and 23, 2012, seedlings were planted, and a construction work such as windbreak fence construction was conducted.

Fig. 10 is a diagram showing an example structure of a csv file serving as the phenology DB.

The phenology DB is formed with an image file and a csv file, for example. Fig. 10 shows an example of a csv file, and the contents of phenology and the dates of record are recorded in the form of characters in the csv file. For example, there are records that, on January 9, 2011, seeds of unknown weeds were observed, the crop was better grown than others, the lower portions of peas were dying, portions clearly better grown than the other portions were observed, and the like.

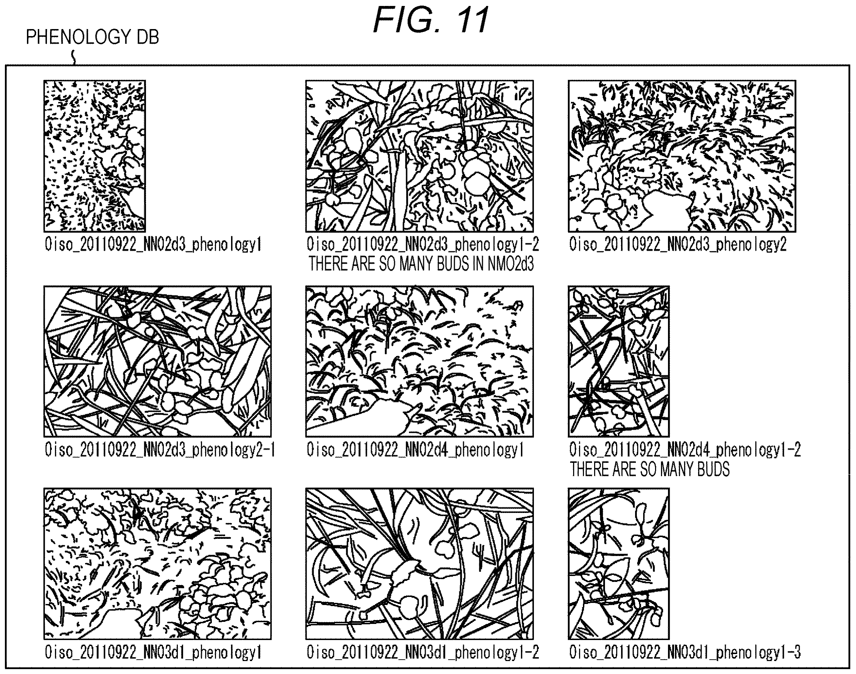

Fig. 11 is a diagram showing an example structure of the image file as the phenology DB.

In the image file shown in Fig. 11, the phenology observed in a field named "Oiso Synecoculture Farm" on the same day is recorded together with photos and short comments.

The upper left portion in the drawing shows phenology 1, which is an image taken in a ridge lot "d3" in a ridge "02" in a field lot "NN" in "Oiso" on September 22, 2011. The upper middle portion in the drawing shows phenology 1-2, which is an image taken in the same place as above, together with a comment "There are so many buds in NN02d3".

In this manner, the phenology observed by the worker (user) is recorded in the form of characters and images in the phenology DB.

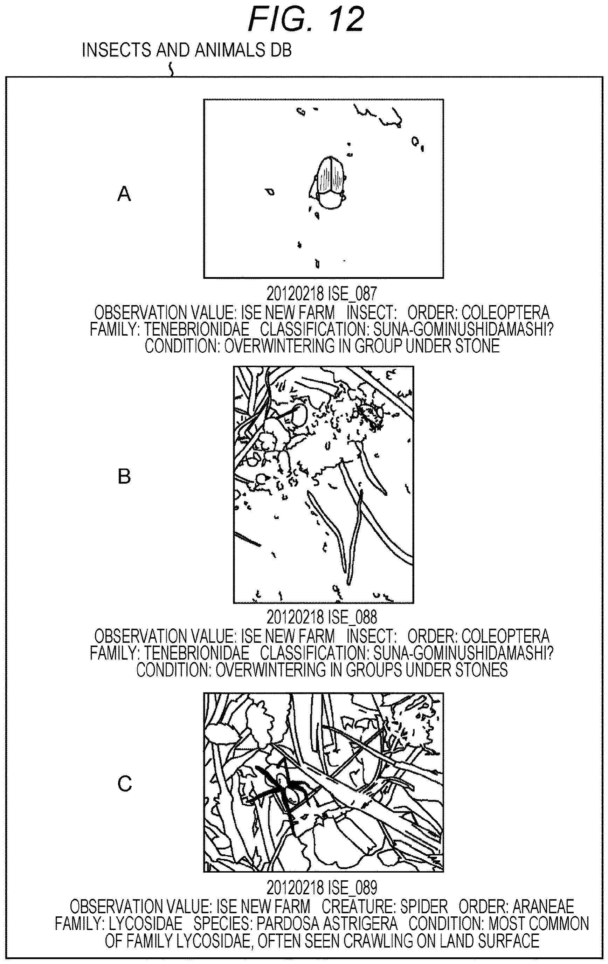

Fig. 12 is a diagram showing an example structure of the insects and animals DB.

The insects and animals DB is formed with an image file and a csv file, for example. A in Fig. 12 shows an image of an insect taken in a field "087" in a place named "Ise New Farm" on February 18, 2012. As a comment, there is a record that the observation site was "Ise New Farm", the insect supposedly belongs to the order of Coleoptera, the family of Tenebrionidae, and the class of Suna-Gomimushidamashi, and the insect was overwintering in a group under a stone.

B in Fig. 12 shows an image of an insect taken in a field "088" in "Ise New Farm" on February 18, 2012. As a comment, the same contents as in A in Fig. 12 are recorded.

C in Fig. 12 shows an image of a creature taken in a field "089" in " Ise NewFarm" on February 18, 2012. As a comment, there is a record that the observation site was "Ise New Farm", the creature is a spider that belongs to the order of Araneae and the family of Lycosidae, the name of the species is Pardosa Astrigera, which is the most common of the family of Lycosidae, often seen crawling on the land surface.

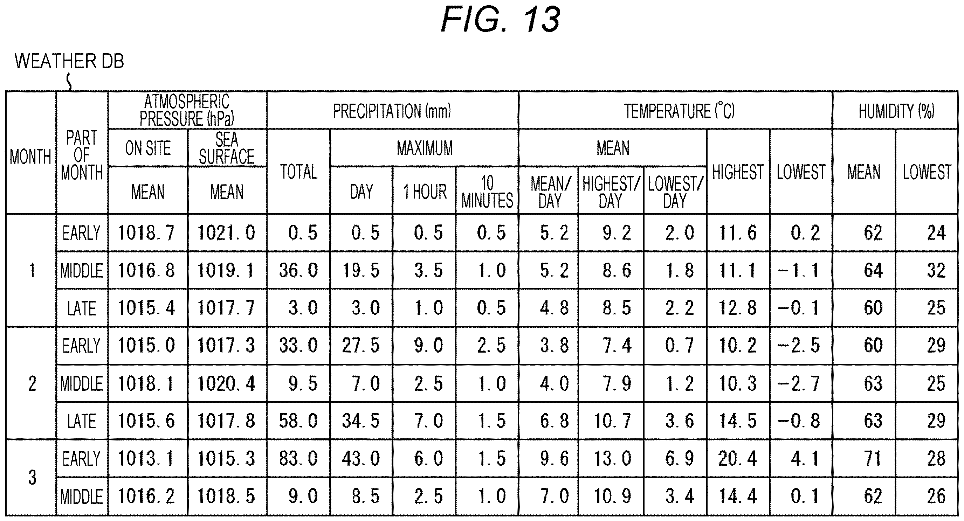

Fig. 13 is a diagram showing an example structure of the weather DB.

In this example, weather information such as atmospheric pressure, precipitation, temperature, and humidity in the Tsu province is recorded in the early, middle, and late parts of each month in 2012. For example, in the early January, the mean atmospheric pressure in the province is 1018.7 hPa, and the mean atmospheric pressure on the sea surface is 1021.0 hPa. The maximum precipitation is 0.5 mm in 10 minutes, 0.5 mm in one hour, 0.5 mm in one day, and 0.5 mm in total. As for temperature, the highest is 11. 6°C, and the lowest is 0.2°C . The highest mean temperature in one day is 9.2°C, and the lowest mean temperature is 2.0°C. The mean temperature in one day is 5.2°C. The mean humidity is 620, and the lowest humidity is 24%.

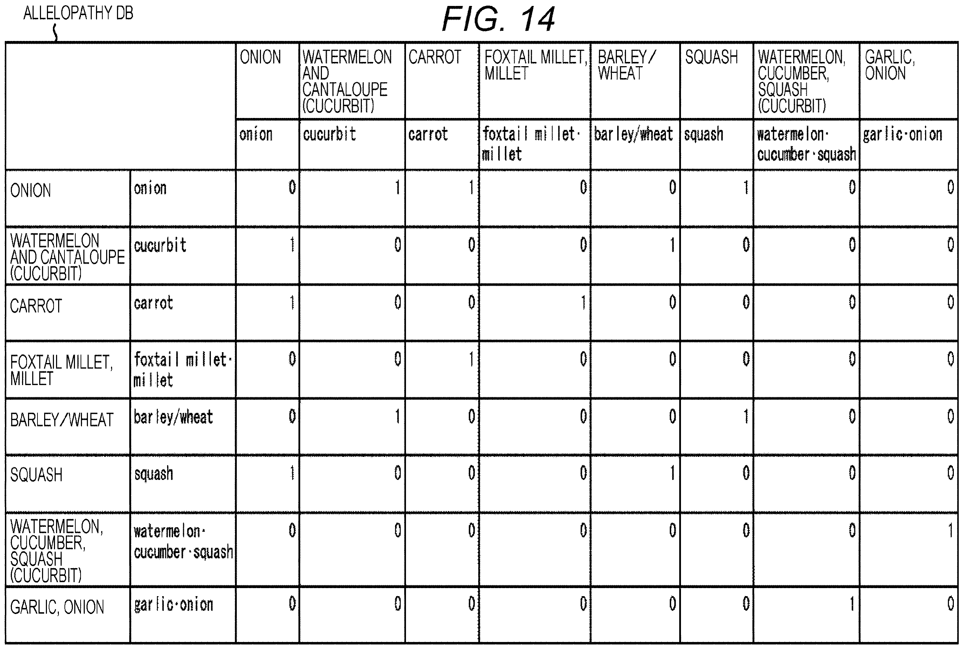

Fig. 14 is a diagram showing an example structure of the allelopathy DB.

The allelopathy DB is formed with a csv file, for example. In this example, allelopathy is recorded with respect to onion, watermelon or cantaloupe (cucurbit), carrot, foxtail millet and millet, barley/wheat, squash, watermelon, cucumber, and squash, and garlic and onion. In Fig. 14, "1" indicates that mutualistic interaction (or a stimulatory action) was confirmed between subject plants, and "0" indicates that no mutualistic interaction was confirmed. For example, mutualistic interaction was confirmed between onion and carrot, but no mutualistic interaction was confirmed between onion and barley/wheat. It is also possible to indicate degrees of interaction on a scale of 0 to 10, for example.

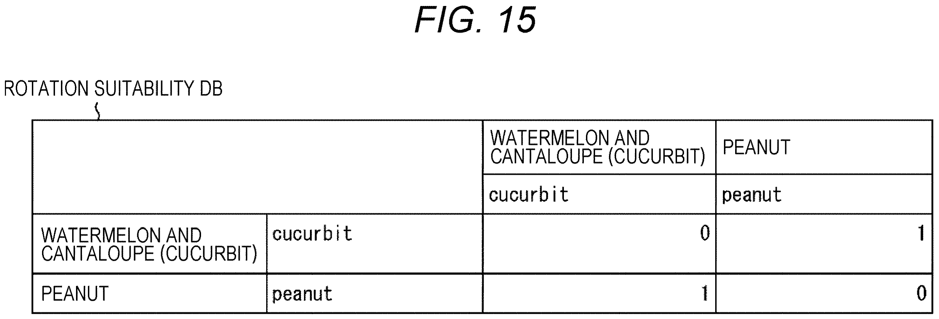

Fig. 15 is a diagram showing an example structure of the rotation suitability DB.

The rotation suitability DB is formed with a csv file, for example. In this example, the degrees of suitability of watermelon or cantaloupe (cucurbit), and peanut for rotation of crops are recorded. In Fig. 14, "1" indicates that preferable suitability for rotation of crops was confirmed between subject plants in the field, and "0" indicates that no such suitability was confirmed. For example, preferable suitability for rotation of crops was confirmed between watermelon or cantaloupe (cucurbit) and peanut.

The allelopathy DB and the rotation suitability DB are generated not only from information known in literatures but also from other information. For example, the seeding DB, the vegetation DB, and the yield DB can be compared and used as references, to generate the allelopathy DB and the rotation suitability DB in the same formats from vegetation combinations that actually coexisted in synecoculture farms, and combinations with which vegetation succession (or a temporal change in vegetation) was caused.

The microbiota DB is formed with an image file and a csv file. In the microbiota DB, information about microorganisms analyzed from soil samples obtained at a synecoculture farm.

The climatic divisions DB is formed with a csv file. The climatic divisions DB is a DB that stores information about the climatic divisions in which agricultural farms are located, and contains divisions such as laurel forests, deciduous forests, subtropical climate, and tropical climate.

The weather DB stores an image file graphically formed from weather data supplied from a weather satellite such as AMeDAS, a csv file, and various kinds of weather data obtained by the sensor devices 11 installed as observation devices in respective farm fields.

The coordinates DB is formed with a csv file. The coordinates DB stores the GPS coordinates of the respective ridges of each field. The coordinates have an accuracy of approximately 10 centimeters.

The synecoculture assessment DB is formed with a pdf or image file. The synecoculture assessment is a certificate indicating an approval for synecoculture, and is issued when the server manager examines a field 21 in accordance with a request from the manager of the field 21, and confirms that the field 21 satisfies the requirements for synecoculture. Crops shipped from an agricultural farm that has received such a certificate are allowed to be labeled as "grown by synecoculture".

The plant names DB stores the names and images of various kinds of plants. The photographic record DB stores various photos. The meta DB stores the key events described later.

The synecoculture DB stores various kinds of information necessary for obtaining vegetation plans for plants to be grown by synecoculture DB, as well as the above described data and information.

### <Process to Aid a Vegetation Plan>

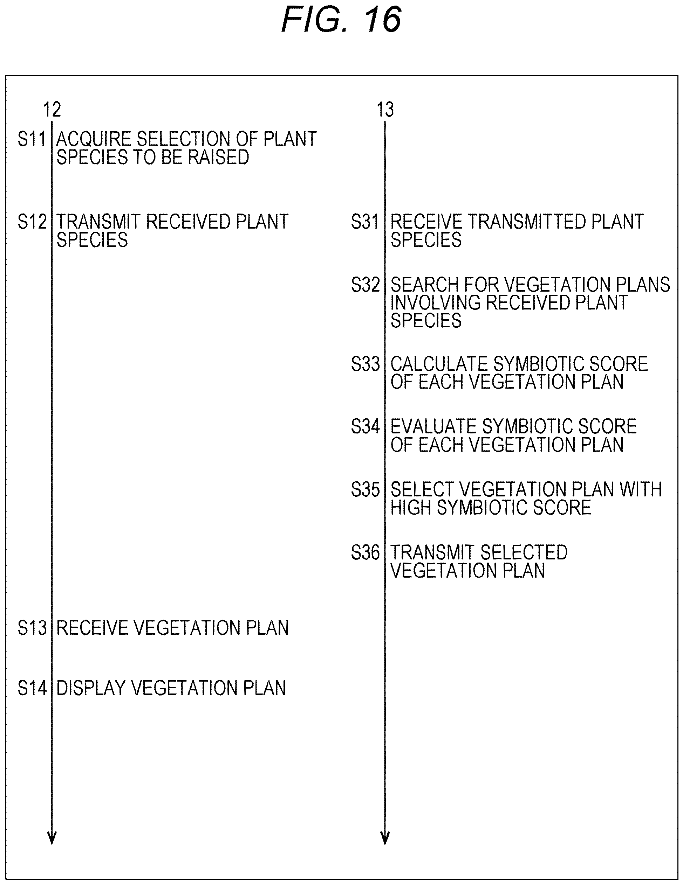

Fig. 16 is a flowchart for explaining an example process to aid a vegetation plan.

The ecosystem utilization system shown in Fig. 1 aids a vegetation plan as an aid in utilizing an ecosystem. In the ecosystem utilization system, when a user inputs crops (vegetation) to be grown, a vegetation combination suitable for creating a dense mixture state with those crops, or a vegetation plan, is retrieved from the allelopathy DB and the rotation suitability DB. The vegetation plan that is presumed to be the lowest in cost and the highest in yield is then output in spatiotemporal order.

Since synecoculture is based on a dense mixture state, seeds of different crops are planted in a mixed manner, and what the seeds grow to are harvested. Which combination of seeds can achieve a higher degree of dense mixture depends on plants and land conditions, and it is necessary to predict the best combination on the basis of known interactions between plants (allelopathy and suitability for rotation of crops), and on the combinations that have actually worked well in farm fields.

Since ecosystems and weather are not completely controlled, not all the planted seeds and seedlings are harvestable. In planning vegetation, however, it is critical to deduce the vegetation combination that can minimize costs and maximize yield amounts. A vegetation plan is conceptually similar to a portfolio in stock investment, and therefore, a vegetation plan can be called a seed portfolio.

In the process to aid a vegetation plan shown in Fig. 16, in step S11, the acquiring unit 51 of a terminal 12 acquires selection of plant species to be grown (vegetation). Specifically, when a user operates the operating unit 34 and selects the plant species to be grown, the acquiring unit 51 acquires the selection. This input may be performed by the user inputting the name of a plant, or a prepared list of plants may be displayed on the display unit 35 so that a predetermined plant can be selected from the list. In this manner, designation of the plant to be grown is accepted.

In step S12, the communication unit 40 transmits (the name of) the plant species acquired by the acquiring unit 51, to the server 13 via the network 10.

In step S31, the communication unit 67 of the server 13 receives the plant species transmitted from the terminal 12. Specifically, the plant species transmitted from the terminal 12 in step S12 is received by the server 13. In this manner, the plant to be grown by the user is accepted by the server 13. In step S32, in the server 13, the synecoculture CMS 71 searches for vegetation plans involving the plant species transmitted from the terminal 12. Specifically, the synecoculture CMS 71 exhaustively searches the allelopathy DB and/or the rotation suitability DB for vegetation combinations suitable for creating a dense mixture state with the plant designated by the user (or the plant species transmitted from the terminal 12) . In confirming the received plant species, the plant names DB is also used as necessary.

In step S33, the synecoculture CMS 71 calculates a symbiotic score of each of the vegetation plans retrieved in step S32. Specifically, a symbiotic score of each of the vegetation combinations suitable for creating a dense mixture state with the plant designated by the user is calculated, the vegetation combinations being one or more vegetation plans retrieved in step S32.

A symbiotic score is defined as a mean value of all the elements that correspond to a set of species to be planted and are recorded in the allelopathy DB and the rotation suitability DB. All the elements are all the weighted scores of the species, and the weighted scores are values that evaluate the interaction between plants with positive and negative numerical values. Specifically, a symbiotic score SC is expressed by the equation, SC = ΣEi/n, where n represents the number of weighed scores of all plants, and Ei represents the value of the weighted score of the ith plant (i = 1, 2, ..., and n). It should be noted that the value Ei of the weighted score is larger when the degree of suitability for creating a dense mixture state is higher. Further, Σ represents the summation obtained when i is substituted by the integers of 1 through n.

A larger value of a symbiotic score SC means a stronger mutualistic interaction, or an empirical rule with a strong mutualistic interaction, and a smaller numerical value (a larger numerical value in the negative direction) means a strong competitive interaction.

The allelopathy DB and the rotation suitability DB store the values of weighted scores evaluating the interactions in positive and negative numerical values for the respective plant species combinations created on the basis of literatures and farm field data. Specifically, the vegetation state of a plant whose seeds have been planted according to a record in the seeding DB is recorded into the vegetation DB, and the yield amount obtained from the plant is recorded into the yield DB. A weighted scores of the plant is then added to the seeding DB, the vegetation DB, and the yield DB every time observation is conducted. Eventually, a higher weighted score is given to a combination generating a larger yield amount. Likewise, in the rotation suitability DB, a higher weighted score is given to a combination more suitable for rotation of crops. Symbiotic scores based on the above scores are then recorded into the allelopathy DB.

In a case where peanut is designated, for example, a symbiotic score with watermelon, which is one of the other plants recorded as objects to be combined with peanut, is determined by calculating the mean value of weighted scores for the elements that are various conditions or results or the like of vegetation of the two plants in a dense mixture state. If the yield amount is large, a higher weighted score is allotted to the element. If the yield amount is small, a low weighted score is allotted to the element. The mean value of those weighted scores is calculated to obtain a symbiotic score. It should be noted that the calculation may be performed every time a plant is designated, or may be automatically performed at a predetermined time.

If all the integrated values of the allelopathy DB and the rotation suitability DB are used in calculating a symbiotic score, changes of plant species that are easily grown in respective years because of vegetation succession are averaged. In view of this, it is possible to conduct evaluation with a symbiotic score that is the mean value of variable-length temporal differences divided into the past several years. With this being taken into consideration, it is possible to cope with and utilize vegetation succession.

In step S34, the synecoculture CMS 71 evaluates the symbiotic scores of the respective vegetation plans retrieved in step S31. Specifically, the symbiotic scores of the respective vegetation plans involving the plant designated by the user are compared with one another.

In step S35, the synecoculture CMS 71 selects the vegetation plans having the highest symbiotic scores. Specifically, one or more plant species combinations are selected in descending order of the values of the symbiotic scores evaluated in step S34.

It should be noted that, in a case where all the retrieved vegetation plans are presented to the user as they are, the procedures for evaluating the symbiotic scores and selecting the vegetation plan (s) having the highest symbiotic score (s) can be skipped.

Further, in a case where the user evaluates the symbiotic scores, the procedures for evaluating the symbiotic scores and selecting the vegetation plan(s) having the highest symbiotic score(s) can also be skipped.

In step S36, the communication unit 67 of the server 13 transmits, via the network 10, the selected vegetation plan(s) to the terminal 12, which has transmitted the plant species received in step S31 to the server 13.

In step S13, the acquiring unit 51 of the terminal 12 acquires the vegetation plan (s) transmitted from the server 13, by causing the communication unit 40 to receive the vegetation plan (s). In this manner, the vegetation plan (s) for the plant designated by the user in step S11 is acquired. In step S14, the display control unit 52 causes the display unit 35 to display the vegetation plan (s) acquired from the server 13.

As a result, the user can recognize each vegetation combination suitable for creating a dense mixture state with the plant species the user has input in step S11. The user can select a predetermined combination from among the combinations presented by the ecosystem utilization system and displayed, and actually grow the combination of plants in a field. The displayed combinations are respective vegetation combinations suitable for creating a dense mixture state with the plant species designated by the user, and the yield amount can be made larger than that in a case where a random combination of plants are grown. As a result, the costs can be made lower than those in a case where a random combination of plants are grown. It should be noted that the information presented to the user at this point is not estimates. The information is reference information for estimation based on the past empirical rules . Estimation is performed by the user on the basis of the reference information.

Further, in synecoculture, plants are grown in a dense mixture state. Therefore, if farm work is formulated and some of the formulated farm work is selected as in the case of monoculture (conventional agriculture) where cultivation areas are divided among respective plants, desired good results are not necessarily obtained. In the ecosystem utilization system, it is possible to propose a new combination to the user on the basis of observation made by the user. For example, in a case where the user has discovered that there is a strong mutualistic interaction between certain vegetation and a certain insect, vegetation using the combination can be planned.

Furthermore, in synecoculture, different species of plants are grown in a dense mixture state. Therefore, risk can be dispersed, and larger yield amounts can be obtained on average than in a case where only one species of plant is grown. This is also a reason that a vegetation plan in the ecosystem utilization system is called a seed portfolio. The number of highest combinations to be presented can be designated by the user. The number of more appropriate plants, of course, can also be presented. In this manner, risk management can be conducted.

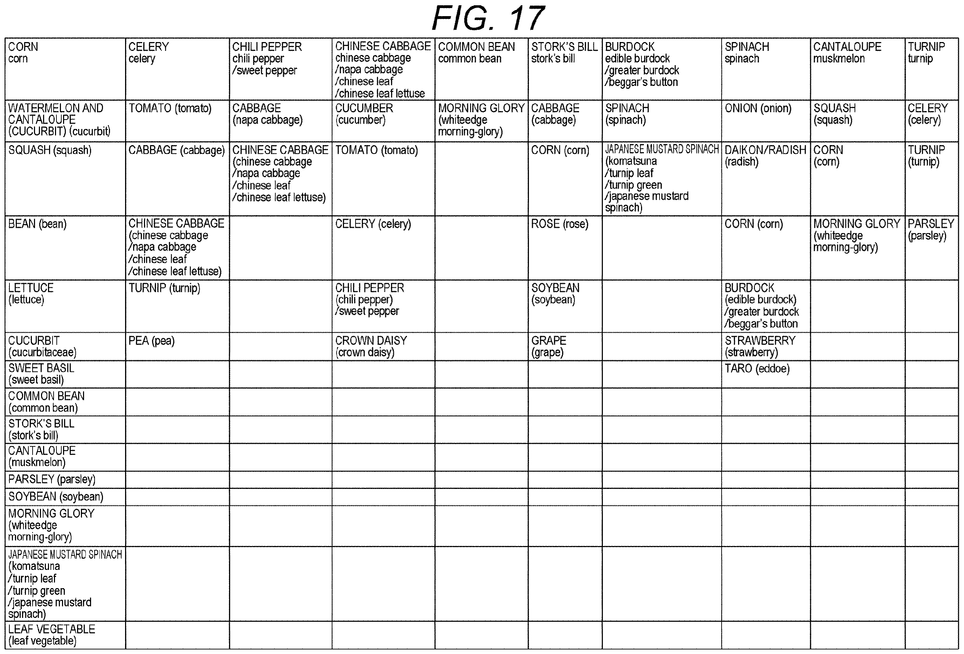

Fig. 17 is a diagram showing an example output of symbiotic allelopathy.

This example shown in Fig. 17 is an example of display in step S14 in Fig. 16. In Fig. 17, the plants suitable for creating a dense mixture state with the 10 species of plants shown in the uppermost row are shown in the rows under the uppermost row (the plants in those lower rows are "companion plants") . For example, plants suitable for creating a dense mixture state with corn are watermelon or cantaloupe (cucurbit), squash, bean, lettuce, cucurbitaceae, sweet basil, common bean, stork's bill, muskmelon, parsley, soybean, white-edge morning-glory, Japanese mustard spinach, and leaf vegetables. Plants suitable for creating a dense mixture state with celery are tomato, cabbage, napa cabbage, turnip, and pea.

Specifically, when the user inputs a plant name shown in the uppermost row, the plant names shown below the input plant name are displayed as the plants suitable for creating a dense mixture state. Accordingly, the user can select one or more plants from the display, and grow the plant (s) in a dense mixture state with the designated plant.

It should be noted that, although only plant names are shown in the example in Fig. 17, plant names can be displayed in conjunction with the corresponding symbiotic scores in descending order.

### <Example of Display of an AR Tag>

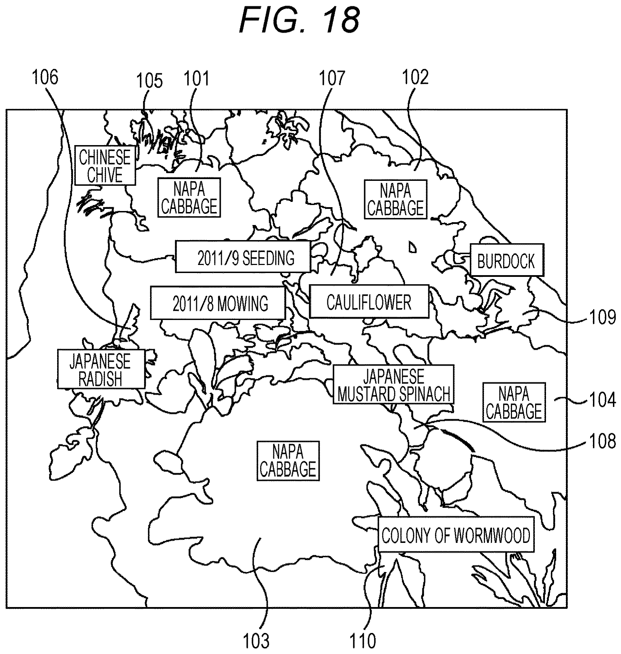

Fig. 18 is a schematic view of an example of display of an AR tag.

In synecoculture, vegetation management for each individual plant in a farm field, such as which vegetables are to be left and which weeds are to be cut, is eventually necessary, and therefore, the amount of information to be formed in the farm field is enormous. Therefore, in the ecosystem utilization system, the augmented reality (AR) technology is employed, so as to process such a large amount of information, regardless of differences in individual ability to handle information.

To use the AR technology outdoors, there are two possible techniques: a technique using markers through image recognition, and a non-marker technique using objects in scenery as markers. However, where markers are installed, the markers hinder work. Further, where no markers are provided, on the other hand, a sufficient recognition accuracy is not achieved with respect to body movements necessary in farm work. Specifically, it is difficult for a worker to perform image recognition (recognize markers in a natural image) while working, and it becomes substantially difficult for the worker to perform farm work.

Therefore, in the ecosystem utilization system, tags based on GPS coordinates as location information are attached to the information recorded in the synecoculture DB. At a terminal 12, GPS coordinates are designated, so that the information corresponding to the GPS coordinates is read. As the GPS, GPS that can recognize location information at an accuracy of approximately 10 centimeters (RTK-LIB, for example) can be used.

Specifically, tags of species names can be attached to individual vegetables planted at predetermined GPS coordinates, tags of information about seeding and maintenance work can be attached to the respective ridges at predetermined GPS coordinates, or tags of predetermined information can be attached to the native vegetation at predetermined GPS coordinates. By this technology, information processing necessary for managing synecoculture can be performed with the terminals 12 that can read AR information, without installment of any markers in actual farm fields.

As shown in Fig. 18, tags (AR tags) in practice are displayed on a real-world image that is a moving or still image taken by the camera 37. It should be noted that, in Fig. 18, vegetables in the real world are also schematically displayed. Tags of attributes can be displayed on one another.

In the display example shown in Fig. 18, the user mowed grass in this place in August 2011, and planted weeds in September 2011. The information as to what kind of seed was planted is recorded in the maintenance record DB accompanying the tag of seeding. At present, napa cabbage, Chinese chive, Japanese radish, cauliflower, Japanese mustard spinach, and burdock are being grown in this place.

As shown in Fig. 18, napa cabbage 101 through 104, Chinese chive 105, Japanese radish 106, cauliflower 107, Japanese mustard spinach 108, burdock 109, and a colony of wormwood 110 are being grown at locations represented by predetermined GPS coordinates in a field. These plants, together with tags of napa cabbage, Chinese chive, Japanese radish, cauliflower, Japanese mustard spinach, burdock, and a colony of wormwood, are recorded in and managed by the vegetation DB, so that the plants can be identified by GPS coordinates.

Specifically, in a case where the user observes these plants, the user operates the operating unit 34, to input the names of these plants as tags. As a result, the tags are attached to the plants being grown at the GPS coordinate locations, and the plants are managed. When the user takes an image of a predetermined plant in the field with the camera 37, the image is displayed on the display unit 35. When a predetermined instruction is further input, the corresponding tag is displayed on the image of the actual plant existing at the GPS coordinates, as shown in Fig. 18. The colony of wormwood 110 is not plants grown as a result of seeding performed by the user, but is native plants. Therefore, a tag as native vegetation information is attached to the colony of wormwood by the user.

The plants to be grown vary with seasons. Therefore, tags are accompanied with dates and are then managed.

### <Synecoculture Page>

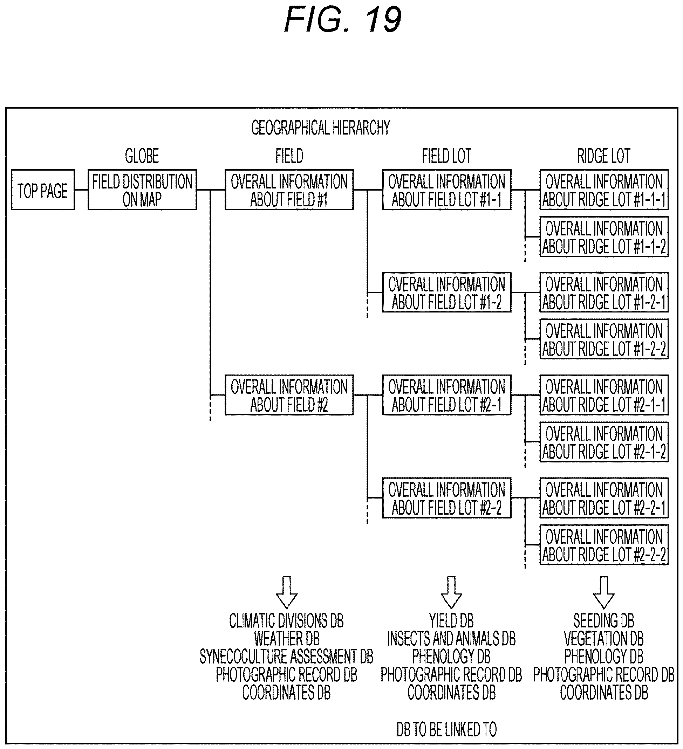

Fig. 19 is a diagram showing an example of the site map of a web page as a synecoculture page.

The server 13 provides the user of a terminal 12 with a synecoculture page that is a web page to which the synecoculture DB is linked in accordance with the geographical hierarchy shown in Fig. 19. For an operation through the touch panel of the terminal 12, the icon for selecting the synecoculture DB is displayed on the top page of the synecoculture page.

As shown in the drawing, the synecoculture page has a hierarchy formed with the top page, a field distribution on a map, overall information about the fields, overall information about the field lots, overall information about the ridge lots, in descending hierarchical order. The top page, the field distribution on a map, the overall information about the fields, the overall information about the field lots, and the overall information about the ridge lots in the hierarchy correspond to the globe, the fields, and the field lots, and the ridge lots, respectively, in the geographical hierarchy. Therefore, the display unit 35 of the terminal 12 outputs and displays fields in accordance with this hierarchical structure. For example, the user can select, from the screen of a field #1, the screens of field lots #1-1, #1-2, ..., which are formed by dividing the field #1, and can select, from the screen of the field lot #1-1, the screens of ridge lots #1-1-1, #1-1-2, ... located in the field lost #1-1. It should be noted that, although not shown in this example, the hierarchy of ridges may be provided.

Further, the overall information about the fields is linked to the climatic divisions DB, the weather DB, the synecoculture assessment DB, the photographic record DB, and the coordinates DB that stores GPS coordinates as location information. The overall information about the field lots is linked to the yield DB, the insects and animals DB, the phenology DB, the photographic record DB, and the coordinates DB. The overall information about the ridge lots is linked to the seeding DB, the vegetation DB, the phenology DB, the photographic record DB, and the coordinates DB.

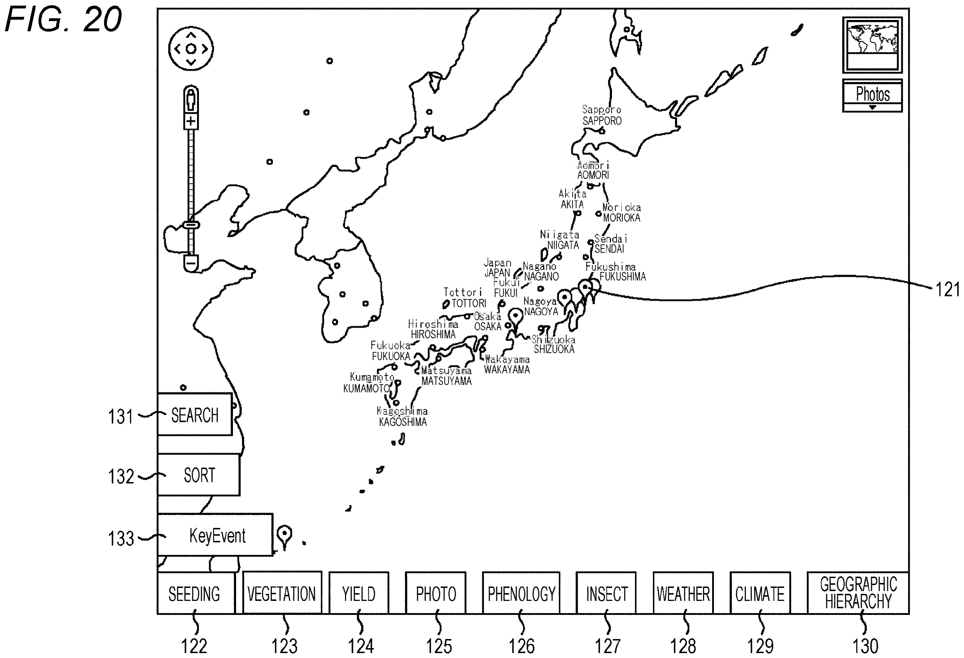

Fig. 20 is a diagram showing an example of display of the field distribution on a map provided through the synecoculture page.

In this example, the locations of fields are indicated by flags 121 on a map of the globe. Icons 122 through 129 correspond to the seeding DB, the vegetation DB, the yield DB, the photographic record DB, the phenology DB, the insects and animals DB, the climatic divisions DB, and the weather DB, respectively, and are operated when information is read from the respective DBs. A geographical hierarchy icon 130 is operated to select a field level.

An icon 131 is operated to issue a search instruction, an icon 132 is operated to issue a sort instruction, and an icon 133 is operated to designate a key event.

When the search icon 131 is operated, the synecoculture CMS 71 of the server 13 searches all the terms and file names. The synecoculture CMS 71 also has a thesaurus function. With this, it is possible to collectively search dates expressed in different manners. For example, dates expressed as "April 1, 2011", "20110401", "01042011", "2011/4/1", "1/4/2011", and "1 April 2011" are regarded as the same. Also, the names of a species, such as a name written in alphabet, a name written with Chinese characters, a Japanese name, a scientific name, an English name, and a vernacular name, can be collectively retrieved and be regarded as the same. For example, potato and Bareisho are regarded as the same.

When the sort icon 132 is operated, the synecoculture CMS 71 performs sorting for each parameter. For example, search results can be sorted for each parameter, such as in date order or in the order of Japanese syllabary.

It should be noted that, of the icons 122 through 133, only the icons that can be operated on the screen are displayed.

### <Process to Refer to Information About a Farm Field>

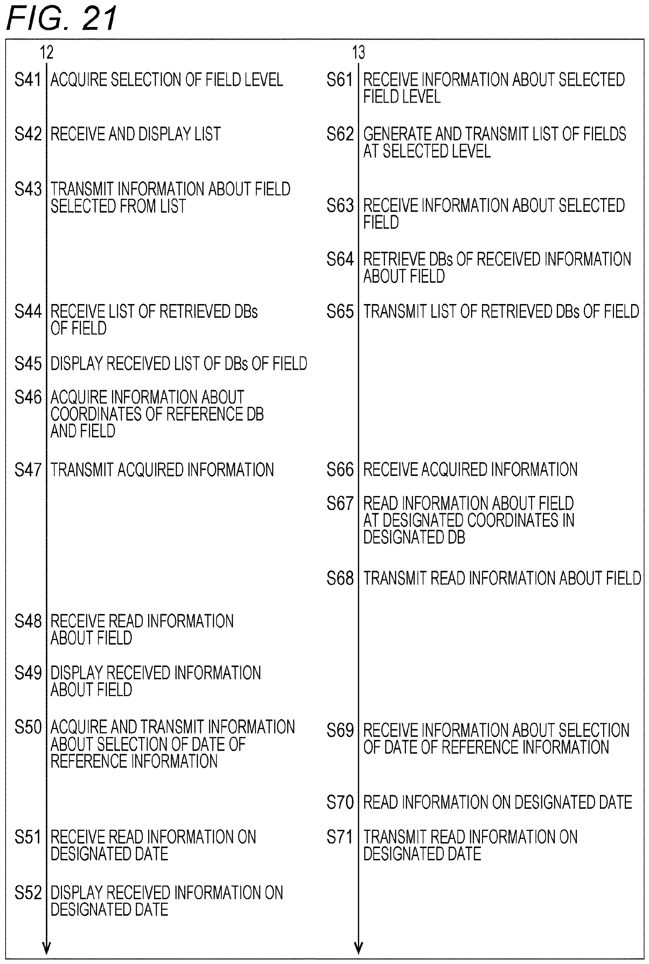

Fig. 21 is a flowchart for explaining an example process to be performed in a case where a user refers to information about a farm field (a field).

In step S41, the acquiring unit 51 of the terminal 12 acquires field level information. Specifically, to refer to the information about a field, the user selects the geographical hierarchy icon 130 (see Fig. 20) by operating the operating unit 34. After this operation is performed, the display unit 35 displays the screen for selecting a field level. That is, a list of field levels is displayed. The user operates the operating unit 34, to select the field to be referred to from the screen. After the acquiring unit 51 acquires information about the selection, the communication unit 40 transmits the information about the selection to the server 13.

In step S61, the communication unit 67 of the server 13 receives the information about the field level selected by the terminal 12. In step S62, a list of fields at the level selected by the terminal 12 in step S41 is created and output. Specifically, the synecoculture CMS 71 searches the coordinates DB and generates a list of fields at the level received in step S61, and the communication unit 67 transmits the list to the terminal 12.

In step S42, the list is received and displayed. Specifically, the list output from the server 13 is received by the communication unit 40 of the terminal 12, and the display control unit 52 displays the list on the display unit 35.

The user operates the operating unit 34, to select the field to be referred to from the displayed list. In step S43, the communication unit 40 transmits the information about the field selected from the list.

In step S63, the communication unit 67 of the server 13 receives the information about the field selected by the terminal 12.

In step S64, the synecoculture CMS 71 searches the synecoculture DB for the DBs related to the field received in step S63. Specifically, the DBs related to the fields at the level designated by the user are retrieved from the synecoculture DB. In step S65, a list of the retrieved field DBs is output. Specifically, the synecoculture CMS 71 creates a list of relevant DBs on the basis of search results, and the communication unit 67 outputs the list to the terminal 12.

In step S44, the communication unit 40 of the terminal 12 receives the list of the retrieved field DBs. In step S45, the display control unit 52 causes the display unit 35 to display the list of the field DBs received by the communication unit 40.

The user operates the operating unit 34, to input the DB to be referred to in the displayed list, and the coordinates of the field. In step S46, the acquiring unit 51 acquires information about the input DB to be referred to and the coordinates of the field. In step S47, the communication unit 40 transmits the information acquired in step S46 to the server 13.

In step S66, the communication unit 67 of the server 13 receives the information transmitted from the terminal 12. In step S67, the synecoculture CMS 71 reads the information about the field at the designated coordinates from the designated DB on the basis of the received information. Specifically, the information about the field at the coordinates input by the user is read from the DB received in step S66. In step S68, the communication unit 67 transmits the read information about the field to the terminal 12.

In step S48, the communication unit 40 of the terminal 12 receives, from the server 13, the information about the field read from the DB. In step S49, the display control unit 52 displays, on the display unit 35, the information about the field received by the communication unit 40.

The user sees the information about the field displayed on the display unit 35, and selects a date of the information to be referred to, by operating the operating unit 34. In step S50, the acquiring unit 51 acquires information about the selection of the date of the information to be referred to. The communication unit 40 transmits the information about the selection of the date to the server 13.

In step S69, the communication unit 67 of the server 13 receives, from the terminal 12, the information about the selection of the date of the information to be referred to. In step S70, the synecoculture CMS 71 reads the information on the designated date from the synecoculture DB. In step S71, the communication unit 67 transmits the read information on the date to the terminal 12.

In step S51, the communication unit 40 of the terminal 12 receives the read information on the date from the server 13. In step S52, the display control unit 52 displays, on the display unit 35, the information on the date received in step S51.

As the synecoculture DB to be referred to, coordinates such as a field lot, and a date are designated in the above manner, the information about the synecoculture DB at respective coordinates, or history information such as the farm fields designed by the user in the past and other farm fields, is displayed on the display unit 35, and the user can refer to this information.

It should be noted that, although a field level is selected with the geographical hierarchy icon 130 in the above example, the field to be referred to can be directly designated by operating the flag 121 of a predetermined flag.

### <Photograph Uploading Process>

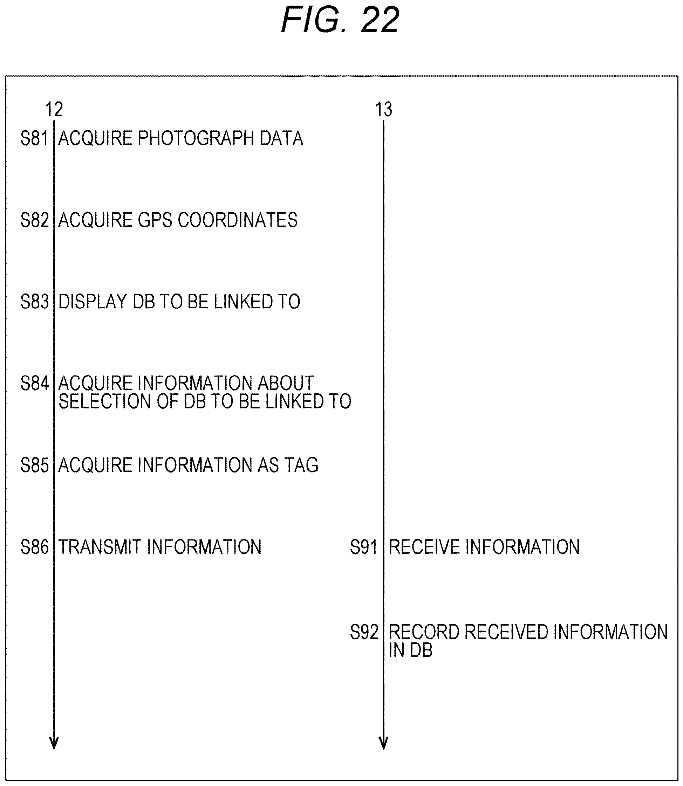

Fig. 22 is a flowchart for explaining an example of a photograph uploading process.

In a case where the user uploads (an image as) a photograph from the terminal 12 onto the server 13, the acquiring unit 51 of the terminal 12 acquires photograph data in step S81. The user discovers (observes) a predetermined plant in a field, for example, and uploads a photograph of the plant onto the server 13. In that case, the user takes the photograph of the plant with the camera 37. After the photograph is taken, the photograph data (image data) is acquired by the acquiring unit 51. It is of course possible to acquire photograph data stored beforehand in a memory or the like as the photograph data to be uploaded.

In step S82, the location detecting unit 39 of the terminal 12 detects GPS coordinates as location information. Specifically, the coordinates of the object having its photograph taken are acquired by the terminal 12. The coordinates can be set as the current location of the terminal 12, or more accurate coordinates of the object can be obtained by calculating the distance and the direction from the current location to the object, and correcting the current location. Alternatively, the user can input coordinates by operating the operating unit 34.

In step S83, the display control unit 52 displays, on the display unit 35, a list of information about the synecoculture DB to be linked to the photograph data. In step S84, the acquiring unit 51 acquires information about the selection of the information to be linked to the photograph data. Specifically, when the user operates the operating unit 34 and selects information to be linked to the photograph data from the list displayed on the display unit 35, the information about the selection is acquired by the acquiring unit 51.

The user further operates the operating unit 34, to input information (mainly text information) as a tag to be attached to the photograph to be uploaded. In a case where a photograph of napa cabbage is taken, for example, the name of "napa cabbage" is input as a tag. It should be noted that this input may be performed not by inputting text from the keyboard but by selecting a predetermined column from an input page that is prepared in advance. In step S85, the acquiring unit 51 acquires the input information to be used as a tag. In step S86, the communication unit 40 transmits the information acquired in steps S81, S82, S84, and S85, to the server 13.

In step S91, the communication unit 67 of the server 13 receives the information transmitted from the terminal 12. In step S92, the synecoculture CMS 71 registers, in the synecoculture DB, the information received in step S91. Specifically, the photograph taken by the user is registered together with a tag in the photographic recordDB, and is further linked to the information about the synecoculture DB selected by the user.

In the above described manner, the user can upload a predetermined photograph and a tag from the terminal 12 onto the server 13. Through the above described process shown in Fig. 21, the user can refer to the uploaded information later.

It should be noted that, in a case where information other than a photograph is uploaded, a similar process is performed. In a case where 1 Kg of napa cabbage is harvested at a predetermined ridge, for example, "napa cabbage 1 Kg" is input as information to be uploaded. The information "napa cabbage 1 Kg" is then recorded into the yield DB, while being linked to the coordinates of the predetermined ridge, for example.

### <Registration of a Key Event>

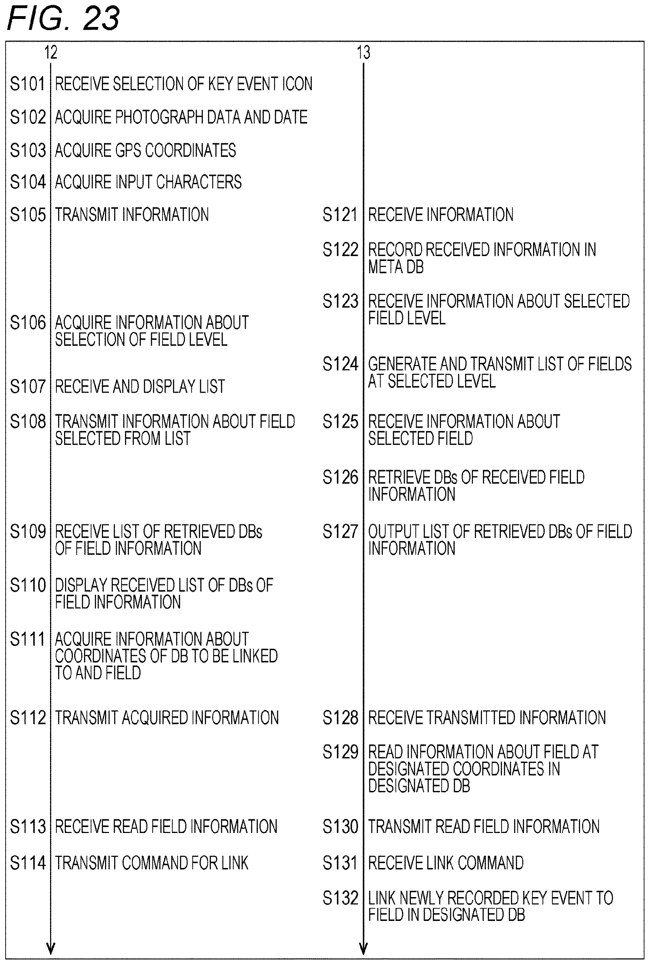

Fig. 23 is a flowchart for explaining an example process to register a key event.

The user can register any event as a key event in the meta DB in the synecoculture DB. A key event may be an event considered important in management of synecoculture, and a key event can be defined by links between a name record in a natural language and the corresponding items in the respective DBs in the synecoculture DB.

When registering a key event, the user operates the operating unit 34, to select the key event icon 133 (see Fig. 20). At this point, the acquiring unit 51 receives the selection of the key event icon 133 in step S101. In step S102, the acquiring unit 51 acquires photograph data and a date. Specifically, the user takes, with the camera 37, a photograph of a plant as an event to be recorded as a key event, and inputs the date by operating the operating unit 34. These pieces of information are then acquired by the acquiring unit 51.

In step S103, the location detecting unit 39 detects GPS coordinates as location information. Specifically, the coordinates corresponding to the photograph are acquired.

In step S104, the acquiring unit 51 acquires input text. Specifically, when the user inputs text information as a key event by operating the operating unit 34, the text information is acquired. For example, in a case where the user has found napa cabbage having rosette leaves, the user can take a photograph of the napa cabbage, and input the text "napa cabbage with rosette leaves" as a key event.

In step S105, the communication unit 40 transmits the information acquired in steps S102 through S104 to the server 13.

In step S121, the communication unit 67 of the server 13 receives the information transmitted from the terminal 12. In step S122, the synecoculture CMS 71 records the information received by the communication unit 67 into the meta DB. Specifically, the information acquired by the terminal 12 in steps S102 through S104 is recorded (registered) into the meta DB as a key event DB.

In step S106, the acquiring unit 51 of the terminal 12 acquires a field level. Specifically, to record a key event, the user selects the geographical hierarchy icon 130 (see Fig. 20) by operating the operating unit 34. After this operation is performed, the display unit 35 displays the screen for selecting a field level. The user operates the operating unit 34, to select the field level to be referred to from the screen. After the acquiring unit 51 acquires information about the selection, the communication unit 40 transmits the information about the selection to the server 13.

In step S123, the communication unit 67 of the server 13 receives the information about the field level selected by the terminal 12. In step S124, a list of fields at the level selected by the terminal 12 in step S106 is created and output. Specifically, the synecoculture CMS 71 searches the coordinates DB and generates a list of fields at the level received in step S123, and the communication unit 67 transmits the list to the terminal 12.

In step S107, the list is received and displayed. Specifically, the list output from the server 13 is received by the communication unit 40 of the terminal 12, and the display control unit 52 displays the list on the display unit 35.

The user operates the operating unit 34, to select the field to be recorded from the displayed list. In step S108, the communication unit 40 transmits the information about the field selected from the list, to the server 13.

In step S125, the communication unit 67 of the server 13 receives the information about the field selected by the terminal 12.

In step S126, the synecoculture CMS 71 searches the synecoculture DB for the DBs in which the information about the field received in step S125 is registered. Specifically, the DBs related to the fields at the level designated by the user are retrieved from the synecoculture DB. In step S127, a list of the retrieved DBs is output. Specifically, the synecoculture CMS 71 creates a list of DBs relatedto the fields at the level designated by the user on the basis of search results, and the communication unit 67 transmits the list to the terminal 12.

In step S109, the communication unit 40 of the terminal 12 receives the list of the DBs from the server 13. In step S110, the display control unit 52 displays, on the display unit 35, the list of DBs from the server 13.

The user operates the operating unit 34, and inputs the DB linked to the key event and the coordinates of the field by referring to the displayed list. InstepS111, the acquiring unit 51 acquires the input information about the DB linked to the key event and the coordinates of the field. In step S112, the communication unit 40 transmits the information acquired in step S111 to the server 13.

In step S128, the communication unit 67 of the server 13 receives the information transmitted from the terminal 12. In step S129, the synecoculture CMS 71 reads the information about the field at the designated coordinates from the designated DB in the synecoculture DB. Specifically, the information about the field at the coordinates input by the user is read from the DB also input by the user. In step S130, the communication unit 67 transmits the read information about the field to the terminal 12.

In step S113, the communication unit 40 of the terminal 12 receives the read information about the field. This information is displayed on the display unit 35. Looking at this display, the user confirms that the field designated (input) by the user is the field to be linked to the key event. After the confirmation, the user operates the operating unit 34, to issue an instruction to link the information about the field designated by the user in the DB designated (input) by the user, to the key event. In step S114, in accordance with the instruction, the communication unit 40 transmits a command for the link to the server 13.

In step S131, the communication unit 67 of the server 13 receives the link command transmitted from the terminal 12. In step S132, the synecoculture CMS 71 links the newly recorded key event to the information about the designated field. Specifically, the key event newly recorded into the meta DB in step S122 is linked to the information about the field designated by the user in step S111.

After the key event is linked to the information about the field in the above manner, the user can refer to the information about the field linked to the key event, or access the key event linked to the information about the field, by operating the operating unit 34 of the terminal 12 on the basis of the key event or the information about the field.

As for each of the events described below as specific examples of key events, a key event name, remarks in a natural language, and related DBs in which information about the field linked to the key event is registered are listed in this order. Key event name: record windbreak effect

Remarks in a natural language: growth of vegetables is facilitated in a place surrounded by a structure such as a fence that blocks the wind, compared with other places under the same land conditions.
Related DBs: coordinates DB, yield DB, maintenance record DB, vegetation DB, and phenology DB
Key event name: soil formation and decrease in germination rate of lettuce

Remarks in a natural language: lettuce is easily germinated in a tilled field, but is not easily germinated in a field where no tilling has been performed for a while and a soil structure is beginning to form.
Related DBs: seeding DB, maintenance record DB, vegetation DB, and phenology DB
Key event name: competitive growth

Remarks in a natural language : a vegetable in competition with other vegetation grows larger than in a land with the same nutrients in soil.
Related DBs: vegetation DB, phenology DB, and yield DB

It should be noted that specific examples of competitive growth include an example where carrots grew larger in competition with wonderberry, an example where individual vegetables grew larger at ridges covered with summer grass, though the germination rate was low.
Key event name: rosette leaves

Remarks in a natural language : leaves of some vegetables turn into a form that extends along the land surface in winter, and survive in the cold-resistance form until spring. Vegetables in such a form are also harvestable.
Related DBs: vegetation DB, phenology DB, yield DB, and weather DB
Key event name: red leaves

Remarks in a natural language: there are cases where leaves of vegetables such as carrot and cabbage turn red in winter.

Vegetables with leaves that have turned red are harvestable.
Related DBs: vegetation DB, phenology DB, yield DB, and weather DB
Key event name: late frost

Remarks in a natural language: if the temperature of the land surface drops to 4°C or lower immediately after germination in spring, all buds will dye due to a late frost, and therefore, it is necessary to take measures by reseeding the entire field or planting seedling in a settled manner.
Related DBs: seeding DB, maintenance record DB, vegetation DB, phenology DB, and weather DB

### <Relationship Graph>

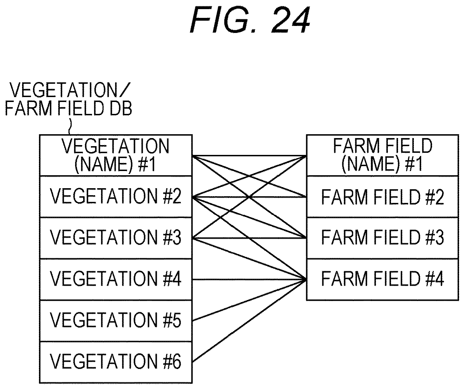

Fig. 24 is a diagram for explaining a relationship graph to be generated by the graph display control unit 72 of the server 13 (or the acquiring unit 51 of a terminal 12).

In a case where information i1 under a certain category (set) is associated with information i2 under another category in a DB, it is possible to generate a relationship graph that is a graph indicating the relationship among the pieces of the information i1 (the graph is a network relationship diagram), with the information i2 serving as criteria (scales) .

Here, in the DB in which the information i1 and the information i2 are associated with each other, it is also possible to generate a relationship graph indicating the relationship among the pieces of the information i2, with the information i1 serving as the criteria, which is the opposite of the above described case.

Further, in generating a relationship graph, it is possible to use a DB in which the information i1 and the information i2 are implicitly associated with each other, instead of a DB in which the information i1 and the information i2 are explicitly associated with each other.

Here, in a case where the information i1 is (the name of) observed vegetation and the information i2 is (the name of) the farm field in which the vegetation was observed, for example, a DB in which the information i1 and the information i2 are explicitly associated with each other is a DB in which the vegetation and the farm field where the vegetation was observed are associated with each other.

Further, a DB in which the information i1 and the information i2 are implicitly associated with each other is a DB in which "vegetation #1 was observed in a farm field #1" in a natural language is registered, for example.

The graph display control unit 72 generates a bipartite graph from a DB in which the information i1 and the information i2 are associated with each other, and generates a relationship graph from the bipartite graph.

Fig. 24 is a diagram showing an example of a bipartite graph generated from a DB.

In Fig. 24, the DB is a vegetation/farm field DB in which vegetation and the farm field(s) where the vegetation was observed are associated with each other.

The bipartite graph in Fig. 24 indicates that vegetation #1 was observed in farm fields #1 through #4, vegetation #2 was observed in the farm fields #1 through #4, vegetation #3 was observed in the farm fields #3 and #4, and vegetation #4 through #6 was observed in the farm field #4.

In generating a relationship graph from the above bipartite graph, a relationship score indicating (the strength of) the relationship between vegetation #i and vegetation #j (i ≠ j) is determined, with a farm field #k serving as the criterion.

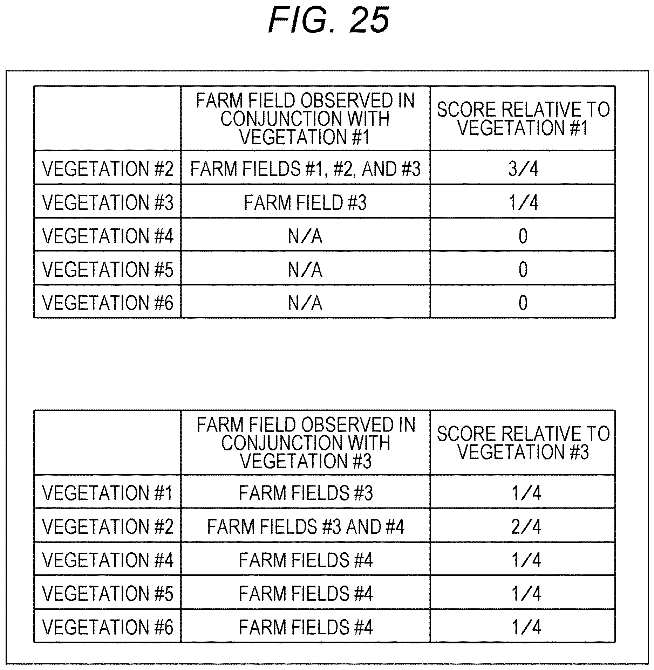

Fig. 25 is a diagram showing an example of relationship scores determined from the bipartite graph of the vegetation/farm field DB shown in Fig. 24.

The relationship score of the vegetation #i with the vegetation #j may be the number of farm fields associated with both the vegetation #i and the vegetation #j, or the value corresponding to (or a value proportional to) the number of farm fields where both the vegetation #i and the vegetation #j were observed.

In Fig. 25, the relationship score of the vegetation #i with the vegetation #j is the value obtained by dividing the number of farm fields where both the vegetation #i and the vegetation #j were observed by the total number (four, in this example) of farm fields.

According to the bipartite graph in Fig. 24, as for the vegetation #1, the number of farm fields where the vegetation #1 was observed together with the vegetation #2 is three (the farm fields #1 through #3), the number of farm fields where the vegetation #1 was observed together with the vegetation #3 is one (the farm field #3), and the number of farm fields where the vegetation #1 was observed together with any of the vegetation #4 through #6 is zero, as shown in the upper half of Fig. 25.

Accordingly, as for the vegetation #1, the relationship score with the vegetation #2 is 3/4, and the relationship score with the vegetation #3 is 1/4. Further, the relationship score of the vegetation #1 with any of the vegetation #4 through #6 is 0.

Likewise, as for the vegetation #3 in Fig. 24, the relationship score with the vegetation #1 is 1/4, and the relationship score with the vegetation #2 is 2/4 (= 1/2), as shown in the lower half of Fig. 25. Further, the relationship score of the vegetation #3 with any of the vegetation #4 through #6 is 1/4.

The graph display control unit 72 determines relationship scores from the bipartite graph, generates a relationship graph using the relationship scores, and generates a graph display screen displaying the relationship graph.

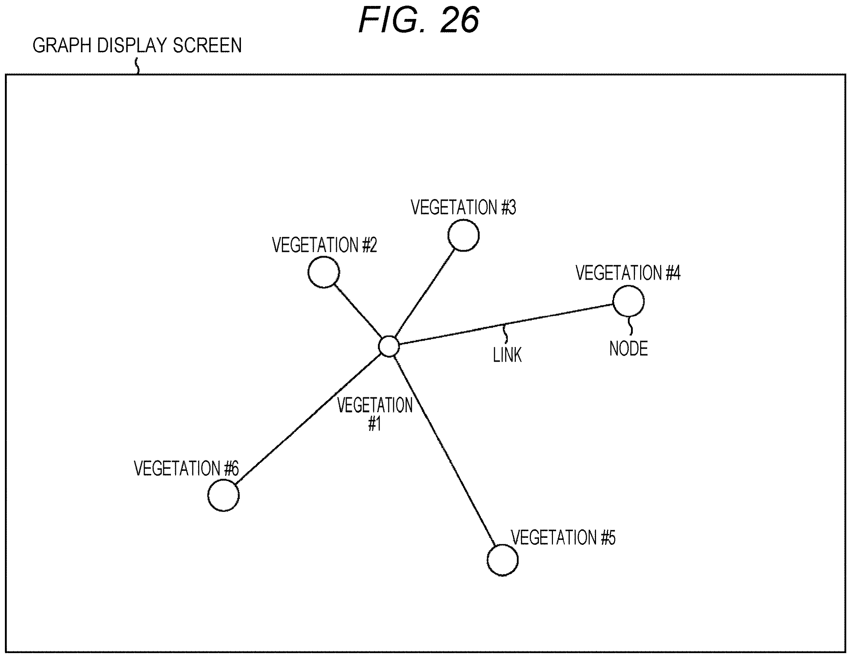

Fig. 26 is a diagram showing an example of a graph display screen displaying a relationship graph generated from the bipartite graph shown in Fig. 24 and the relationship scores shown in Fig. 25.

The relationship graph is formed with nodes represented by circles in the drawing, and links represented by line segments connecting the nodes to one another.

In Fig. 26, the nodes correspond to the respective types of vegetation, and the links indicate the relationship between the nodes or the types of vegetation.

In the relationship graph in Fig. 26, the node of the vegetation #1 (the node corresponding to the vegetation #1) is the attention node being focused on, and the relationships between the vegetation #1 represented by the attention node and the other vegetation #2 through #6 are shown.

On the graph display screen, the relationship graph is placed so that the attention node, or the node of the vegetation #1 in this example, is located (almost) in the center of the screen.

Further, in the relationship graph, the lengths between the node of the vegetation #1 as the attention node and the nodes of the other vegetation #2 through #6 are proportional to the relationship scores of the vegetation #1 with the vegetation #2 through #6 shown in Fig. 25.

Specifically, the length between the node of the vegetation #1 as the attention node and the node of some other vegetation #j is shorter where the relationship score of the vegetation #1 with the vegetation #j is higher, or the relationship between the vegetation #1 and the vegetation #j is stronger.

In this case, a strong relationship between the vegetation #1 and the vegetation #j means that the number of farm fields where both the vegetation #1 and the vegetation #j were observed is large.

Accordingly, the vegetation #j represented by a node located close to the node of the vegetation #1 as the attention node can be assumed to be in a symbiotic relationship with the vegetation #1, and the user looking at the relationship graph shown in Fig. 26 can easily recognize (predict or deduce) vegetation suitable for creating a dense mixture state with the vegetation #1.

As a result, the relationship graph shown in Fig. 26 can aid a vegetation plan in supporting ecosystem utilization.

Although the node of the vegetation #1 is the attention node in Fig. 26, any node can be selected as the attention node on a graph display screen.

Specifically, in a case where a graph display screen is displayed on the display unit 35 in the terminal 12, when the user selects the node of the vegetation #3 by operating the operating unit 34, for example, the display control unit 52 displays a graph display screen displaying a relationship graph showing the node of the vegetation #3 as the attention node.

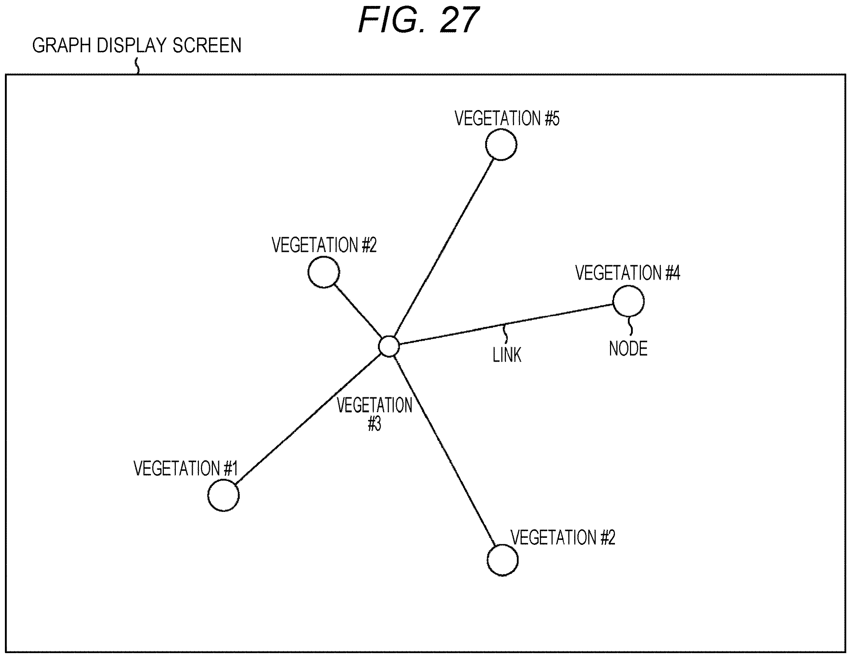

Fig. 27 is a diagram showing an example of the graph display screen displaying the relationship graph showing the node of the vegetation #3 as the attention node.

On the graph display screen in Fig. 27, the relationship graph is placed so that the node of the vegetation #3 as the attention node is located in the center of the screen.

Further, in the relationship graph, the lengths between the node of the vegetation #3 as the attention node and the nodes of the other vegetation #1, #2, and #4 through #6 are proportional to the relationship scores of the vegetation #3 with the vegetation #1, #2, and #4 through #6 shown in Fig. 25.

In a relationship graph showing relationships among pieces of the information i1, with the information i2 being the criterion, it is possible to show not only the relationships among the pieces of the information i1 but also the relationship between the information i1 and the information i2 associated with the information i1.

Specifically, a relationship graph generated from the vegetation/farm field DB shown in Fig. 24 can also indicate not only the relationships among different types of vegetation but also the relationship between vegetation and the farm fields associated with the vegetation.

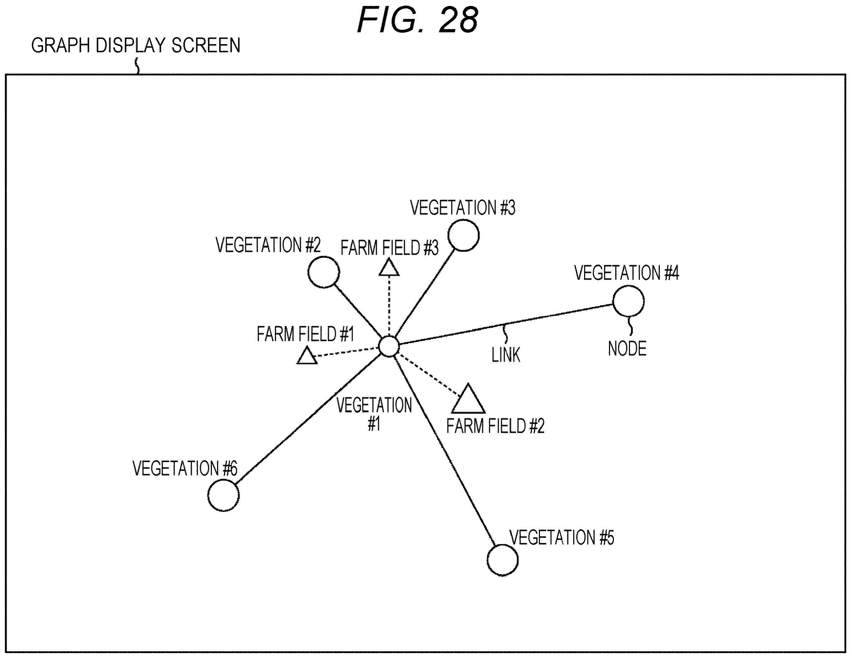

Fig. 28 is a diagram showing an example of a graph display screen displaying a relationship graph indicating not only relationships among different types of vegetation but also relationships between vegetation and the farm fields associated with the vegetation.

In the relationship graph in Fig. 28, nodes of the farm fields (the portions represented by triangles in the drawing) associated with the vegetation, and the links (the portions represented by dashed lines in the drawing) indicating the relationships between the vegetation and the farm fields are added to the relationship graph shown in Fig. 26.

Specifically, in the relationship graph in Fig. 28, the respective nodes of farm fields #1 through #3 where the vegetation #1 represented by the attention node was observed, and the links connecting the respective nodes to the node of the vegetation #1 as the attention node are added to the relationship graph shown in Fig. 26.

From the relationship graph in Fig. 28, the user can easily recognize vegetation suitable for creating a dense mixture state with the vegetation #1, and also can easily recognize the farm fields where the vegetation #1 was observed, as in the case illustrated in Fig. 26.

In this case, the user can deduce environments where the vegetation #1 is observed, by accessing the synecoculture DB and investigating the environments of the farm fields where the vegetation #1 was observed.

Here, in a case where nodes of information under different categories, such as vegetation and farm fields, are shown in a relationship graph, the nodes can be displayed so that the nodes of the vegetation and the nodes of the farm fields can be distinguished from each other.

Specifically, the nodes of the farm fields can be displayed in a different color, a different size, a different shape, and a different pattern from those of the nodes of the vegetation, for example.

On a graph display screen displaying a relationship graph indicating not only the relationships among different types of vegetation but also the relationships between vegetation and the farm fields associated with the vegetation as shown inFig. 28, a node of vegetation can be selected as the attention node as described above with reference to Fig. 27, or the node of a farm field can be selected as the attention node.

Specifically, in a case where the graph display screen shown in Fig. 28 is displayed on the display unit 35 in the terminal 12, when the user selects the node of a farm field by operating the operating unit 34, the display control unit 52 displays a graph display screen displaying a relationship graph showing the node of the farm field selected by the user as the attention node.

A relationship graph showing the node of a farm field as the attention node indicates the relationships among farm fields, with the criteria being the vegetation associated with the farm fields in the vegetation/farm field DB. Therefore, in a case where a graph display screen displaying a relationship graph showing the node of a farm field as the attention node is displayed, a relationship score indicating the relationship between farm fields #i and #j (i ≠ j) is determined, with vegetation #k being the criterion.

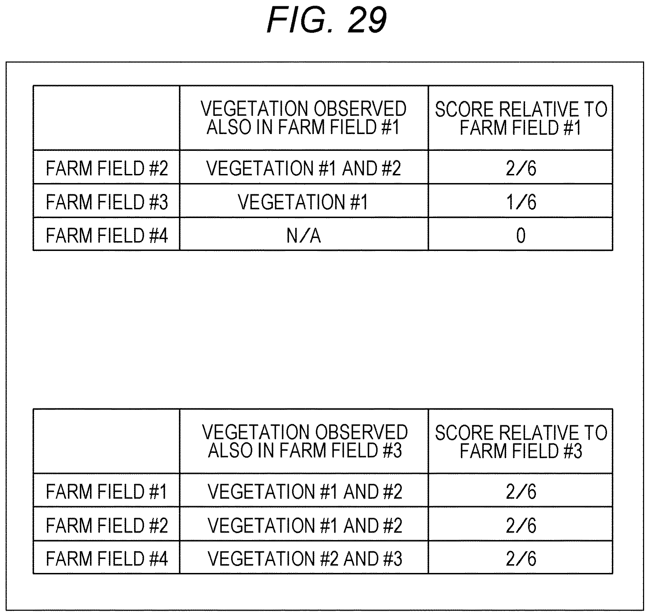

Fig. 29 is a diagram showing an example of relationship scores determined from the bipartite graph shown in Fig. 24.

It should be noted that, although the relationship scores of different kinds of vegetation are shown in Fig. 25, the relationship scores of different farm fields are shown in Fig. 29.

The relationship score of the farm field #i with another farm field # j may be the number of types of vegetation associated with both the farm fields #i and #j, or the value corresponding to (or a value proportional to) the number of types of vegetation observed in both the farm fields #i and #j.

In Fig. 29, the relationship score of the farm field #i with another farm field #j is the value obtained by dividing the number of types of vegetation observed in both the farm fields #i and #j by the total number (six, in this example) of types of vegetation.

According to the bipartite graph in Fig. 24, as for the farm field #1, the number of types of vegetation observed in both the farm fields #1 and #2 is two (the vegetation #1 and the vegetation #2), the number of types of vegetation observed in both the farm fields #1 and #3 is one (the vegetation #1), and the number of types of vegetation observed in both the farm fields #1 and #4 is zero, for example, as shown in the upper half of Fig. 29.

Accordingly, as for the farm field #1, the relationship score with the farm field #2 is 2/6 (= 1/3), and the relationship score with the farm field #3 is 1/6. Further, the relationship score of the farm field #1 with the farm field #4 is 0.

Likewise, as for the farm field #3 in Fig. 24, for example, the relationship score with each of the farm fields #1, #2, and #4 is 2/6, as shown in the lower half of Fig. 29.

The graph display control unit 72 determines relationship scores from the bipartite graph, generates a relationship graph using the relationship scores, and generates a graph display screen displaying the relationship graph.

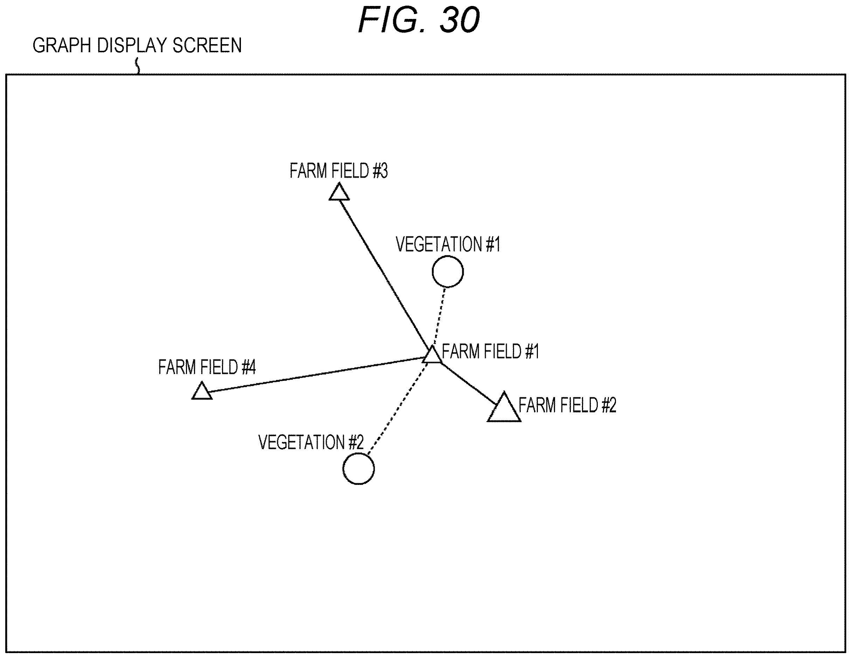

Fig. 30 is a diagram showing an example of a graph display screen displaying a relationship graph generated from the relationship scores shown in Fig. 29.

Specifically, Fig. 30 shows an example of a graph display screen displaying a relationship graph in a case where the user has selected the node of the farm field #1 as the attention node in the relationship graph shown in Fig. 28, for example.

The relationship graph in Fig. 30 shows the node of the farm field #1 as the attention node, and indicates the relationships between the farm field #1 represented by the attention node and the other farm fields #2 through #4.

On the graph display screen, the relationship graph is placed so that the node of the farm field #1 as the attention node is located in the center of the screen, as in Fig. 26.

Further, in the relationship graph in Fig. 30, the lengths between the node of the farm field #1 as the attention node and the nodes of the other farm fields #2 through #4 are proportional to the relationship scores of the farm field #1 with the farm fields #2 through #4 shown in Fig. 29.

Specifically, the length between the node of the farm field #1 as the attention node and the node of another farm field #j is shorter where the relationship score of the farm field #1 with the farm field #j is higher, or the relationship between the farm fields #1 and #j is stronger.

In this case, a strong relationship between the farm fields #1 and #j means that the number of types of vegetation observed in both the farm fields #1 and #j is large.

Accordingly, the farm field #1 represented by the attention node and the farm field #j represented by a node located close to the attention node can be assumed to be farm fields in environments having many aspects in common with environments suitable for the vegetation observed in both the farm fields #1 and #j.

As a result, with the relationship graph in Fig. 30, the user can deduce environments suitable for the vegetation observed in both the farm fields #1 and #j, by accessing the synecoculture DB and investigating the common environments between the farm fields #1 and #j, for example.

It should be noted that, in the relationship graph in Fig. 30, not only the relationships among the farm fields but also the nodes of the vegetation #1 and the vegetation #2 observed in the farm field #1 are displayed, being linked to the farm field #1 represented by the attention node.

The user can select any node as the attention node by operating the operating unit 34.

In the relationship graph in Fig. 30, if the node of the farm field #3 is selected as the attention node, for example, the display control unit 52 displays a graph display screen displaying a relationship graph showing the node of the farm field #3 as the attention node.

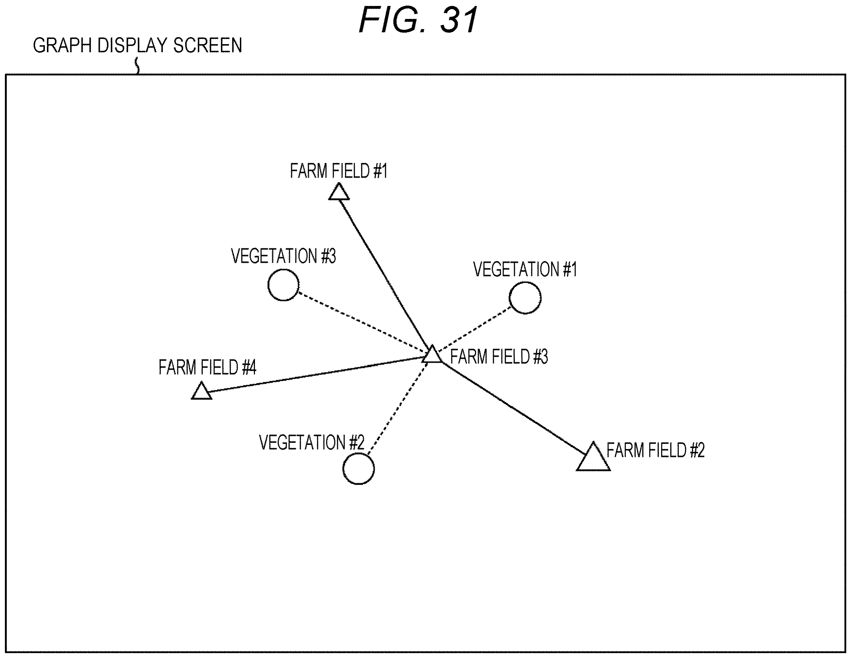

Fig. 31 is a diagram showing an example of a graph display screen displaying a relationship graph showing the node of the farm field #3 as the attention node.

On the graph display screen in Fig. 31, the relationship graph is placed so that the node of the farm field #3 as the attention node is located in the center of the screen.

Further, in the relationship graph, the lengths between the node of the farm field #3 as the attention node and the nodes of the other farm fields #1, #2, and #4 are proportional to the relationship scores of the farm field #3 with the farm fields #1, #2, and #4 shown in Fig. 29.

It should be noted that, in the relationship graph in Fig. 31, not only the relationships among the farm fields but also the nodes of the vegetation #1 through #3 observed in the farm field #3 are displayed, being linked to the farm field #3 represented by the attention node, as in Fig. 30.

If the node of the vegetation #1 is newly selected as the attention node in the relationship graph in Fig. 31, for example, the relationship graph is the same as that shown in Fig. 28.

With the above described relationship graphs, the user can easily recognize the other vegetation being grown with the vegetation #1 represented by the attention node, and can also easily recognize the farm fields where the vegetation #1 represented by the attention node is observed, by referring to the relationship graph in Fig. 28, for example.

Further, if the user newly selects the node of vegetation other than the vegetation #1 as the attention node in the relationship graph in Fig. 28, a relationship graph showing the newly selected node as the attention node is displayed as described above with reference to Figs. 26 and 27. Accordingly, the user can easily recognize the other vegetation that is being grown with the vegetation #1 and is represented by the node newly selected as the attention node.

Further, if the user selects the node of a farm field as the attention node in the relationship graph in Fig. 28, a relationship graph indicating the relationships among the farm fields and the vegetation observed in the farm field represented by the attention node is displayed as shown in Fig. 30. Accordingly, the user can easily recognize the farm fields where vegetation similar to that observed in the farm field represented by the attention node is often observed, and the vegetation observed in the farm field represented by the attention node.

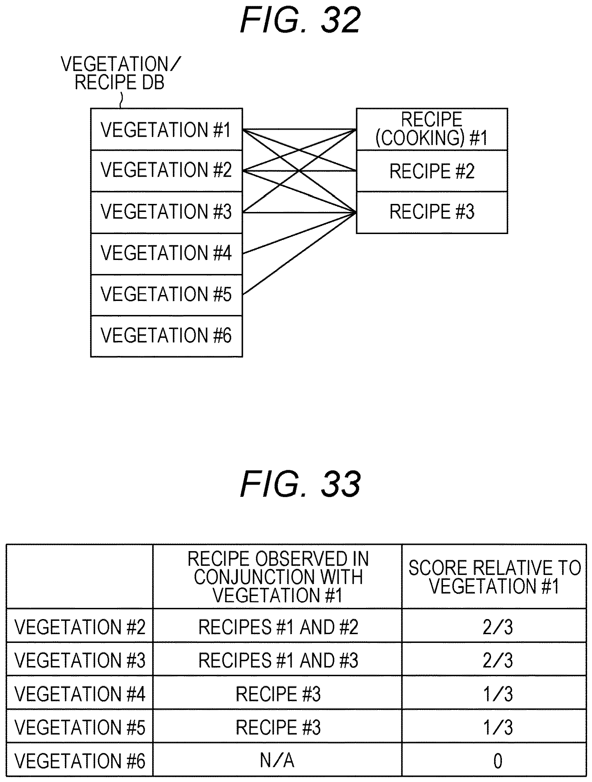

Fig. 32 is a diagram showing an example of a bipartite graph generated from a vegetation/recipe DB.

Here, the vegetation/recipe DB is a DB in which vegetation is associated with the recipes for meals using the vegetation for an ingredient.

The bipartite graph in Fig. 32 indicates that the vegetation #1 was observed (as an ingredient) in recipes #1 through #3, the vegetation #2 was observed in the recipes #1 through #3, the vegetation #3 was observed in the recipes #1 and #3, the vegetation #4 and #5 was observed in the recipe #3, and the vegetation #6 was not observed in any of the recipes #1 through #3.

In generating a relationship graph from the above bipartite graph, a relationship score indicating (the strength of) the relationship between vegetation #i and vegetation #j (i ≠ j) is determined, with a recipe #k serving as the criterion, for example.

Fig. 33 is a diagram showing an example of relationship scores determined from the bipartite graph of the vegetation/recipe DB shown in Fig. 32.

The relationship score of the vegetation #i with the vegetation #j may be the number of recipes associated with both the vegetation #i and the vegetation #j, or the value corresponding to the number of recipes in which both the vegetation #i and the vegetation #j were observed.

In Fig. 33, the relationship score of the vegetation #i with the vegetation #j is the value obtained by dividing the number of recipes in which both the vegetation #i and the vegetation #j were observed by the total number (three, in this example) of recipes.

According to the bipartite graph in Fig. 32, as for the vegetation #1, the number of recipes in which the vegetation #1 was observed together with the vegetation #2 is two (the recipes #1 and #2), the number of recipes in which the vegetation #1 was observed together with the vegetation #3 is two (the recipes #1 and #3), the number of recipes in which the vegetation #1 was observed together with the vegetation #4 is one (the recipe #3), the number of recipes in which the vegetation #1 was observed together with the vegetation #5 was one (the recipe #3), and the number of recipes in which the vegetation #1 was observed together with the vegetation #6 was zero.

Accordingly, as for the vegetation #1, each relationship score with the vegetation #2 and the vegetation #3 is 2/3, and each relationship score with the vegetation #4 and the vegetation #5 is 1/3. Further, the relationship score of the vegetation #1 with the vegetation #6 is 0.

The graph display control unit 72 determines relationship scores from the bipartite graph, generates a relationship graph using the relationship scores, and generates a graph display screen displaying the relationship graph.

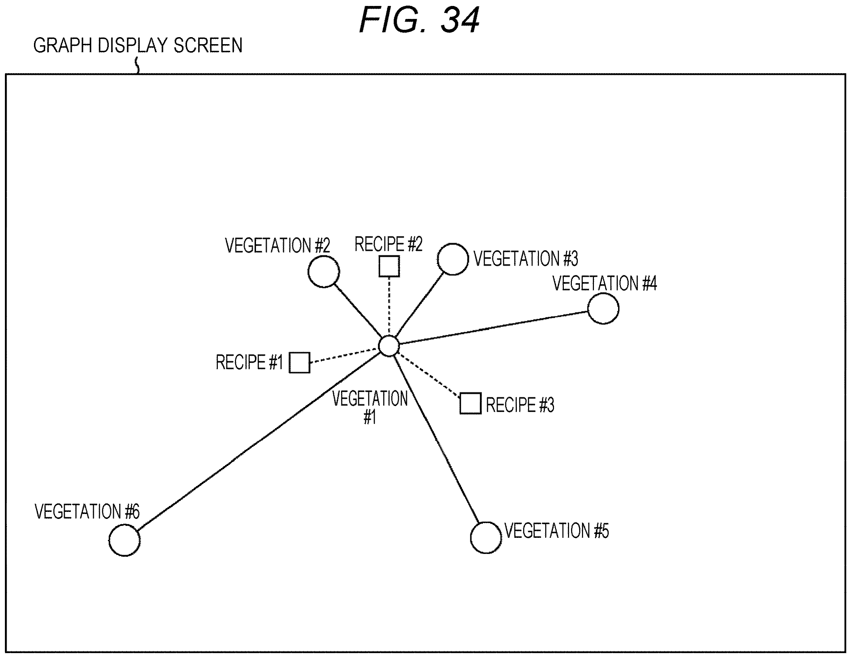

Fig. 34 is a diagram showing an example of a graph display screen displaying a relationship graph generated from the bipartite graph shown in Fig. 32 and the relationship scores shown in Fig. 33.

In the relationship graph in Fig. 34, the node of the vegetation #1 is the attention node, and the relationships between the vegetation #1 represented by the attention node and the other vegetation #2 through #6 are shown.

In the relationship graph in Fig. 34, not only the relationships among different types of vegetation but also the relationships between vegetation and the recipes associated with the vegetation are shown, as in Fig. 28.

Further, in the relationship graph inFig. 34, the lengths between the node of the vegetation #1 as the attention node and the nodes of the other vegetation #2 through #6 are proportional to the relationship scores of the vegetation #1 with the vegetation #2 through #6 shown in Fig. 33, as in the above described relationship graph determined from the bipartite graph of the vegetation/farm field DB.

Specifically, the length between the node of the vegetation #1 as the attention node and the node of some other vegetation #j is shorter where the relationship score of the vegetation #1 with the vegetation #j is higher, or the relationship between the vegetation #1 and the vegetation #j is stronger.

In this case, a strong relationship between the vegetation #1 and the vegetation #j means that the number of recipes in which both the vegetation #1 and the vegetation #j were observed is large.

Accordingly, the vegetation #j represented by a node located close to the node of the vegetation #1 as the attention node can be assumed to be often used in cooking together with the vegetation #1, and the user looking at the relationship graph shown in Fig. 34 can easily recognize the vegetation that is often used together with the vegetation #1.

It should be noted that, for example, tomato and basil are often used together in cooking, and vegetables that are often used in cooking might be in a symbiotic relationship.

In the relationship graph in Fig. 34, the user can also select the node of vegetation other than the vegetation #1 as the attention node by operating the operating unit 34, so that a relationship graph showing the selected node of vegetation as the attention node is displayed.

The user can also select the node of a recipe as the attention node, so that a relationship graph showing the selected node of the recipe as the attention node is displayed.

In this case, the recipe represented by a node located close to the node of the recipe as the target node involves many kinds of vegetation that are used together the recipe represented by the attention node.

It is also possible to generate a relationship graph from a DB in which vegetation is associated with some other kind of information, instead of from (a bipartite graph of) the above described vegetation/farm field DB or the vegetation/recipe DB.

Also, it is possible to generate a relationship graph from a DB in which a species (of living creature) other than vegetables is associated with information about other species.

Further, it is possible to generate a relationship graph from DBs, such as a first DB and a second DB, instead of from a single DB such as the vegetation/farm field DB or the vegetation/recipe DB.

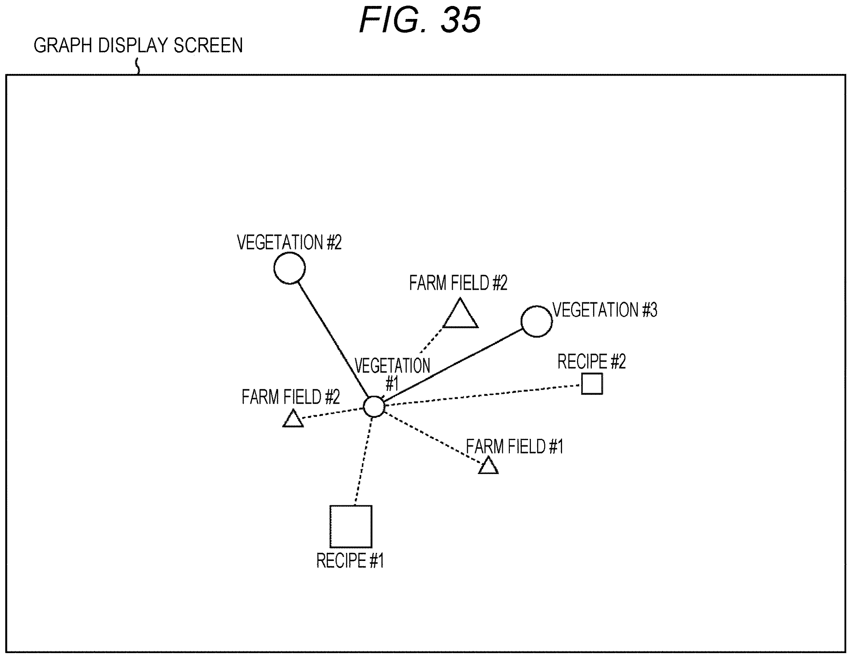

Fig. 35 is a diagram showing an example of a bipartite graph generated from the above described two DBs: the vegetation/farm field DB and the vegetation/recipe DB.

In the relationship graph in Fig. 35, the node of the vegetation #1 is the attention node, and the relationships between the vegetation #1 represented by the attention node and the other vegetation #2 through #6 are shown.

The relationship graph in Fig. 35 indicates not only the relationships among different types of vegetation but also the relationships between vegetation and the respective farm fields associated with the vegetation.

In the relationship graph in Fig. 35, the relationship scores of the vegetation #1 as the attention node with the other vegetation #2 through #6 can be determined, with the criteria being the farm fields #k associated with the vegetation #i in the vegetation/farm field DB or the recipes #k associated with the vegetation #i in the vegetation/recipe DB.

The relationship scores of the vegetation #1 as the attention node with the other vegetation #2 through #6 can also be determined, with the criteria being both the farm fields #k associated with the vegetation #i in the vegetation/farm field DB and the recipes #k associated with the vegetation #i in the vegetation/recipe DB.

In a case where the relationship scores of the vegetation #1 as the attention node with the other vegetation #2 through #6 are determined by using both the farm fields #k and the recipes #k as the criteria, weight-added values such as the mean values of the relationship scores obtained by using the farm fields #k as the criteria and the relationship scores obtained by using the recipes #k as the criteria can be determined as the relationship scores of the vegetation #1 as the attention node with the other vegetation #2 through #6.

It should be noted that, as for the information represented by the attention node, such as the vegetation #i, all the other kinds of vegetation #j are ranked relative to the vegetation #i on the basis of the relationships of the vegetation #i with the other vegetation #j in a relationship graph or the relationship scores of the vegetation #i with the other vegetation #j.

Other vegetation #j closer to the vegetation #i represented by the attention node in the relationship graph is more highly ranked.

In the above described case, as for the vegetation/farm field DB, for example, the value corresponding to the number of farm fields where both the vegetation #i and the vegetation #j were observed is employed as the relationship score of the vegetation #i with the vegetation #j. However, the relationship score of the vegetation #i with the vegetation #j may be the number of times both the vegetation #i and the vegetation #j were observed in the same farm field, or any value relative to a farm field associated with vegetation in the vegetation/farm field DB, such as the distance between a farm field where the vegetation #i was observed and a farm field where the vegetation #j was observed.

Further, display of a relationship graph can be controlled on the basis of various factors.

In a relationship graph indicating relationships among different kinds of vegetations, for example, the link connecting the node of vegetation with a higher rank to the attention node can be made thicker or be displayed in a different color from the other links.

In a relationship graph generated from the vegetation/farm field DB, for example, the node of a farm field #k where the number of times the vegetation #i represented by the attention node was observed can be displayed larger or be located closer to the attention node.

Further, in a relationship graph indicating relationships among different kinds of vegetation, the vegetation #i observed a larger number of times can have a larger node.

Further, in a relationship graph generated from the vegetation/recipe DB, for example, the node of a recipe in which a larger amount of the vegetation #i represented by the attention node is used can be displayed larger or be located closer to the attention node.

Also, in a relationship graph indicating relationships among different kinds of vegetation, for example, animation display can be conducted so that the node of vegetation #j' having a weak relationship (a low relationship score) with the vegetation #i represented by the attention node moves away from the attention node as the node of vegetation #j having a strong relationship (a high relationship score) with the vegetation #i represented by the attention node moves toward the attention node.

Further, in a relationship graph indicating relationships among different kinds of vegetation, for example, the nodes of all the vegetation are displayed for the nodes of the vegetation registered in the vegetation/farm field DB or the vegetation/recipe DB, or it is possible to display only the node of the vegetable #i as the attention node, the nodes of vegetation #j each having a higher relationship score than 0 with the vegetation #i, and the nodes of the farm fields #k where the vegetation #j observed together with the vegetation #i exists.

In this case, the number of nodes of vegetation that form a relationship graph is limited. Therefore, the user can be prevented from having difficulties in looking at the relationship graph due to a large number of nodes of vegetation on display.

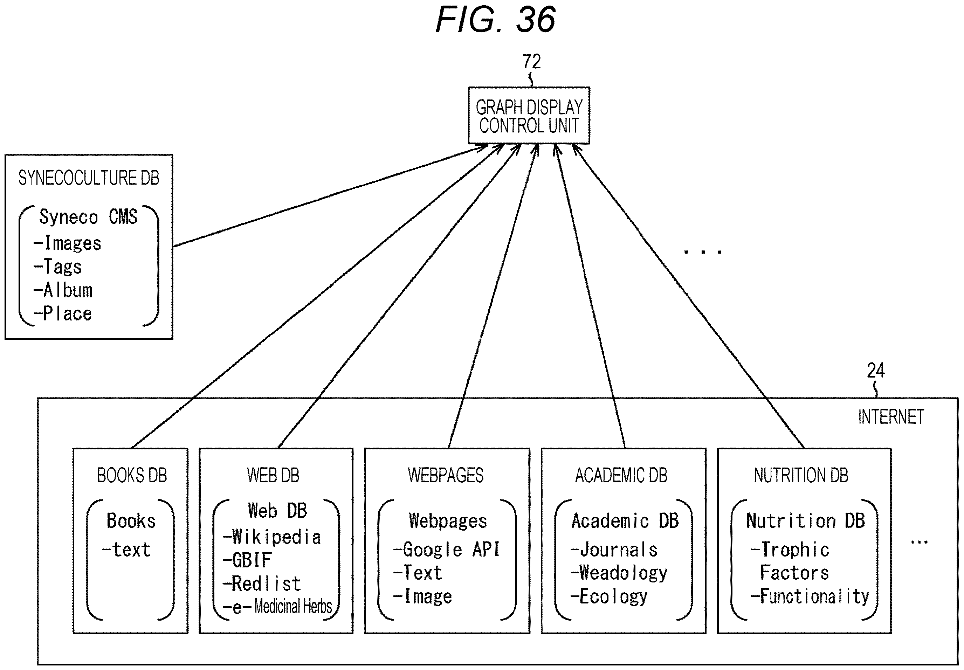

Fig. 36 is a diagram showing an example DB to be used in generating a relationship graph at the graph display control unit 72 (or the acquiring unit 51).

A relationship graph can be generated by using (the various DBs in) the synecoculture DB registered in the storage 63 of the server 13.

A relationship graph can also be generated by using various DBs such as DBs in which species are associated with other information on the Internet 24.

Specifically, a relationship graph can be generated by using various DBs on the Internet 24, such as a books DB storing information about books, a web DB that is a DB provided through a web page, web pages, an academic DB storing academic information, and a nutrition DB storing nutritional information.

The user of a terminal 12 can select a DB to be used in generating a relationship graph by operating the operating unit 34.

Specifically, in accordance with an operation of the operating unit 34, the DB to be used in generating a relationship graph is selected from among the DBs shown in Fig. 36, for example.

Here, in a case where the DB to be used in generating a relationship graph can be selected from among DBs as described above, it might be difficult for the user to recognize to which DB the currently displayed relationship graph is related (which DB was used in generating the currently displayed relationship graph) .

Therefore, in accordance with selection (switching) of the DB to be used in generating a relationship graph, it is possible to change one or more of the items including the background color of the relationship graph, the shape of each node, and the color of each node.

The terminal 12 can also output a different sound through the speaker 36 in accordance with selection of the DB to be used in generating a relationship graph.

In the above manner, the user can recognize which DB is used in generating a relationship graph.

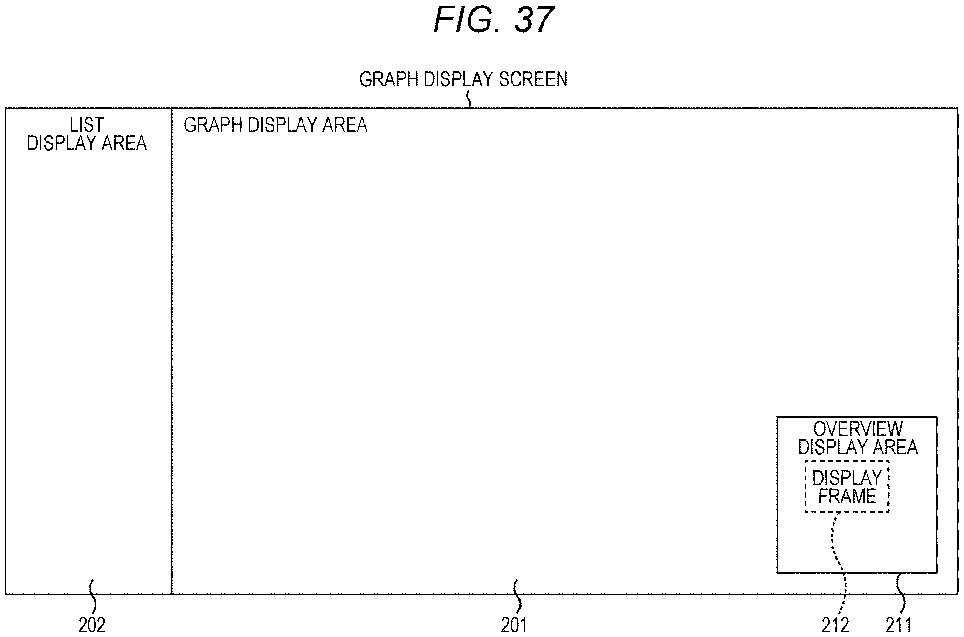

Fig. 37 is a diagram showing an example structure of a graph display screen on which a relationship graph is to be displayed.

The graph display screen can include a graph display area 201 and a list display area 202.

In Fig. 37, the list display area 202 is placed on the left side of the graph display area 201.

A relationship graph is to be displayed in the graph display area 201.

An overview display area 211 can be further provided in the graph display area 201.

In Fig. 37, the overview display area 211 is located in a lower right portion of the graph display area 201.

An entire relationship graph in which the nodes of all the information i1 registered in the DB that has been used in generating the relationship graph and has the information i1 associated with information i2 is to be displayed in the overview display area 211.

The entire relationship graph in which the nodes of all the information i1 registered in the DB exist might contain an enormous number of nodes, and display of the entire relationship graph in the graph display area 201 might hinder viewing of the relationship graph.

Therefore, part of the display of the entire relationship graph can be enlarged in the graph display area 201. In this case, the overview display area 211 can show a display frame 212 in the entire relationship graph displayed in the overview display area 211, the display frame 212 indicating the part of the entire relationship graph displayed in the graph display area 201.

With the display frame 212, the user can easily recognize which part of the entire relationship graph is displayed in the graph display area 201.

A ranking list is to be displayed in the list display area 202.

Here, with the relationship graph (relationship scores) indicating the relationships of the vegetation #i with the other vegetation #j, it is possible to rank all the other kinds of vegetation #j relative to the vegetation #i on the basis of the relationships of the vegetation #i with the other vegetation #j or the relationship scores of the vegetation #i with the other vegetation #j, for example, as described above with reference to Fig. 35.

A ranking list that is a list of (the names) of the ranked vegetation #j is to be displayed in the list display area 202.

It should be noted that display of the overview display area 211 and display of the ranking list can be switched on and off in accordance with an operation performed by the user through the operating unit 34.

The above described graph display screen can be generated by using Gephi, for example, which is an open-source software package.

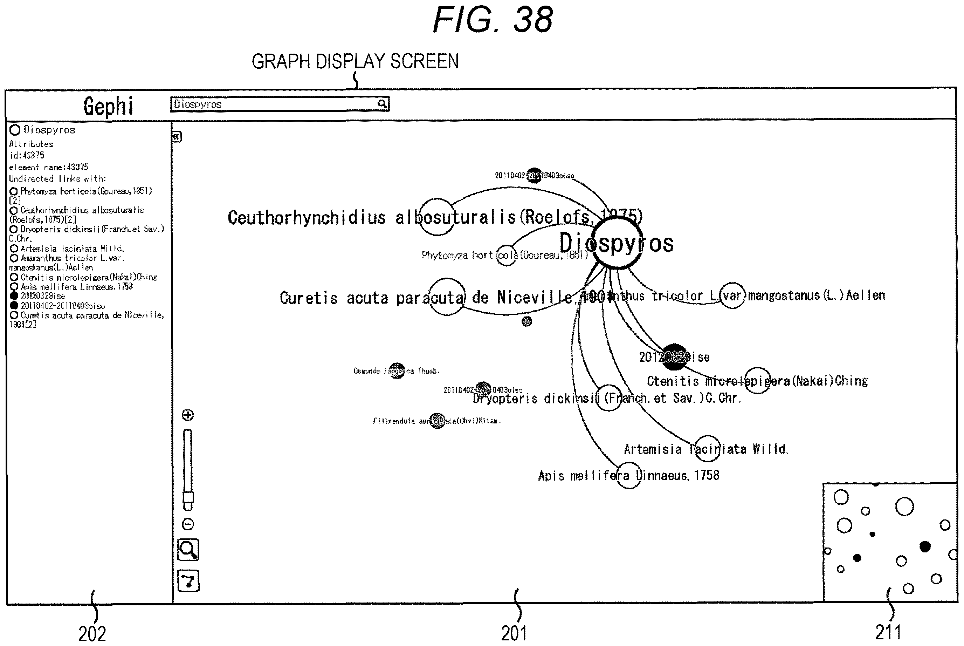

Fig. 38 is a diagram showing an example of a graph display screen generated with Gephi.

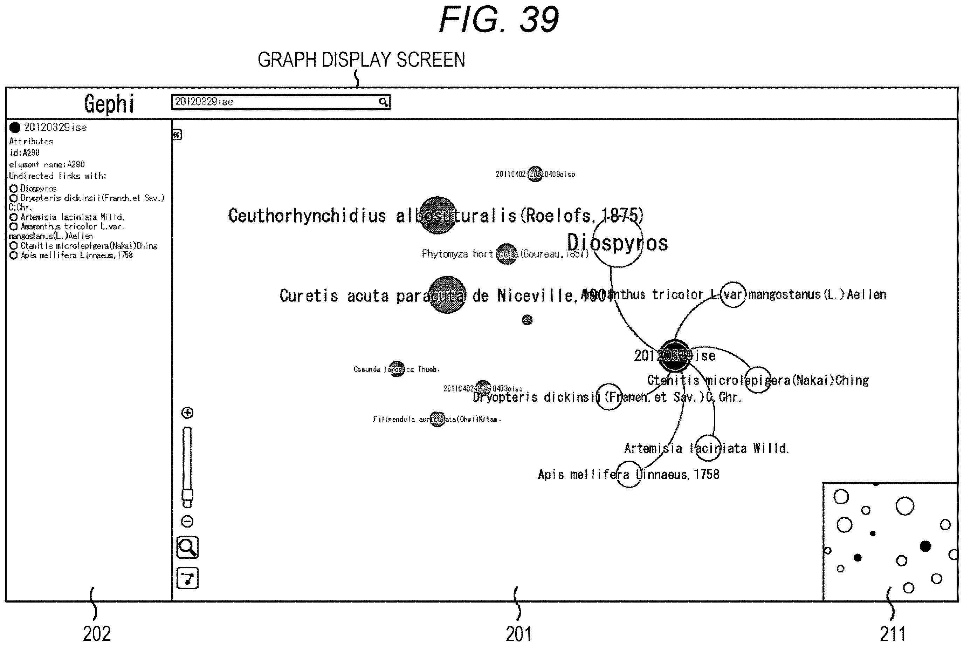

In Fig. 38 (and Figs. 39 through 41, which will be described later), white circles represent the nodes of vegetation, and black circles represent the nodes of farm fields.

On the graph display screen in Fig. 38, a relationship graph generated by using the vegetation/farm field DB is displayed in the graph display area 201, with the attention node being the node of vegetation "Diospyros".

Further, on the graph display screen in Fig. 38, a ranking list of other vegetation ranked with respect to the vegetation "Diospyros" represented by the attention node is displayed in the list display area 202.

It should be noted that the ranking list can show not only vegetation but also the farm fields where the vegetation "Diospyros" represented by the attention node was observed.

In the ranking list in Fig. 38, "20120329ise" and "20110402-20110403oiso", which indicate the farm fields (and the dates) where the vegetation "Diospyros" represented by the attention node was observed, are displayed immediately after vegetation "Apis mellifera Linnaeus, 1758".

Fig. 39 is a diagram showing an example of a graph display screen generated with Gephi in a case where a farm field "20120329ise" where the vegetation "Diospyros" represented by the attention node was observed is selected as a new attention node in the relationship graph shown in Fig. 38.

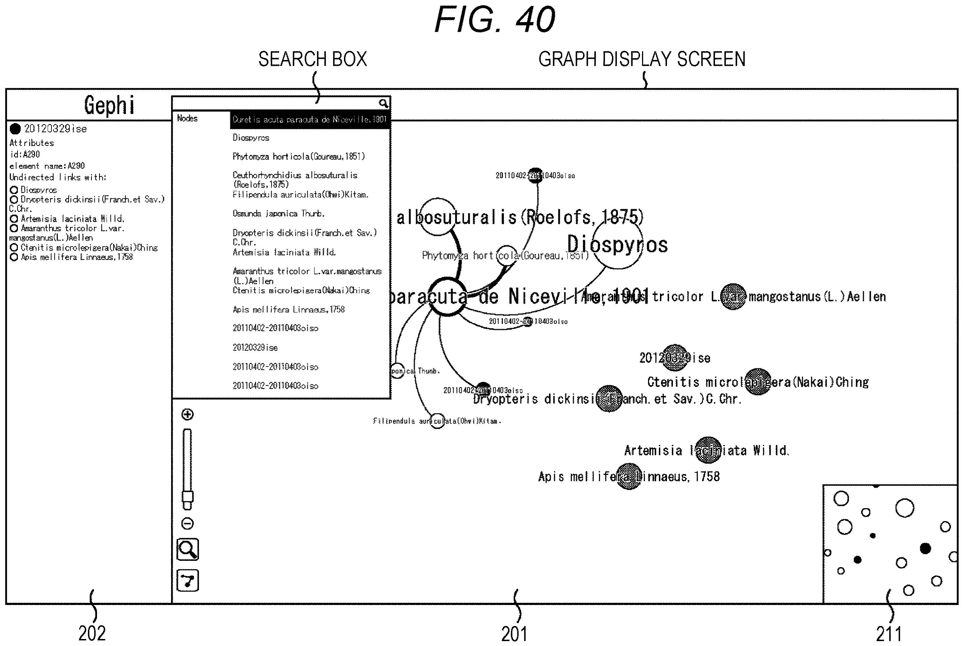

Fig. 40 is a diagram showing another example of a graph display screen generated with Gephi.

A search box is provided in an upper portion of Gephi. When the user clicks (or taps) on the search box, a list of the vegetation and the farm fields represented by nodes is displayed in the form of a pull-down menu. The user can select vegetation or a farm field from the list, and set the node of the selected vegetation or farm field as the attention node.

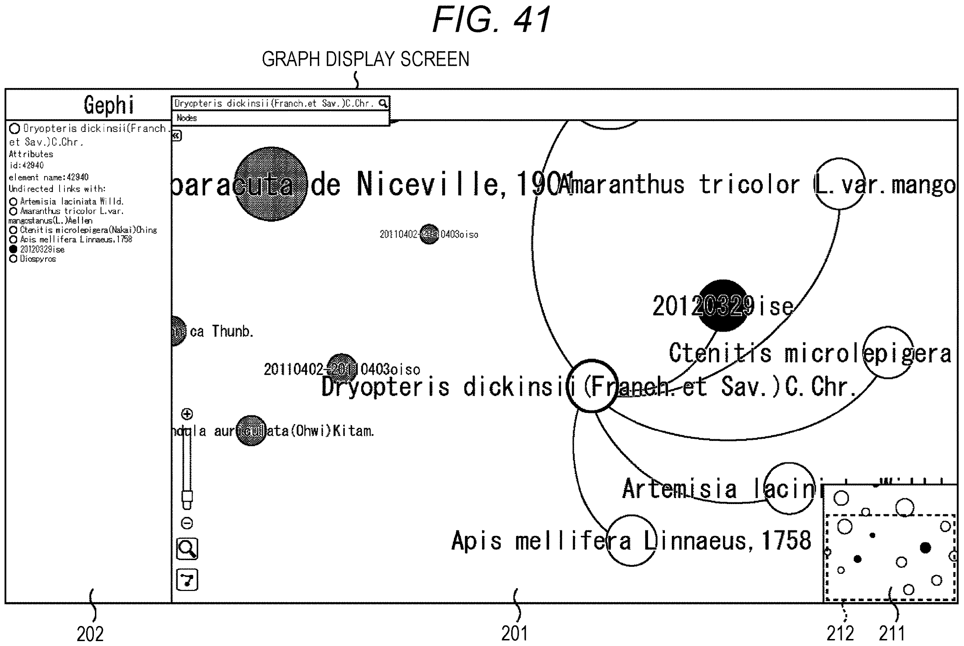

Fig. 41 is a diagram showing yet another example of a graph display screen generated with Gephi.

In Fig. 41, the display frame 212 is displayed so as to indicate the part of the relationship graph displayed in the graph display area 201, of the entire relationship graph displayed in the overview display area 211.

It should be noted that, as for the relationship graph, a user profile of the user of the terminal 12 is registered in the storage 33 of the terminal 12, for example, and the relationship graph can be changed on the basis of the user profile.

For example, in a case where it is possible to recognize from the user profile how many years the user has been involved in a species such as a vegetable (or the user's years of experience in agriculture, for example), (display of) the relationship graph can be changed on the basis of the years of experience.

Specifically, a relationship graph including the nodes of all the vegetation registered in the DB is displayed for a scholar-level user having many years of experience, for example. A relationship graph including only the nodes of the kinds of vegetation ranked in the top three (the kinds of vegetation with the three highest relationship scores) among the kinds of vegetation registered in the DB is displayed for a beginner-level user having only a few years of experience (or zero experience), for example. If (the nodes of) many kinds of vegetation are displayed for a beginner-level user, the user might get confused, and therefore, such confusion is prevented in the above manner.

Further, as for a relationship graph, it is possible to select the DB to be used in generating a relationship graph on the basis of a user profile.

Specifically, in a case where a user can be recognized as a housewife on the basis of her user profile, for example, the vegetation/recipe DB as a DB for housewives can be selected in generating a relationship graph. Further, in a case where a user can be recognized as a farmer on the basis of his/her user profile, for example, the vegetation/farm field DB as a DB for farmers can be selected in generating a relationship graph.

Further, in a case where a content profile related to the species of vegetation or the like registered in the DB to be used in generating a relationship graph exists in a site on the Internet 24, for example, the relationship graph can be changed on the basis of the content profile.

For example, in a case where the years of experience of a user can be recognized on the basis of his/her user profile, and the degrees of name recognition and scarcity of the vegetation registered in the DB can be recognized on the basis of the content profile, a relationship graph including only the nodes of selected kinds of vegetation with low degrees of name recognition and high degrees of scarcity among all the kinds of vegetation registered in the DB can be displayed for a scholar-level user having many years of experience . This is because a scholar-level user supposedly has little interest in vegetation with high degrees of name recognition and vegetation with low degrees of scarcity.

On the other hand, a relationship graph including only the nodes of selected kinds of vegetation with high degrees of name recognition and low degrees of scarcity among the kinds of vegetation registered in the DB can be displayed for a beginner-level user having only a few years of experience. This is because a beginner-level user supposedly has little interest in vegetation with low degrees of name recognition and vegetation with high degrees of scarcity.

Further, as for a relationship graph generated by using a DB in which species of vegetation or the like are registered, the relationships among the species, or relationship scores, can be corrected on the basis of a user profile and a content profile.

For example, in a case where the years of experience of a user can be recognized on the basis of his/her user profile, and the degrees of name recognition and scarcity of the vegetation registered in the DB can be recognized on the basis of the content profile, the relationship scores of the kinds of vegetation with low degrees of name recognition and high degrees of scarcity among all the kinds of vegetation registered in the DB can be corrected so that the relationship scores become higher for a scholar-level user having many years of experience.

In this case, the kinds of vegetation with low degrees of name recognition and high degrees of scarcity are ranked high in the ranking list, and are displayed in positions close to the attention node in the relationship graph.

For beginner-level user having only a few years of experience, on the other hand, relationship scores of the kinds of vegetation with high degrees of name recognition and low degrees of scarcity among the kinds of vegetation registered in the DB can be corrected so that those relationship scores become higher.

In this case, the kinds of vegetation with high degrees of name recognition and low degrees of scarcity are ranked high in the ranking list, and are displayed in positions close to the attention node in the relationship graph.

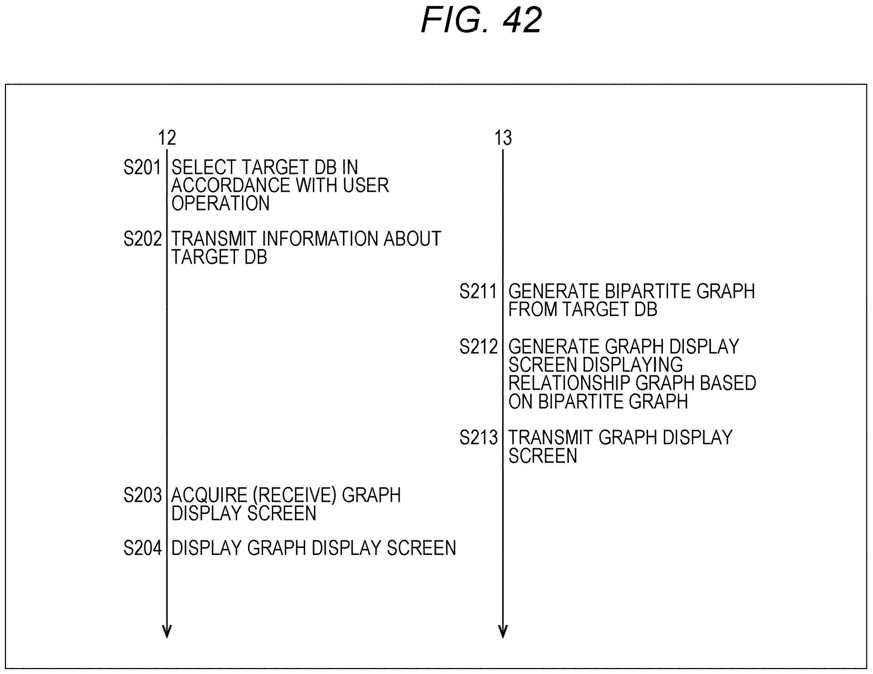

Fig. 42 is a flowchart for explaining an example process to display a graph display screen.

In step S201, the user of a terminal 12 operates the operating unit 34, to select from among DBs an attention DB that is the DB to be used in generating a relationship graph.

In step S202, the communication unit 40 of the terminal 12 transmits information about the attention DB (or information indicating the attention DB) to the server 13.

The communication unit 67 of the server 13 receives the information about the attention DB from the terminal 12. In step S211, the graph display control unit 72 accesses the attention DB, and generates a bipartite graph from the attention DB.

In step S212, the graph display control unit 72 generates a graph display screen displaying a relationship graph from the bipartite graph of the attention DB.

In step S213, the communication unit 67 transmits the graph display screen generated by the graph display control unit 72 to the terminal 12.

In step S203, the communication unit 40 of the terminal 12 receives the graph display screen from the server 13, and the acquiring unit 51 acquires the graph display screen.

In step S204, the display control unit 52 of the terminal 12 displays, on the display unit 35, the graph display screen acquired by the acquiring unit 51.

It should be noted that, in the above described case, the server 13 generates the graph display screen from the bipartite graph of the attention DB, and transmits the graph display screen to the terminal 12. However, the server 13 can transmit the bipartite graph of the attention DB to the terminal 12, and the acquiring unit 51 of the terminal 12 can generate the graph display screen from the bipartite graph transmitted from the server 13.

As described above, in a case where a relationship graph that is obtained from a DB in which species and information other than the species are associated with each other, indicates the relationships among the species on the basis of the other information, and is formed with nodes and links is displayed, the user obtains the relationships among the species as a knowledge, and can use the knowledge in ecosystem utilization such as synecoculture.

### <Association of Sensor Data with Symbols>

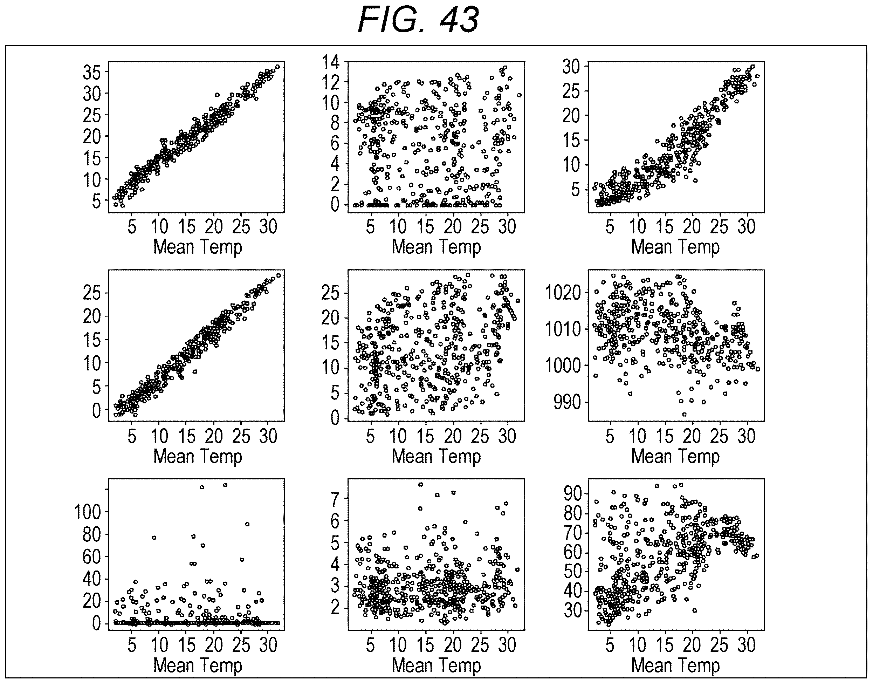

Fig. 43 is a diagram showing an example of sensor data obtained as a result of sensing performed with a sensor.

Specifically, Fig. 43 shows AMeDAS data that is sensor data sensed (observed) by AMeDAS.

In Fig. 43, the AMeDAS data include 10 kinds of data such as mean temperature, day length, and precipitation. FIG. 43 is a diagram in which the mean temperature among the 10 kinds of AMeDAS data and the other nine kinds of data are plotted on the abscissa axis and the ordinate axis, respectively. In Fig. 43, the nine kinds of data on the ordinate axis indicate, from upper left to right, maximum temperature (MaxTemp), day length (DayLength) , mean vapor pressure (MeanVaporPressure), minimum temperature (MinTemp), global solar radiation (GlobalSolarRadiation), mean atmospheric pressure (MeanAtmosphericPressure), daily precipitation (DailyPrecipitation), mean wind speed (MeanWindSpeed), and mean humidity (MeanHumidity), respectively.

As is apparent from Fig. 43, some of the combinations of mean temperature and the other nine kinds of data show clear correlations, while some do not show any correlations.

For example, in a case where a species s as an insect or vegetation was observed one day, the observed species s is associated with the AMeDAS data d of that day. Specifically, the name of the species s as a symbol indicating observation of the species s is registered in association with the AMeDAS data d, so that information indicating that the species s was observed when the weather conditions were as indicated by the AMeDAS data d can be stored.

However, there is a possibility that the species s is observed when the weather conditions are as indicated by AMeDAS data d', which is slightly different from the AMeDAS data d.

Therefore, where the symbol indicating observation of the species s is registered in association only with the AMeDAS data d, the species s is not associated firmly enough with the AMeDAS data indicating the weather conditions under which the species s is observed.

In view of this, using AMeDAS data, the associating unit 76 of the server 13 performs Voronoi division on the AMeDAS data, and registers the Voronoi area in the resultant Voronoi diagram in association with a symbol indicating observation of a species. In this manner, the symbol indicating observation of the species (or biodiversity data indicating observation of a species) is associated firmly enough with the AMeDAS data.

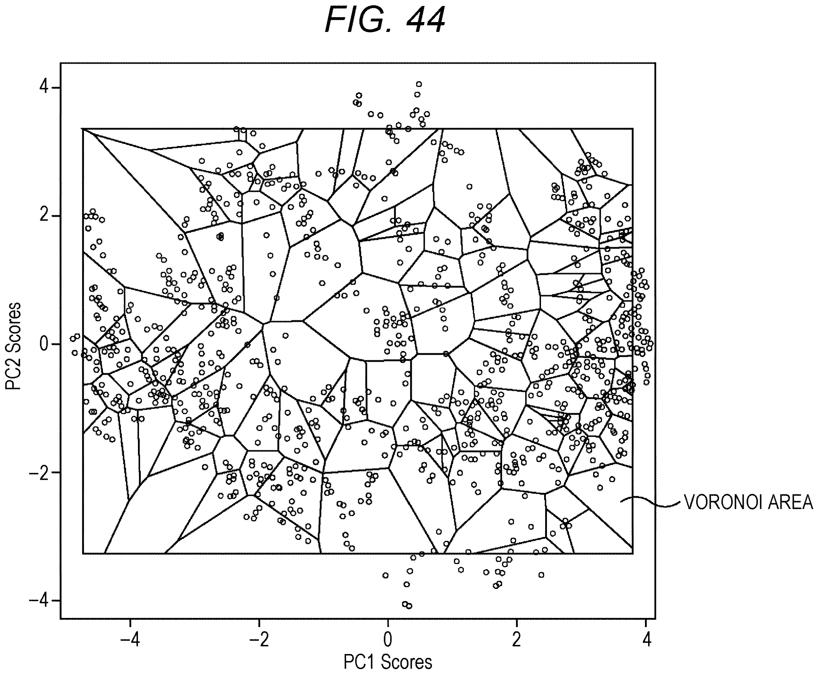

Fig. 44 is a diagram showing an example of a Voronoi diagram obtained as a result of Voronoi division using AMeDAS data.

In Fig. 44, the 10 kinds of AMeDAS data of each day of a year (365 days) is subjected to principal component analysis, and the AMeDAS data of the one year (represented by small white circles) is plotted on a two-dimensional plane, the abscissa axis indicating a first principal component, the ordinate axis indicating a second principal component.

Further, in Fig. 44, the Voronoi division is conducted, with the generatrices being the AMeDAS data of species observation days that are observation days on which the species was observed in one year.

Specifically, the user of the terminal 12 observes the species on 100 species observation days in one year, and the symbols indicating observation of the species are registered as observation values on the 100 species observation days in the storage 63 of the server 13.

The associating unit 76 of the server 13 acquires the AMeDAS data of one year from a site on the Internet 24, and conducts principal component analysis on the AMeDAS data. The associating unit 76 further plots the AMeDAS data of the species observation days of the AMeDAS data of one year on a two-dimensional plane in which the abscissa axis and the ordinate axis indicate the first principal component and the second principal component obtained as a result of the principal component analysis of the AMeDAS data, respectively. The associating unit 76 then performs Voronoi division on the two-dimensional plane, with the generatrices being the AMeDAS data of the species observation days.

Fig. 44 shows the Voronoi diagram obtained as a result of the above described Voronoi division.

According to the Voronoi diagram, the AMeDAS data corresponding to the Voronoi areas with respect to the generatrices can be associated with the symbols indicating the species the user observed on the species observation days on which the AMeDAS data corresponding to the generatrices was observed.

In the server 13, the associating unit 76 generates an AMeDAS data/species DB on the basis of the Voronoi diagram, and registers the AMeDAS data/species DB in the storage 63. In the AMeDAS data/species DB, the AMeDAS data corresponding to the Voronoi areas with respect to the generatrices is associated with the symbols indicating the species the user observed on the species observation days on which the AMeDAS data corresponding to the generatrices was observed.

In this manner, the AMeDAS data/species DB registered in the storage 63 can be used in generating the above described relationship graph. That is, with the AMeDAS data/species DB, it is possible to generate a relationship graph indicating the relationships between species, with the criteria being (the Voronoi areas corresponding to) the AMeDAS data associated with the species, for example.

Further, in the server 13, the analyzing unit 77 analyzes the Voronoi diagram, and provides the terminal 12 with various kinds of information useful in aiding ecosystem utilization.

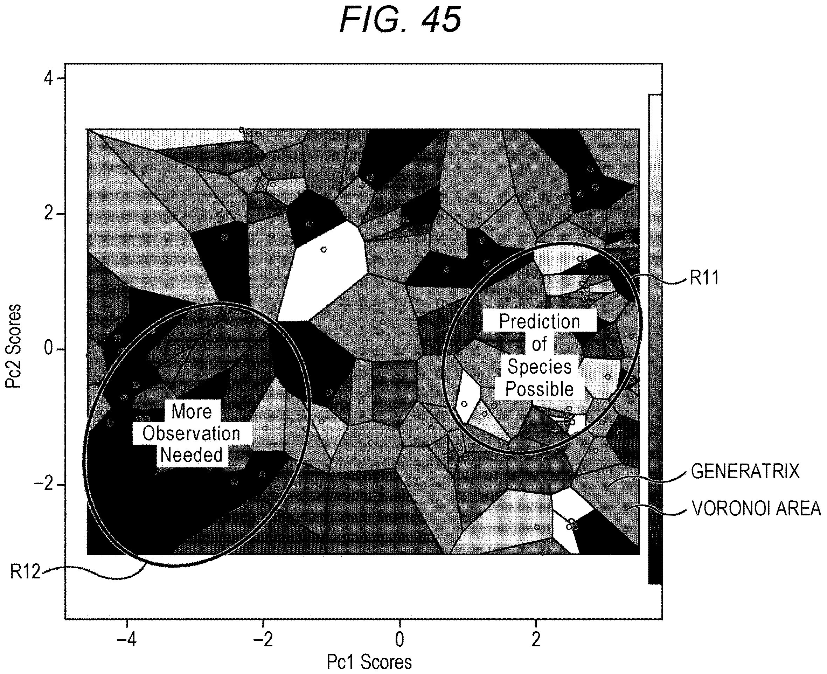

Fig. 45 is a diagram showing an example of a Voronoi diagram obtained as described above with reference to Fig. 44.

Fig. 45 is a Voronoi diagram similar to that shown in Fig. 44. However, while the AMeDAS data of one year is plotted in Fig. 44, only the AMeDAS data of the species observation days of the AMeDAS data of one year, or the AMeDAS data serving as the generatrices (represented by small white circles), is plotted in Fig. 45.

In Fig. 45, a whiter Voronoi area means that a larger number of species were observed by the user on the species observation day on which the AMeDAS data corresponding to the generatrix in the Voronoi area was observed.

The analyzing unit 77 generates a species list showing the species observed by the user on the species observation days on which the AMeDAS data serving as the generatrices in the respective Voronoi areas was observed.

On the basis of the species list, the analyzing unit 77 further detects a region R11 including many Voronoi areas where a certain species s is (often) observed, for example, and deduces that the AMeDAS data corresponding to region R11 is a niche for (the weather conditions for) the species s.

The analyzing unit 77 then generates an instructive message hinting that the species s is often observed on a day on which the AMeDAS data as a niche for the species s is observed, and causes the communication unit 67 to transmit the instructive message to the terminal 12.

In the terminal 12, the instructive message from the server 13 is presented (displayed on the display unit 35 or output as a sound from the speaker 36). In this case, an incentive for observing the species s can be given to the user of the terminal 12.

On the basis of the species list, the analyzing unit 77 also detects a region R12 including many Voronoi areas where only a small number (or none) of species are observed, for example.

The analyzing unit 77 then generates a request message requesting observation of species on a day of observation of the AMeDAS data corresponding to the region R12, and causes the communication unit 67 to transmit the request message to the terminal 12.

In the terminal 12, the request message from the server 13 is presented. In this case, the user of the terminal 12 can be prompted to observe species under the weather conditions for observation of the AMeDAS data corresponding to the region R12.

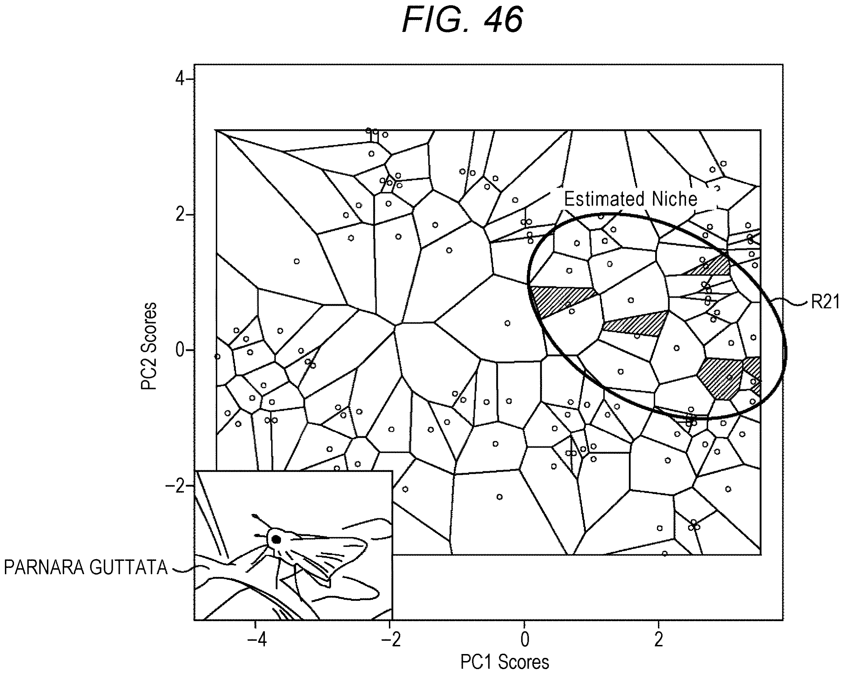

Fig. 46 is a diagram for explaining a first example of estimation of a niche for (the weather conditions for) a species based on a Voronoi diagram.

As described above with reference to Fig. 45, the analyzing unit 77 generates a species list showing the species observed by the user on the species observation days on which the AMeDAS data serving as the generatrices in the respective Voronoi areas was observed. On the basis of the species list, the analyzing unit 77 detects a region R21 including many Voronoi areas where a certain species s is often observed. In this manner, the AMeDAS data corresponding to the region R21 can be estimated as a niche for (the weather conditions for) the species s.

Fig. 46 is a Voronoi diagram similar to that shown in Fig. 45, and the region R21 represents (a result of estimation of) a niche for the species "Parnara guttata".

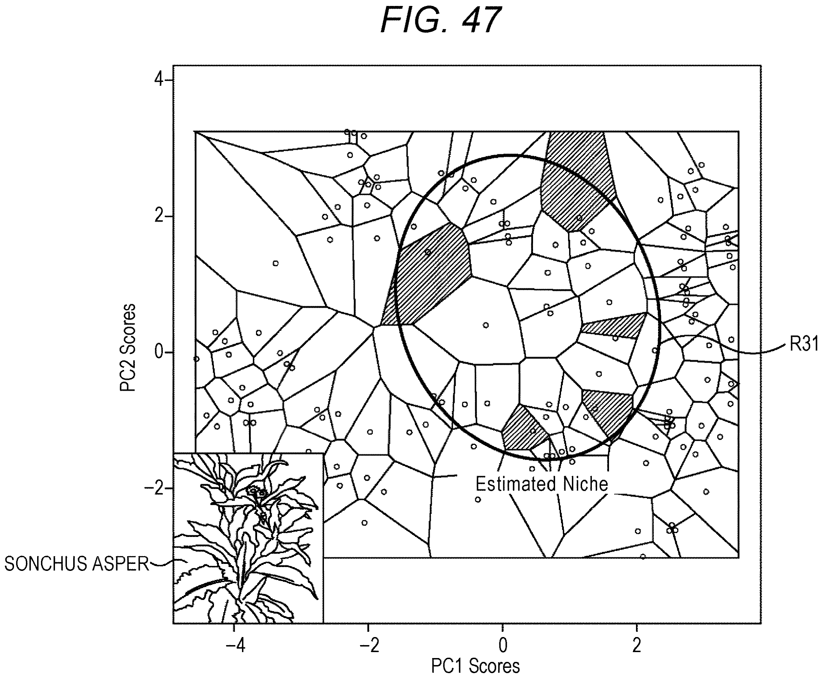

Fig. 47 is a diagram for explaining a second example of estimation of a niche for a species based on a Voronoi diagram.

Fig. 47 is a Voronoi diagram similar to that shown in Fig. 45, and a region R31 represents a niche for the species "Sonchus asper".

The analyzing unit 77 estimates niches for various species in the above described manner, and causes the communication unit 67 to transmit niche information indicating the niches to the user terminal 12, so that the niche information can be presented to the user.

The analyzing unit 77 can also predict co-occurrence of species (meaning that different species appear at the same time in this case), by estimating niches for various species on the basis of a Voronoi diagram in the above described manner .

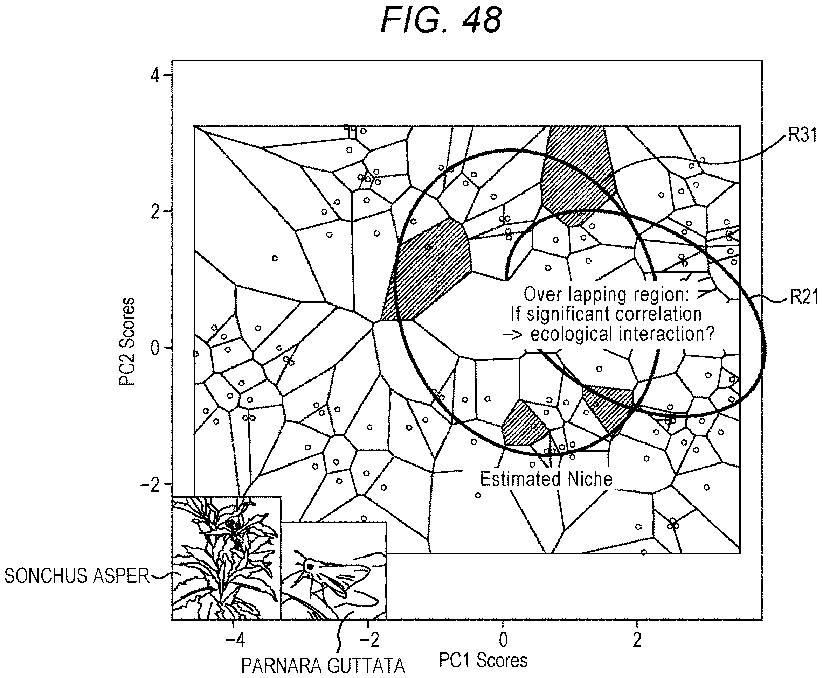

Fig. 48 is a diagram showing an example of prediction of co-occurrence of species on the basis of a Voronoi diagram.

Fig. 48 is a Voronoi diagram similar to that shown in Fig. 45, and the region R21 represents a niche for the species "Parnara guttata" shown in Fig. 46. Further, the region R31 represents a niche for the species "Sonchus asper" shown in Fig. 47.

In a case where there is an overlap region between the region R21 and the region R31, the analyzing unit 77 deduces that the AMeDAS data corresponding to the overlap region is the weather conditions for co-occurrence of the species "Parnara guttata" and "Sonchus asper".

The analyzing unit 77 then causes the communication unit 67 to transmit co-occurrence information indicating co-occurrence of the species "Parnara guttata" and "Sonchus asper", the AMeDAS data as the weather conditions for co-occurrence of the species "Parnara guttata" and "Sonchus asper", and the like, to the terminal 12. In this manner, the co-occurrence can be presented to the user.

It should be noted that, according to a Voronoi diagram, not only co-occurrence of species but also relationships such as predation and commensalism can be deduced from the above described overlap of regions representing niches or the like.

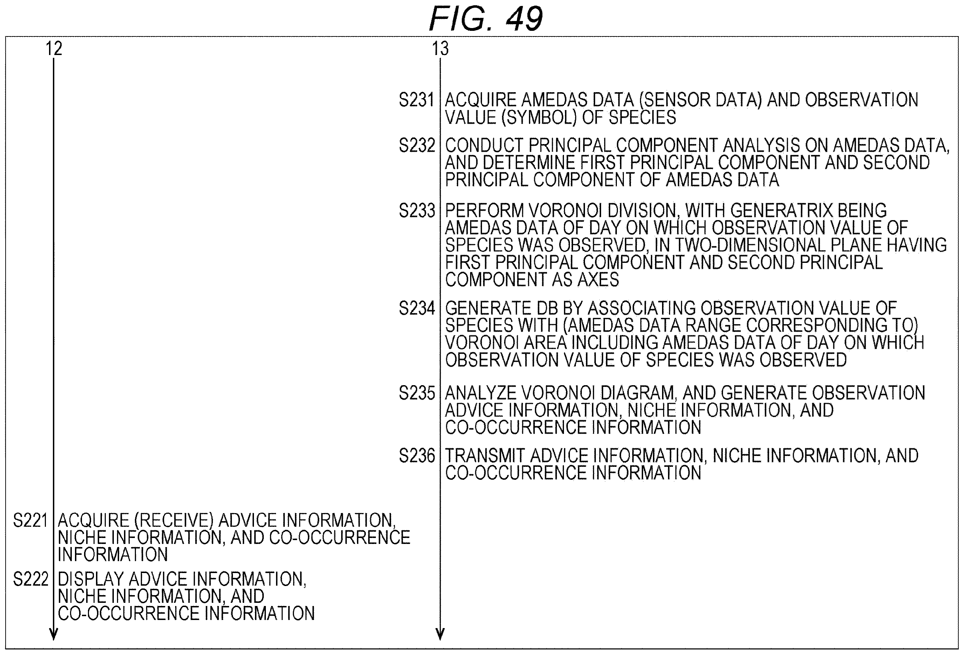

Fig. 49 is a flowchart for explaining an example process to generate and analyze a Voronoi diagram as described above.

In step S231, the associating unit 76 of the server 231 acquires AMeDAS data and observation values of species (symbols indicating the species) from the user of a terminal 12.

In step S232, the associating unit 76 conducts principal component analysis on the AMeDAS data, to determine a first principal component and a second principal component.

In step S233, the associating unit 76 plots the AMeDAS data of the species observation days on which the user observed the species, on a two-dimensional plane in which the abscissa axis and the ordinate axis indicate the first principal component and the second principal component obtained as a result of the principal component analysis of the AMeDAS data, respectively. The associating unit 76 then performs Voronoi division on the two-dimensional plane, with the generatrices being the AMeDAS data of the species observation days by the user.

In step S234, the associating unit 76 generates theAMeDAS data/species DB on the basis of the Voronoi diagram, and registers the AMeDAS data/species DB in the storage 63. In the AMeDAS data/species DB, the AMeDAS data corresponding to the Voronoi areas with respect to the generatrices is associated with the symbols indicating the species the user observed on the species observation days on which the AMeDAS data corresponding to the generatrices was observed.

In step S235, the analyzing unit 77 of the server 13 analyzes the Voronoi diagram, and generates advice information such as the above described instructive message and request message, niche information, and co-occurrence information.

In step S236, the analyzing unit 77 transmits the advice information, the niche information, and the co-occurrence information from the communication unit 67 to the terminal 12.

In the terminal 12, the communication unit 40 receives the advice information, the niche information, and the co-occurrence information from the server 13.

In step S221, the acquiring unit 51 acquires the advice information, the niche information, and the co-occurrence information from the communication unit 40.

In step S222, the display control unit 52 then displays, on the display unit 35, the advice information, the niche information, and the co-occurrence information acquired by the acquiring unit 51.

In the above manner, Voronoi division using AMeDAS data is performed on the AMeDAS data as sensor data, so that a symbol indicating observation of the species (or biodiversity data indicating observation of a species) is associated firmly enough with the AMeDAS data (integration of sensor data and symbols).

It should be noted that sensor data and symbols can be associated through the above described Voronoi division, the sensor data and the symbols being AMeDAS data and (the names of) species, respectively. Alternatively, any sensor data and any symbols can be used.

For example, Voronoi division can be applied to association of sensor data with symbols in a case where weights on frequency through an equalizer are turned into the sensor data, and the symbols indicate users' impressions (such as "soothing" and "irritating") of music via the equalizer. In this case, the weights on frequency through the equalizer can be automatically controlled on the basis of the association obtained as a result of the Voronoi division, so that users feel soothed by the music.

Voronoi division can also be applied to association of sensor data with symbols in a case where temperature and humidity are the sensor data, and the symbols indicate users' impressions (such as "cold", "damp", and "comfortable") in a room at the temperature and the humidity, for example. In this case, the air conditioner can be automatically controlled on the basis of the association obtained as a result of the Voronoi division, so that users feel "comfortable" at the temperature and the humidity.

Further, Voronoi division can be applied to association of sensor data with symbols in a case where the feature quantities of images of various objects taken with an image sensor are the sensor data, and the symbols indicate tags (such as "smile", "building", and "mountain") attached to the objects . The association can be used by a so-called "smile detector" in a digital camera that captures an image when the object shows a "smile", for example.

It should be noted that Voronoi division can be performed in a three-dimensional space, instead of a two-dimensional plane. Voronoi division in a three-dimensional space can be performed by using first through third principal components of AMeDAS data, for example.

### <Display of a Vegetation Distribution and Related Information>

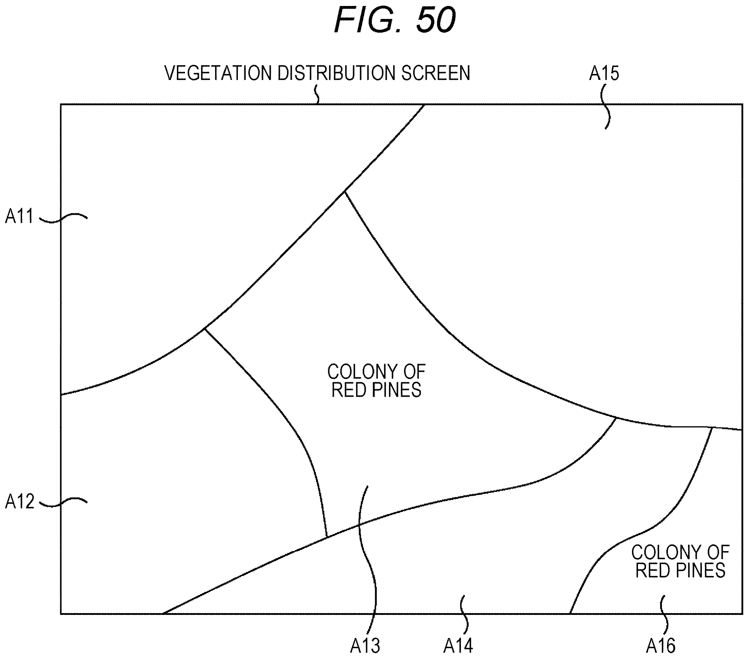

Fig. 50 is a diagram showing an example of display of a vegetation distribution screen displaying a vegetation distribution.

Useful plants picked from a natural ecosystem, such as edible vegetation and medicine vegetation, are valuable resources for human beings, and to search for such useful plants is to aid ecosystem utilization.

However, if the places where useful plants exist are made clear, there is a risk of overharvesting of the useful plants.

Therefore, the ecosystem utilization system shown in Fig. 1 provides a user interface that assists in the search for useful plants while preventing overharvesting.

Specifically, in the server 13, the vegetation distribution display control unit 78 acquires, from a site on the Internet 24, a vegetation distribution obtained through a vegetation survey or the like, and generates a vegetation distribution screen showing a predetermined range including the location of the terminal 12 in the vegetation distribution, for example.

The vegetation distribution display control unit 78 then causes the communication unit 67 to transmit the vegetation distribution screen to the terminal 12.

In the terminal 12, the communication unit 40 receives the vegetation distribution screen from the server 13, and the acquiring unit 51 acquires the vegetation distribution screen. The display control unit 52 then displays, on the display unit 35, the vegetation distribution screen acquired by the acquiring unit 51.

Fig. 50 shows an example of the vegetation distribution screen that is displayed on the display unit 35 of the terminal 12 in the above described manner.

In Fig. 50, the vegetation distribution on the vegetation distribution screen is divided into areas A11, A12, A13, A14, A15, and A16, and colonies of red pines are distributed in the areas A13 and A16.

It should be noted that, although the vegetation distribution screen in Fig. 50 indicates that the areas A13 and A16 are areas of colonies of red line, the indication that the areas A13 and A16 are areas of colonies of red pines is displayed when the user designates the area A13 or A16 by clicking (or tapping) on the area A13 or A16.

The vegetation distribution screen can also display a track of movement of the user of the terminal 12.

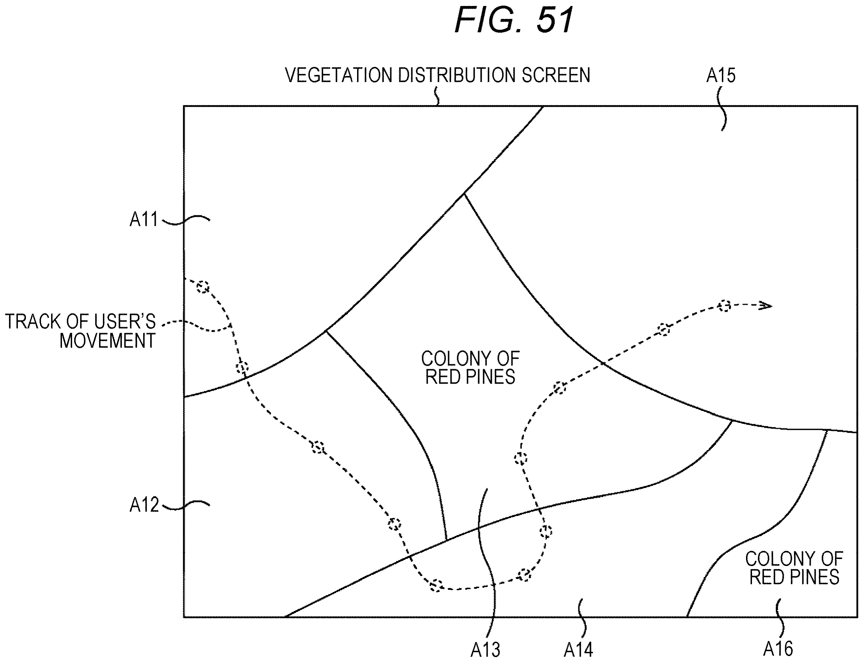

Fig. 51 is a diagram showing an example of a vegetation distribution screen displaying a track of movement of a user.

As a track of movement of a user is displayed on the vegetation distribution screen, the user can easily revisit a vegetation distribution place he/she visited in the past.

At any place within the vegetation distribution, a user can also submit (input) any information as posted information, using a terminal 12. Posted information submitted by a user U using a terminal 12 is transmitted from the terminal 12 to the server 13, and is associated with a vegetation distribution in the server 13, the posted information being regarded as information related to the vegetation distribution. Specifically, in the server 13, the posted information submitted by the user U can be associated with the user U and the location of the submission of the posted information in the vegetation distribution.

In a case where the user U has found Japanese privet in a place (location) P where a colony of red pines exists in the area A13, for example, when the user U submits "Japanese privet" as posted information using the terminal 12, the server 13 associates the posted information "Japanese privet" with the user U and the place P where there is a colony of red pines in the area A13.

Here, in the description below, posted information submitted by the user U will be also referred to as self-posted information, and posted information submitted by another user U' will be also referred to as others' posted information. For another user U' , posted information submitted by the user U' is self-posted information, and posted information submitted by the user U is others' posted information.

In the terminal 12, posted information associated with a vegetation distribution by the server 13 can be displayed together with the vegetation distribution, or a vegetation distribution screen reflecting the posted information can be displayed.

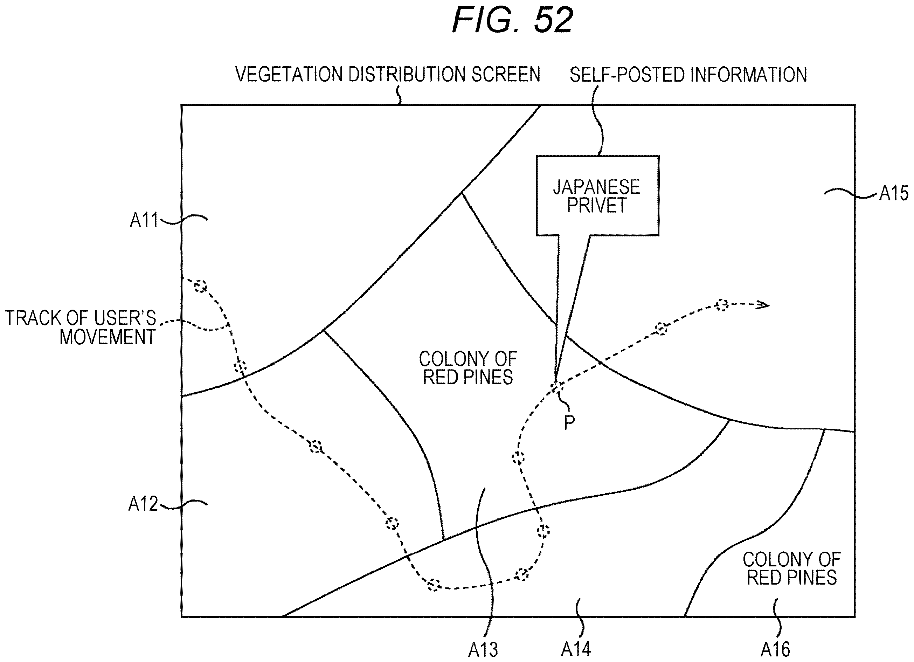

Fig. 52 is a diagram showing an example of display of a vegetation distribution screen reflecting posted information.

For example, a user U submits posted information "Japanese privet" using a terminal 12 in a place P where a colony of red pines exists in the area A13, and the server 13 associates the posted information "Japanese privet" with the user U and the place P where there is a colony of red pines in the area A13.

In this case, when the user U requests display of the vegetation distribution near the area A13 by operating the terminal 12, for example, the server 13 causes the terminal 12 to display a vegetation distribution screen reflecting the self-posted information "Japanese privet" of the user U in such a manner that the place P of the submission of the self-posted information "Japanese privet" can be clearly seen on the vegetation distribution screen displaying a track of movement of the user U shown in Fig. 51, for example.

Fig. 52 shows an example of display of a vegetation distribution screen reflecting the self-posted information "Japanese privet" of the user U in such a manner that the place P of the submission of the self-posted information "Japanese privet" can be clearly seen.

Looking at the vegetation distribution screen displayed on the terminal 12, the user U can easily recognize the place P of the Japanese privet, and revisit the place P to pick the Japanese privet.

Meanwhile, in a case where a vegetation distribution screen reflecting the self-posted information "Japanese privet" submitted by the user U in such a manner that the place P of the posted information "Japanese privet" is clearly seen is displayed on the terminal 12 of users U' other than the user U having submitted the self-posted information "Japanese privet", users other than the user U might flock to the place P, and overharvest the Japanese privet growing in the place P.

Since the posted information "Japanese privet" is associated with (the place P of) the colony of red pines in the area A13 when the user U submits the posted information "Japanese privet", it is possible to recognize the fact that Japanese privet has been found in a colony of red pines. On the basis of such a fact, it is possible to assume that red pines and Japanese privet are in a symbiotic relationship, and that Japanese privet is easily found in a colony of red pines . Such hypotheses are useful in searching for or growing Japanese privet.

In the user terminal 12 of a user U' other than the user U, a vegetation distribution screen reflecting the user U's posted information "Japanese privet", which is others' posted information for the user U' , can be displayed in such a manner that the place P of the submission of the posted information "Japanese privet" is not clear, for example.

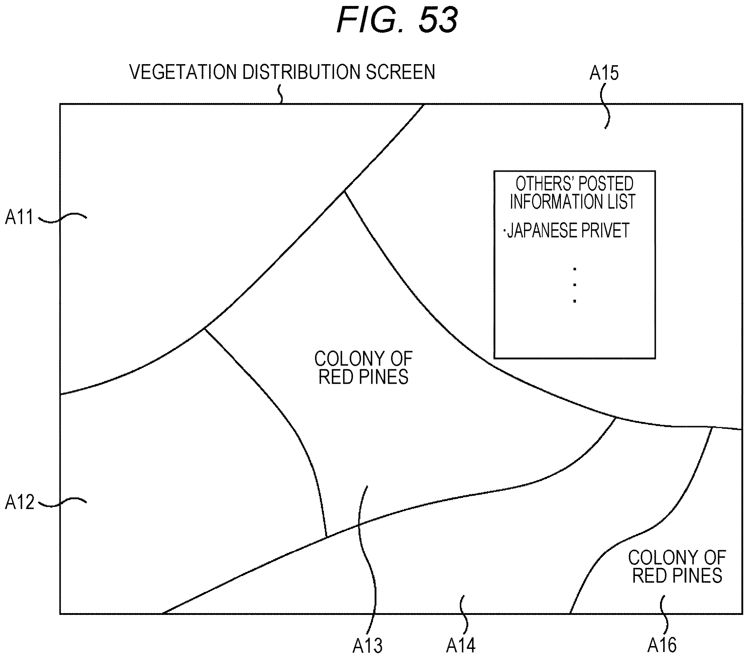

Fig. 53 is a diagram showing another example of display of a vegetation distribution screen reflecting posted information.

In the server 13, auser U's posted information "Japanese privet" is currently associated with the user U and the place P where a colony of redpines exists in the area A13, for example . Further, a user U' other than the user U has not submitted (input) posted information.

In this case, when the user U' requests display of the vegetation distribution near the area A13 by operating a terminal 12, the server 13 causes the terminal 12 to display the vegetation distribution screen shown in Fig. 50, for example.

When the user U' further designates the area A13 and A16 of colonies of red pines, for example, the server 13 causes the terminal 12 of the user U' to display an others' posted information list on a vegetation distribution screen. The others' posted information list shows others' posted information associated with places within the areas of colonies of red pines in the vegetation distribution.

Fig. 53 shows an example of display of a vegetation distribution screen displaying an others' posted information list.

In a case where the user U's posted information "Japanese privet" is associated with the user U and the place P of a colony of redpines in the area A13 by the server 13 as described above, when a user U', who is not the user U, designates the area A13 or A16 of a colony of red pines, a list of others' posted information associated with the places of colonies of red pines, or others' posted information including the user U's posted information "Japanese privet" associated with the place P of a colony of red pines, is displayed on a vegetation distribution screen.

The user U' looks at the others' posted information list displayed on the vegetation distribution screen by designating the area A13 or A16 of a colony of red pines. By doing so, the user U' can recognize the fact that Japanese privet has been found in a colony of red pines, but is unable to know the specific place where Japanese privet has been found.

On the basis of such a fact, it is possible to assume that red pines and Japanese privet are in a symbiotic relationship, and that Japanese privet is easily found in a colony of red pines, as described above. Such hypotheses are useful in searching for or growing Japanese privet.

In this case, an incentive for searching for Japanese privet or an incentive for planting Japanese privet in a place where red pines exist is given to the user U' . As a result, searching for Japanese privet and growing Japanese privet are facilitated, while overharvesting of Japanese privet is prevented.

It should be noted that the list of others' posted information can include not only others' posted information (such as posted information "Japanese privet"), but also the weather conditions such as the temperature and the humidity in the place of the submission when the others' posted information was submitted (such as the place P where the posted information "Japanese privet" was submitted), for example.

In this case, a user U' who has looked at the list of others' posted information can search for or grow Japanese privet, taking the weather conditions into consideration. Specifically, the user U' can search for or grow Japanese privet in an area under weather conditions similar to the weather conditions in the place P where Japanese privet has been found. Such an area is located in an area of a colony of red pines and is included in the list of others' posted information.

The server 13 can also cause the terminal 12 to display an area under weather conditions similar to some or all of the weather conditions in the place P among the areas in the vegetation distribution, as an area under weather conditions similar to the weather conditions under which Japanese privet has been found.

Further, the server 13 can cause the terminal 12 to display advice on whether some other place is suitable for growing Japanese privet on the basis of the degrees of similarity between the weather conditions in the place P and the weather conditions in the other places.

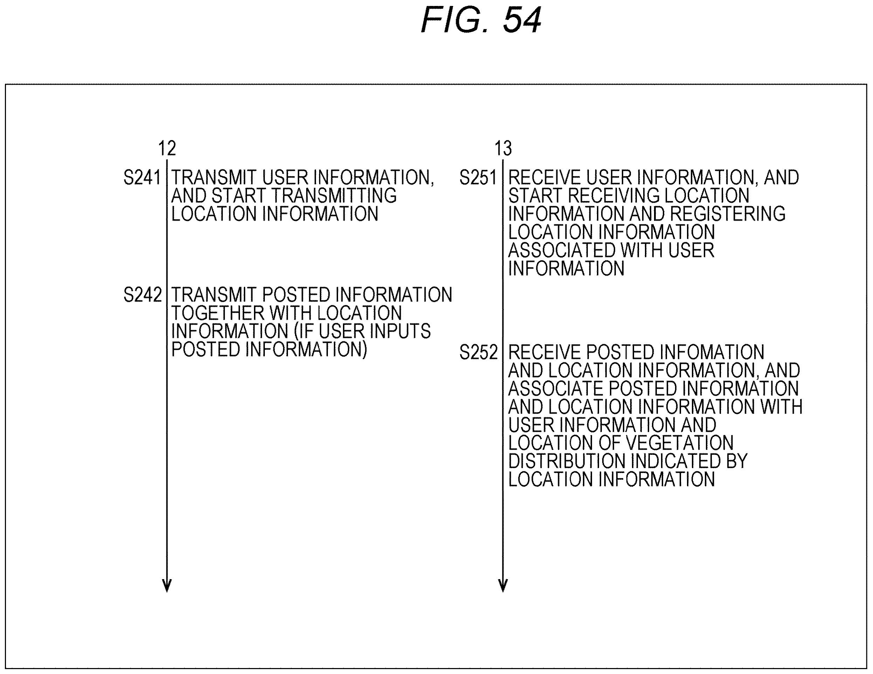

Fig. 54 is a flowchart for explaining an example process to associate posted information submitted by a user with a vegetation distribution.

In step S241, the communication unit 40 of a terminal 12 transmits user information for identifying the user of the terminal 12 (such as a user ID or a password) to the server 13, and starts transmitting, to the server 13, location information indicating the location of the terminal 12 detected by the location detecting unit 39.

It should be noted that the user information about the user of the terminal 12 is registered in the storage 33 of the terminal 12, or is input by the user operating the operating unit 34, for example.

In step S251, the communication unit 67 of the server 13 receives the user information from the terminal 12, and starts receiving the location information also from the terminal 12.

Further, the vegetation distribution display control unit 78 of the server 13 registers the user information received by the communication unit 67 in the storage 63. Further, the vegetation distribution display control unit 78 starts registering, in the storage 63, the location information the communication unit 67 has started receiving, in association with the user information.

In this manner, the server 13 registers the location information associated with the user information, so that the tracks of movement of the user identified by the user information is stored.

After that, when the user of the terminal 12 inputs posted information, or when the user inputs a character string as posted information by operating the operating unit 34 or takes a photograph as posted information with the camera 37, for example, the communication unit 40 in step S242 transmits, to the server 13, the posted information and the location information detected by the location detecting unit 39 at the time of the input of the posted information.

In step S252, the communication unit 67 of the server 13 registers, in the storage 63, the location information and the posted information transmitted from the terminal 12 in association with the user information about (the user of) the terminal 12. In this manner, the posted information from the terminal 12 is associated with the location in the vegetation distribution indicated by the location information at the time of the submission of the posted information, and the user information about the user terminal 12.

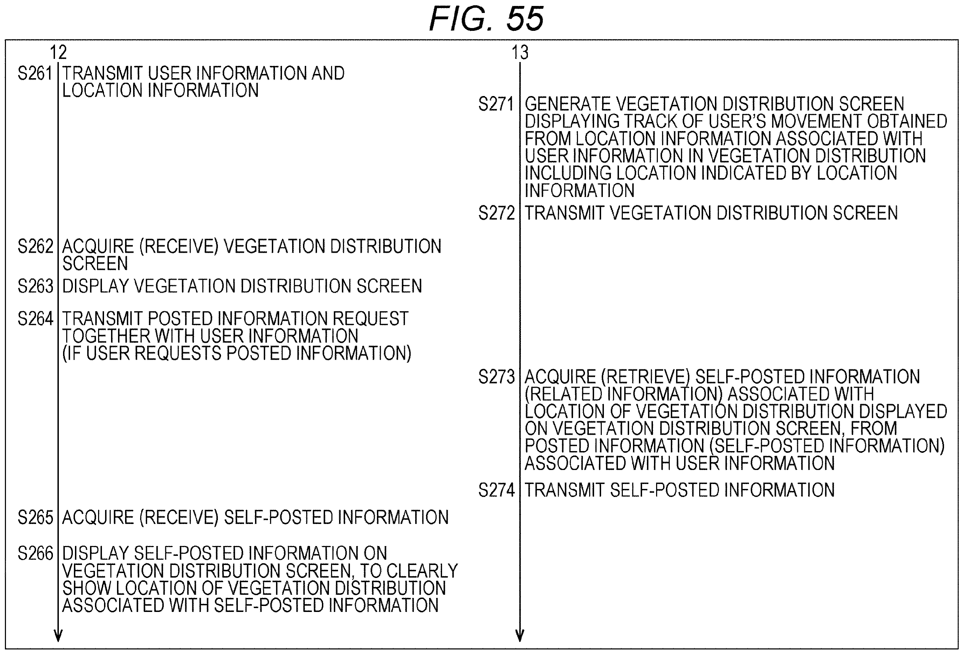

Fig. 55 is a flowchart for explaining an example process to display a vegetation distribution screen reflecting self-posted information.

In step S261, the communication unit 40 of the terminal 12 transmits, to the server 13, the user information about the terminal 12 and location information indicating the current location detected by the location detecting unit 39.

The communication unit 67 of the server 13 receives the user information and the location information from the terminal 12. InstepS271, the vegetation distribution display control unit 78 generates a vegetation distribution screen as shown inFig. 51, for example. On the vegetation distribution screen, the track of movement of the user determined from the location information that is associated with the user information from the terminal 12 and is registered in the storage 63 is displayed in the vegetation distribution including the location (current location) indicated by the location information from the terminal 12.

In step S272, the communication unit 67 of the server 13 transmits the vegetation distribution screen generated by the vegetation distribution display control unit 78, to the terminal 12.

In step S262, the acquiring unit 51 of the terminal 12 acquires the vegetation distribution screen from the server 13, by causing the communication unit 40 to receive the vegetation distribution screen.

In step S263, the display control unit 52 of the terminal 12 displays, on the display unit 35, the vegetation distribution screen acquired by the acquiring unit 51.

After that, when the user of the terminal 12 requests self-posted information by operating the operating unit 34, the communication unit 40 in step S264 transmits the request for self-posted information, together with the user information about the terminal 12, to the server 13.

The communication unit 67 of the server 13 receives the posted information request and the user information from the terminal 12. In step S273, the vegetation distribution display control unit 78 acquires the self-posted information of the user of the terminal 12 from the posted information registered in the storage 63, by searching for the self-posted information as related information associated with the vegetation distribution. Here, the self-posted information is associated with the user information from the terminal 12 and the location information indicating a location in the vegetation distribution displayed on the vegetation distribution screen generated in step S271.

In step S274, the vegetation distribution display control unit 78 of the server 13 transmits the self-posted information of the user of the terminal 12 acquired in step S273, together with the location information associated with the self-posted information, from the communication unit 67 to the terminal 12.

In step S265, the acquiring unit 51 of the terminal 12 acquires the self-posted information and the location information from the server 13, by causing the communication unit 40 to receive the self-posted information and the location information.

In step S266, the display control unit 52 displays the self-posted information acquired by the acquiring unit 51 on the vegetation distribution screen, which is displayed on the display unit 35 in step S263, in such a manner that the location indicated by the location information acquired by the acquiring unit 51 is clearly seen. In this manner, the vegetation distribution screen reflecting the self-posted information submitted by the user of the terminal 12 is displayed in such a manner that the place P of the submission of the self-posted information is clearly seen, as shown in Fig. 52.

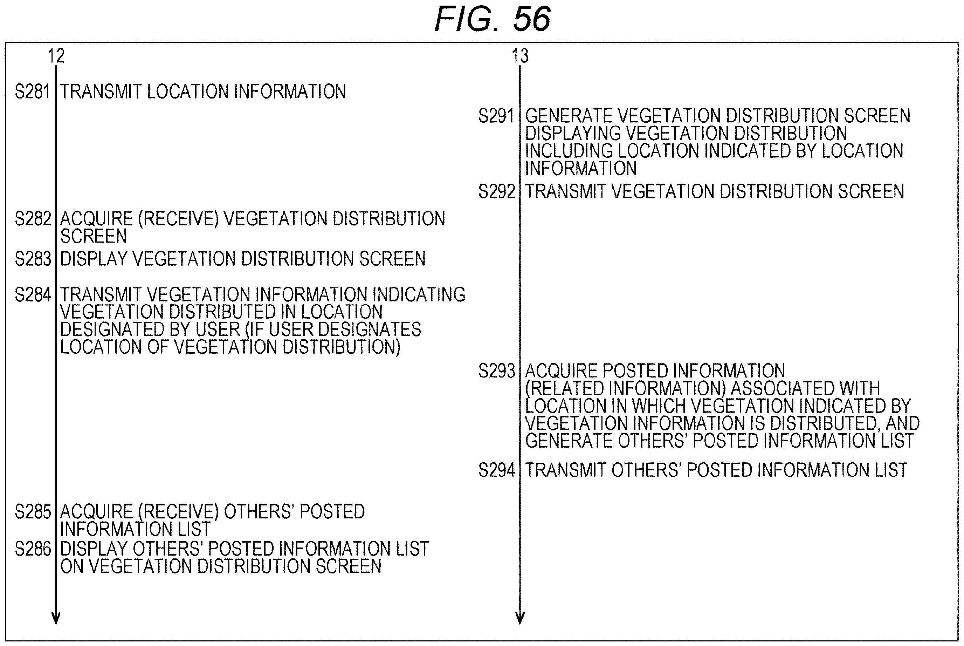

Fig. 56 is a flowchart for explaining an example process to display a vegetation distribution screen reflecting a list of others' posted information.

In step S281, the communication unit 40 of the terminal 12transmits, to the server 13, location information indicating the current location detected by the location detecting unit 39.

The communication unit 67 of the server 13 receives the location information from the terminal 12. In step S291, the vegetation distribution display control unit 78 generates a vegetation distribution screen as shown in Fig. 50, for example. The vegetation distribution screen displays the vegetation distribution including the location (current location) indicated by the location information from the terminal 12.

In step S292, the communication unit 67 of the server 13 transmits the vegetation distribution screen generated by the vegetation distribution display control unit 78, to the terminal 12.

In step S282, the acquiring unit 51 of the terminal 12 acquires the vegetation distribution screen from the server 13, by causing the communication unit 40 to receive the vegetation distribution screen.

In step S283, the display control unit 52 of the terminal 12 displays, on the display unit 35, the vegetation distribution screen acquired by the acquiring unit 51.

After that, when the user of the terminal 12 operates the operating unit 34 and designates a predetermined location in the vegetation distribution displayed on the vegetation distribution screen, the communication unit 40 in step S284 transmits, to the server 13, vegetation information indicating the vegetation distributed in the location designated by the user.

The communication unit 67 of the server 13 receives the vegetation information from the terminal 12. In step S293, the vegetation distribution display control unit 78 acquires, from the others' posted information registered in the storage 63, the others' posted information associated with the location information indicating a location in the vegetation distribution in which the vegetation indicated by the vegetation information from the terminal 12 is distributed. In doing so, the vegetation distribution display control unit 78 searches for the others' posted information as related information associated with the vegetation distribution.

The vegetation distribution display control unit 78 further generates a list of others' posted information, the list showing others' posted information retrieved from the others' posted information registered in the storage 63. In step S294, the communication unit 67 transmits the list of others' posted information to the terminal 12.

In step S285, the acquiring unit 51 of the terminal 12 acquires the list of others' posted information from the server 13, by causing the communication unit 40 to receive the list.

In step S286, the display control unit 52 displays the others' posted information list acquired by the acquiring unit 51 on the vegetation distribution screen, which is displayed on the display unit 35 in step S283, in such a manner that the locations of the submission of the others' posted information included in the others' posted information list are not seen. That is, the display control unit 52 displays the others' posted information list at any location on the vegetation distribution screen, which is displayed on the display unit 35 in step S283, or at a predetermined location, for example. Inthis manner, a vegetation distribution screen reflecting the others' posted information list is displayed in such a manner that the locations of submission of the others' posted information included in the others' posted information list are not seen, as shown in Fig. 53.

### <Evaluation of Ecosystems>

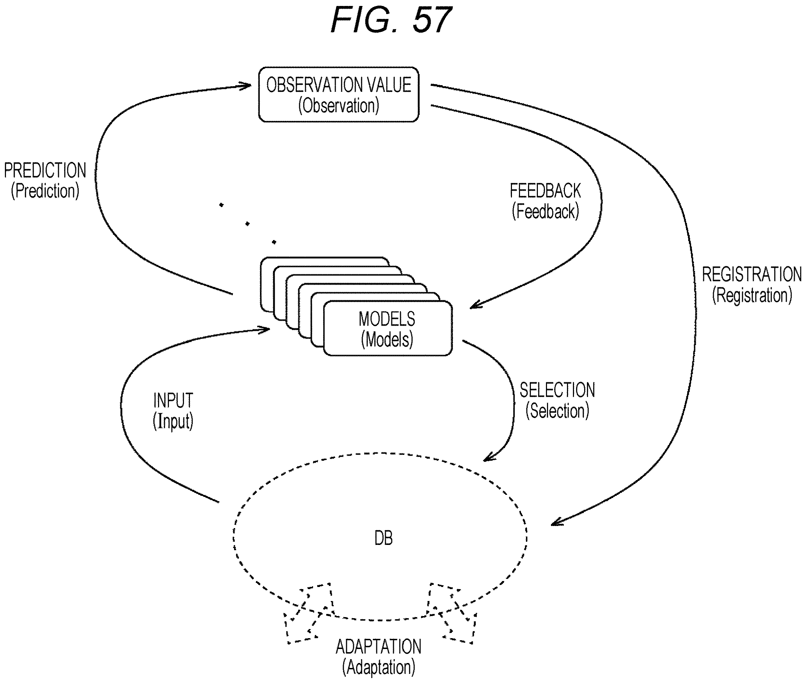

Fig. 57 is a diagram for explaining evaluation to be performed by the evaluating unit 73 of the server 13 on the ecosystems in utilization areas.

Observation values obtained as a result of various kinds of observation (sensing) performed by users and the sensor device (s) 11 (such as a photograph that is taken with the camera 37, text that is input by a user operating the operating unit 34, and sensor data sensed by a sensor device 11) are registered, together with the observation conditions at the times of acquisition of the observation values, in a DB such as the synecoculture DB (Fig. 5) in the storage 63 of the server 13.

So as to realize evaluation of ecosystems by various evaluation methods, the evaluating unit 73 has more than one model, or various models of evaluation methods that vary in observation conditions for observation values to be used in evaluation and in definition of evaluation scores to be used in evaluation. The observation conditions may be that insects are to be observed after the soil in a predetermined range in a predetermined place is dug to a predetermined depth, and that any species are to be observed by a predetermined number of persons in a predetermined range in a predetermined place, for example.

The models may be models to be used in machine learning, such as the N-gram, hidden markov models (HMM), neural nets, and other various regression models.

The evaluating unit 73 supplies observation values registered in a DB as inputs to the respective models, and predicts observation. The evaluating unit 73 further receives feedback of actual observation values, and evaluates predicted observation values obtained through prediction of observation using the models, by performing Bayes estimation or the like using the actual observation values.

On the basis of a result of the evaluation of the predicted observation values, the evaluating unit 73 further determines the degrees of significance of the models and the observation values (including the observation conditions), or the degrees of prediction accuracy of the predicted observation values obtained from the model in response to the input of the observation values, for example.

The evaluating unit 73 selects significant models (models with high degrees of prediction accuracy), and deletes insignificant models.

The evaluating unit 73 also selects, from the DB, significant observation values that will contribute to increase in prediction accuracy of predicted observation values.

The evaluating unit 73 further deletes the items (variables) of the insignificant observation values from the DB, so that the DB is adapted to register only the items of the significant observation value.

The evaluating unit 73 evaluates ecosystems in the utilization areas by inputting significant observation values to significant models, and transmits a result of the evaluation from the communication unit 67 to the terminal 12 as necessary. In this manner, the result of the evaluation can be presented to the user.

As described above, so as to realize evaluation of ecosystems by various evaluation methods, the evaluating unit 73 has more than one model. Accordingly, users can perform observation, without limiting observation conditions, and evaluate ecosystems by obtaining evaluation scores suitable for the current states of the ecosystems in the utilization areas from the observation values obtained through the observation. In other words, the evaluating unit 73 can dynamically evaluate ecosystems, or can perform so-called dynamical assessment. In dynamical assessment, existing environmental assessments can be realized by limiting models, observation conditions (observation methods), and methods of determining scores (score systems). Therefore, dynamical assessment involves existing environmental assessments, and is an assessment expanded from the existing environmental assessments.

Also, with the evaluating unit 73, the items of significant observation values can be recognized, and it is possible to advise a user to perform observation under observation conditions for obtaining such significant observation values.

### <Advice Based on Reliability of Observation Values>

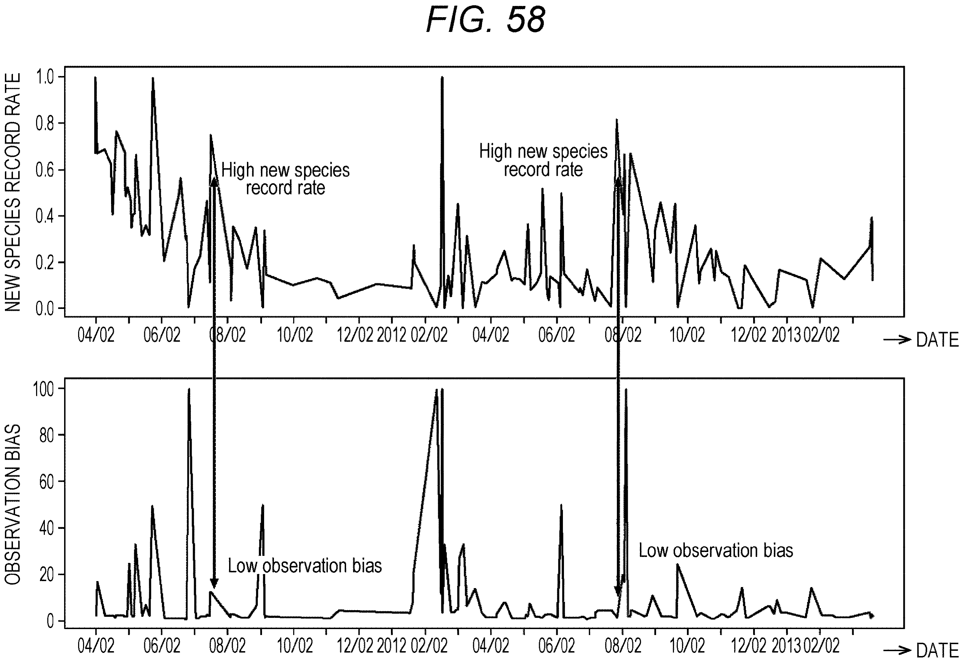

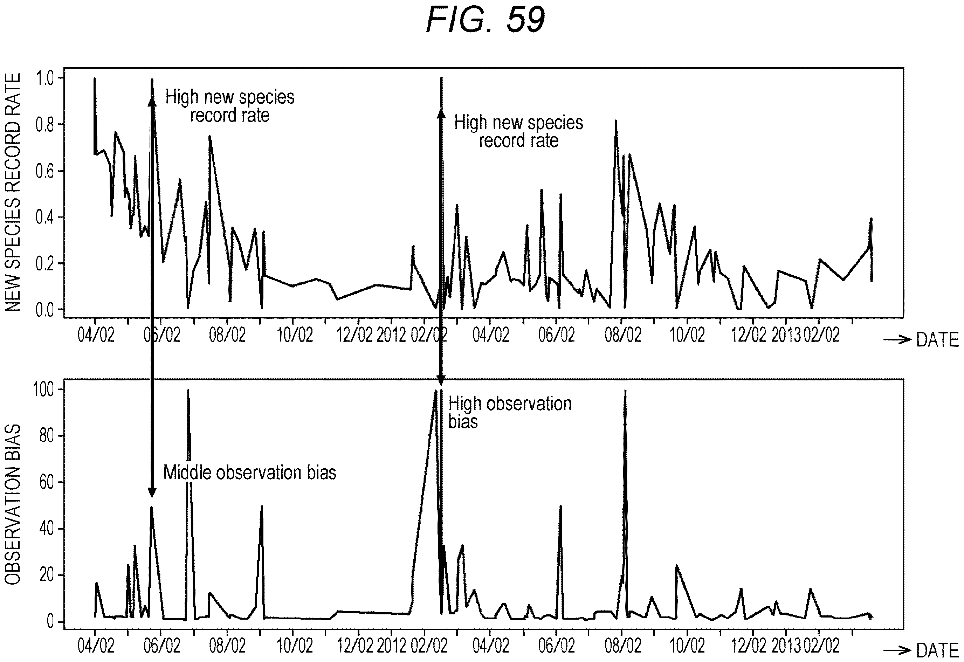

Figs. 58 and 59 are diagrams showing examples of degrees of reliability of observation values.

In obtaining necessary information for aiding utilization of ecosystems in the utilization areas, it is necessary to perform various kinds of observation on the ecosystems in the utilization areas, and collects reliable observation values.

In view of this, the reliability calculating unit 74 of the server 13 calculates the degree of reliability of the observation values that were obtained by users observing ecosystems and are transmitted from the terminals 12 (the observation values being (the names of) the species observed by the users, for example). In accordance with the degree of reliability calculated by the reliability calculating unit 74, the advice generating unit 75 generates advice on observation of the ecosystems, and transmits the advice to the terminals 12 to present to the users.

Figs. 58 and 59 show examples of the new species record rates and observation bias with respect to the species observed in the farm fields in the utilization areas.

Here, in Figs. 58 and 59, the abscissa axis indicates the dates in one year, which is a predetermined period during which species observation was conducted, for example. The ordinate axis indicates the new species record rate or the observation bias on each of the observation days on which observation was conducted by users during the one year.

It should be noted that, here, the species observed by users are divided into new species and existing species. A new species is a species that has not been observed since the start of the one year, which is the predetermined period indicated by the abscissa axis. An existing species is a species that has been observed since the start of the one year, which is the predetermined period indicated by the abscissa axis.

A new species record rate is determined by dividing the total number of new species observed by users on an observation day by the total number of species observed by users on the observation day.

Observation bias indicates the degrees of fluctuation reflected by the respective observation values when there is fluctuation in observation performed by users. For example, observation bias may be the reciprocal of the total number of species observed by users on an observation day.

The degree of reliability of an observation value can be a value corresponding to observation bias (or a value corresponding to the total number of species observed by users), for example.

In a case where a value corresponding to observation value is used as the degree of reliability of an observation value, fluctuation in observation values is smaller where the observation bias is low. Therefore, the reliability of the observation value becomes higher.

In Fig. 58, the observation values observed on the observation days indicated by arrows have low observation bias, and accordingly, have a high degree of reliability.

In Fig. 59, the observation values observed on the observation days indicated by arrows have high observation bias, and accordingly, have a low degree of reliability.

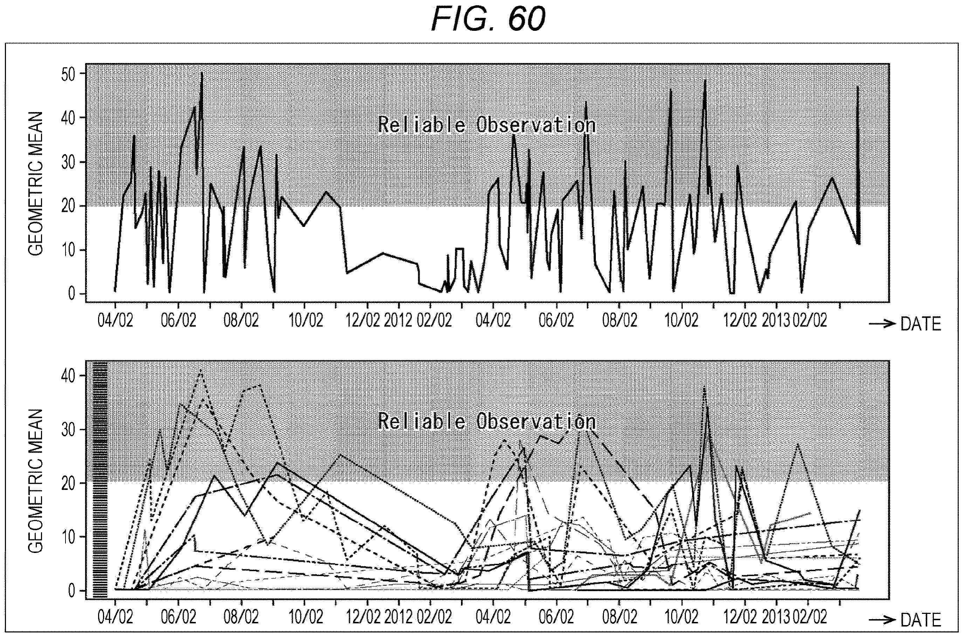

Fig. 60 is a diagram showing another example of degrees of reliability of observation values.

Specifically, Fig. 60 shows an example of the geometric mean between the number of new species and the number of existing species among the species observed in farm fields in the utilization areas.

It should be noted that, in Fig. 60, the abscissa axis indicates the dates in one year during which species observation was conducted, and the ordinate axis indicates the geometric mean between the number of new species and the number of existing species among the species observed on each observation day on which observation was conducted by users during the one year.

Further, the upper half of Fig. 60 indicates the geometric mean among all the farm fields in the utilization areas, and the lower half of Fig. 60 indicates the geometric mean in each of the farm field in the utilization areas.

The degree of reliability of observation values may be a value corresponding to a geometric mean including the above described geometric mean between the number of new species and the number of existing species, for example.

In a case where the geometric mean between the number of new species and the number of existing species is used as a degree of reliability of observation values, the reliability of the observation values is higher where the geometric mean is larger.

In the server 13, the reliability calculating unit 74 calculates the degree of reliability of observation values as described above, and supplies the calculated degree of reliability to the advice generating unit 75.

The advice generating unit 75 compares the degree of reliability supplied from the reliability calculating unit 74 with a predetermined threshold value, and, in accordance with a result of the comparison, generates advice on observation of species.

Specifically, when the degree of reliability is lower than the predetermined threshold value (or not higher than the predetermined threshold value), the advice generating unit 75 generates prompting advice to prompt the users to perform species observation (such as a message "Conduct more observation"), or insufficiency advice that notifies the users that the species observation is insufficient (such as a message "Observation is not sufficient").

Further, when the degree of reliability is not lower than the predetermined threshold value (or is higher than the predetermined threshold value), the advice generating unit 75 generates sufficiency advice notifying users that species observation is sufficient (such as a message "Today's observation is sufficient").

The advice generating unit 75 then causes the communication unit 67 to transmit advice on species observation to the terminal 12.

In the terminal 12, the acquiring unit 51 acquires the advice from the server 13 by causing the communication unit 40 to receive the advice, and the display control unit 52 presents the advice to the user by displaying the advice on the display unit 35 or output the advice as a sound from the speaker 36.

In accordance with the presented advice, the user of the terminal 12 can recognize that species observation is insufficient or sufficient. If species observation is insufficient, the user can continue the species observation. If species observation is sufficient, the user can end the species observation.

It should be noted that the reliability of observation values can be calculated for each group of users or for each user. In a case where reliability calculation is performed for each group of users, advice is generated for each group. In a case where reliability calculation is performed for each user, advice is generated for each user.

Further, advice on ecosystem observation can be generated in accordance with the reliability of user observation values obtained by the reliability calculating unit 74 as described above, and can also be generated in accordance with the number of new species and the number of existing species among the observation values obtained as a result of species observation performed by users.

For example, in a case where the number of new species is small and the number of existing species is large (or where the new species record rate is low), users probably have conducted observation only in places where observation had already been conducted. Therefore, advice can be generated to prompt users to conduct observation in different places from those already observed places.

Further, in a case where the number of new species or the number of existing species is extremely small, for example, advice can be generated to prompt users to observe new species or existing species, whichever are the smaller in number.

In a case where both the number of new species and the number of existing species are small, for example, advice can be generated to prompt users to observe both new species and existing species.

Further, the predetermined threshold value to be compared with the reliability of user observation values in the advice generating unit 75 may be a value corresponding to the mean value of the reliability of observation values obtained by users (such as 1/N of the mean value).

Further, the predetermined threshold value to be compared with the reliability of user observation values can be changed in accordance with the region or the season in which the observation values were obtained.

For example, the predetermined threshold value to be compared with the reliability of observation values obtained in a region such as a desert where not many species are observed can be changed to a smaller value than the predetermined threshold value to be compared with the reliability of observation values obtained in the other regions . On the other hand, the predetermined threshold value to be compared with the reliability of observation values obtained in a region such as a tropical forest where many species are observed can be changed to a greater value than the predetermined threshold value to be compared with the reliability of observation values obtained in the other regions.

Further, the predetermined threshold value to be compared with the reliability of observation values obtained in a season such as winter in which not many species are observed can be changed to a smaller value than the predetermined threshold value to be compared with the reliability of observation values obtained in the other seasons.

The reliability calculating unit 74 can also calculate the (ultimate) reliability of observation values by weighting the reliability of observation values observed by users, in accordance with the user profiles of the users.

For example, when the degree of reliability of observation values obtained by users UA and UB forming a group is calculated, the respective degrees of reliability of observation values observed by the users UA and UB are weighted in accordance with the respective user profiles of the users UA and UB. In this manner, the reliability can be calculated.

For ease of explanation, the total number of species observed by the users UA and UB is used as the degree of reliability of the observation values obtained by the group consisting of the users UA and UB. Further, the user UA is a scholar-level user, and the user UB is a beginner-level user. This can be recognized from the respective user profiles of the users UA and UB.

In this case, the reliability calculating unit 74 adds a large weight w (> 1 - w) to the number of species observed by the scholar-level user UA, and a small weight (1 - w) (< w) is added to the number of species observed by the beginner-level user UB. The weight-added value of the number of species observed by the users UA and UB is then calculated, and the calculated weight-added value can be set as the reliability of the observation values obtained by the group consisting of the users UA and UB.

Further, the reliability calculating unit 74 can calculate reliability by weighting observation values of species in accordance with the species observed to obtain the observation values.

For example, in a case where the number of species observed by a user is N, K species among the N species are rare species (endangered species), and the remaining (N - K) species are not rare species, the reliability calculating unit 74 adds a large weight w to the number N of rare species, and adds a small weight (1- w) to the number (N - K) of common species. The reliability calculating unit 74 then calculates the weight-added value of the number N of the rare species and the number (N - K) of the common species observed by the user, and sets the calculated weight-added value as the reliability of the observation values obtained by the user.

It should be noted that where ecosystems are observed by users, an element of gamification can be introduced.

For example, points can be given to users, in accordance with the degrees of reliability of observation values obtained by the users, the numbers of species observed as observation values, observation times, whether the species observed as observation values are rare species, and the like.

As an element of gamification is introduced into ecosystem observation being performed by users as described above, the ecosystem observation by users can be facilitated, and data (observation values) that can aid ecosystem utilization can be collected.

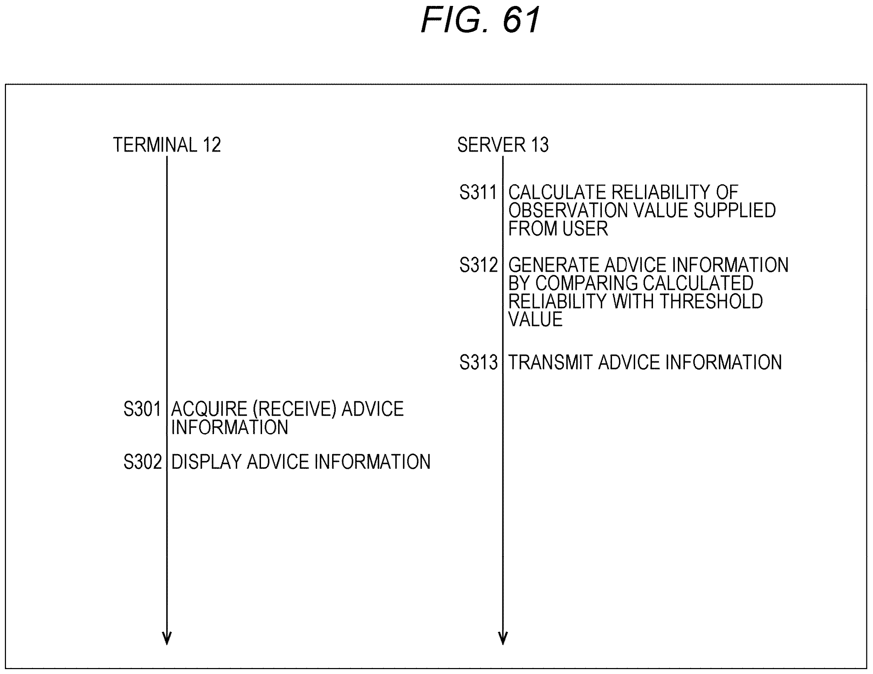

Fig. 61 is a flowchart for explaining an example process to generate advice on ecosystem observation in accordance with the reliability of observation values obtained by a user observing ecosystems, and present the advice to the user.

In step S311, the reliability calculating unit 74 of the server 13 calculates the reliability of observation values obtained by a user observing ecosystems, the observation values having been transmitted from a terminal 12.

In step S312, the advice generating unit 75 of the server 13 compares the reliability calculated by the reliability calculating unit 74 with a predetermined threshold value, and, in accordance with a result of the comparison, generates the above described advice information such as prompting advice, insufficiency advice, or sufficiency advice.

In step S313, the advice generating unit 75 transmits the advice information from the communication unit 67 to the terminal 12.

In step S301, the acquiring unit 51 of the terminal 12 acquires the advice information from the server 13, by causing the communication unit 40 to receive the advice information.

In step S302, the display control unit 52 presents the advice information acquired by the acquiring unit 51 to the user, by displaying the advice information on the display unit 35 (or outputting the advice information as a sound from the speaker 36).

As described above, the reliability of observation values obtained by a user observing ecosystems is calculated, and advice (information) on ecosystem observation is generated in accordance with the calculated reliability. The advice is then presented to the user, so that the ecosystem observation by the user can be facilitated, and various observation values that can aid ecosystem utilization can be collected.

Here, in this specification, the processes performed by a computer (a CPU) in accordance with a program are not necessarily performed in chronological order compliant with the sequences shown in the flowcharts . That is, the processes to be performed by the computer in accordance with the program include processes to be performed in parallel or independently of one another (such as parallel processes or object-based processes).

Further, the program may be executed by one computer (processor), or may be executed in a distributive manner by more than one computer. Further, the program may be transferred to a remote computer, and be executed therein.

In this specification, a system means an assembly of components (devices, modules (parts), and the like), and not all the components need to be provided in the same housing. In view of this, devices that are housed in different housings and are connected to each other via a network form a system, and one device having modules housed in one housing is also a system.

Various modifications may be made to them without departing from the disclosure. The scope of the invention is defined by the appended claims.

For example, the present technology can be embodied in a cloud computing structure in which one function is shared among devices via a network, and processing is performed by the devices cooperating with one another.

Further, the respective steps described with reference to the above described flowcharts can be carried out by one device or can be shared among devices.

In a case where more than one process is included in one step, the processes included in the step can be performed by one device or can be shared among devices.

Further, the advantageous effects described in this specification are merely examples, and the advantageous effects of the present technology are not limited to them and may include other effects.

### REFERENCE SIGNS LIST

- 10: Network
- 11: Sensor device
- 12: Terminal
- 13: Server
- 21: Wireless relay device
- 22: Wireless LAN
- 23: Mobile telephone network
- 24: Internet
- 31: CPU
- 32: Memory
- 33: Storage
- 34: Operating unit
- 35: Operating unit
- 36: Speaker
- 37: Camera
- 38: Microphone
- 39: Position detecting unit
- 40: Communication unit
- 41: External I/F
- 42: Drive
- 42A: Removable medium
- 43: Sensor
- 51: Acquiring unit
- 52: Display control unit
- 61: CPU
- 62: Memory
- 63: Storage
- 64: Operating unit
- 65: Display unit
- 66: Speaker
- 67: Communication unit
- 68: External I/F
- 69: Drive
- 69A: Removable medium
- 71: Synecoculture CMS
- 72: Graph display control unit
- 73: Evaluating unit
- 74: Reliability calculating unit
- 75: Advice generating unit
- 76: Associating unit
- 77: Analyzing unit
- 78: Vegetation distribution display control unit
- 101 through 104: Napa cabbage
- 105: Chinese chive
- 106: Japanese radish
- 107: Cauliflower
- 108: Japanese mustard spinach
- 109: Burdock
- 110: Colony of wormwood
- 121: Flag
- 122 through 133: Icon
- 201: Graph display area
- 202: List display area
- 211: Overview display area
- 212: Display frame

## Claims

1. A system comprising a terminal (12) and a server (13),
- the server (13) comprising:
a vegetation distribution display control unit (78) configured to cause a terminal (12) to display a vegetation distribution and related information associated with the vegetation distribution; and
a graph display control unit (72) configured to cause the terminal (12) to display a relationship graph which indicates relationships among different types of vegetation and relationships between vegetation and farm fields associated with the vegetation by transmitting, from a communication unit (67) of the server (13) to the terminal (12),
i) a bipartite graph generated by the display control unit (72) based on data from a database so that the terminal (12) generates the relationship graph from the bipartite graph and displays the relationship graph, or
ii) the relationship graph generated by the display control unit (72) from the bipartite graph so that the terminal (12) displays the relationship graph; and
- the terminal (12) comprising:
an acquiring unit (51) configured to acquire a vegetation distribution, related information associated with the vegetation distribution and a relationship graph via a communication unit (40) of the terminal (12) or to generate the relationship graph from a bipartite graph acquired via the communication unit (40); and
a display control unit (52) configured to cause the vegetation distribution, the related information and the relationship graph to be displayed, wherein the relationship graph indicates relationships among different types of vegetation and relationships between vegetation and farm fields associated with the vegetation.

2. The system according to claim 1, wherein:
the terminal (12) is configured to transmit location information indicating a location, and posted information input by a user; and
the vegetation distribution display control unit (78) is configured to associate the posted information with the location of the vegetation distribution indicated by the location information, and
causes the terminal (12) to display the posted information as the related information.

3. The system according to claim 2, wherein the vegetation distribution display control unit (78) is configured to cause the terminal (12) to display self-posted information in such a manner that the location of the vegetation distribution associated with the self-posted information is to be seen, the self-posted information being the posted information input by the user.

4. The system according to claim 3, wherein the vegetation distribution display control unit (78) is configured to cause the terminal (12) to display a track of movement of the user on the vegetation distribution.

5. The system according to claim 3 or 4, wherein the vegetation distribution display control unit (78) is configured to cause the terminal (12) to display others' posted information in such a manner that a location of the vegetation distribution associated with the others' posted information is not to be seen, the others' posted information being the posted information input by a different user from the user.

6. The system server according to claim 5, wherein the vegetation distribution display control unit (78) is configured to cause the terminal (12) to display a list of the others' posted information.

7. The system according to claim 1, further comprising
a communication unit configured to transmit location information indicating a location and posted information input by a user, to a server (13),
wherein:
the server (13) is configured to associate the posted information with the location of the vegetation distribution indicated by the location information;
the acquiring unit (51) is configured to acquire the posted information from the server (13); and
the display control unit (52) is configured to cause the posted information to be displayed as the related information.

8. The system according to claim 7, wherein the display control unit (52) is configured to cause self-posted information to be displayed in such a manner that the location of the vegetation distribution associated with the self-posted information is to be seen, the self-posted information being the posted information input by the user.

9. The system according to claim 8, wherein the display control unit (52) is configured to cause a track of movement of the user on the vegetation distribution to be displayed.

10. The system according to claim 8 or 9, wherein the display control unit (52) is configured to cause others' posted information to be displayed in such a manner that a location of the vegetation distribution associated with the others' posted information is not to be seen, the others' posted information being the posted information input by a different user from the user.

11. The system according to claim 10, wherein the display control unit (52) is configured to cause a list of the others' posted information to be displayed.

12. An information processing method employing the system of any of claims 1 to 11 comprising a terminal (12) and a server (13), the method comprising:
causing, by a graph display control unit (72) of the server (13), a terminal (12) to display a vegetation distribution, related information associated with the vegetation distribution and a network relationship graph which indicates relationships among different types of vegetation and relationships between vegetation and farm fields associated with the vegetation;
transmitting, from a communication unit (67) of the server (13) to the terminal (12),
i) a bipartite graph generated by the display control unit (72) based on data from a database so that the terminal (12) generates the relationship graph from the bipartite graph, or
ii) the relationship graph generated by the display control unit (12) from the bipartite graph so that the terminal (12) displays the relationship graph;
acquiring a vegetation distribution, related information associated with the vegetation distribution and a network relationship graph via a communication unit (40) of the terminal (12) or generating the relationship graph from a bipartite graph acquired via the communication unit (40); and
causing the vegetation distribution, the related information and the network relationship graph to be displayed, wherein the relationship graph indicates relationships among different types of vegetation and relationships between vegetation and farm fields associated with the vegetation.

13. A program for causing a computer to carry out the steps of the method claimed in claim 12 when said program is executed by the computer.

## Patentansprüche

1. System, umfassend ein Endgerät (12) und einen Server (13),
- der Server (13) umfassend:
eine Vegetationsverteilungsanzeigesteuereinheit (78), die konfiguriert ist, um ein Endgerät (12) zu veranlassen, eine Vegetationsverteilung und zugehörige Informationen, die der Vegetationsverteilung zugeordnet sind, anzuzeigen; und
eine Diagrammanzeigesteuereinheit (72), die konfiguriert ist, um das Endgerät (12) zu veranlassen, ein Beziehungsdiagramm anzuzeigen, das Beziehungen zwischen verschiedenen Vegetationsarten und Beziehungen zwischen der Vegetation und den der Vegetation zugeordneten landwirtschaftlichen Felder angibt, durch Übertragen, von einer Kommunikationseinheit (67) des Servers (13) an das Endgerät (12),
i) eines zweistufigen Diagramms, das durch die Anzeigesteuereinheit (72) basierend auf Daten aus einer Datenbank erzeugt wird, sodass das Endgerät (12) das Beziehungsdiagramm aus dem zweistufigen Diagramm erzeugt und das Beziehungsdiagramm anzeigt, oder
ii) des Beziehungsdiagramms, das durch die Anzeigesteuereinheit (72) aus dem zweistufigen Diagramm erzeugt wird, sodass das Endgerät (12) das Beziehungsdiagramm anzeigt; und
- das Endgerät (12) umfassend:
eine Erfassungseinheit (51), die konfiguriert ist, um eine Vegetationsverteilung, zugehörige Informationen, die der Vegetationsverteilung zugeordnet sind und ein Beziehungsdiagramm über eine Kommunikationseinheit (40) des Endgeräts (12) zu erfassen oder um das Beziehungsdiagramm aus einem über die Kommunikationseinheit (40) erfassten zweistufigen Diagramm zu erzeugen; und
eine Anzeigesteuereinheit (52), die konfiguriert ist, um das Anzeigen der Vegetationsverteilung, der zugehörigen Informationen und des Beziehungsdiagramms zu veranlassen, wobei das Beziehungsdiagramm Beziehungen zwischen verschiedenen Vegetationsarten und Beziehungen zwischen der Vegetation und den der Vegetation zugeordneten landwirtschaftlichen Feldern angibt.

2. System nach Anspruch 1, wobei:
das Endgerät (12) konfiguriert ist, um Standortinformationen, die einen Standort angeben, und durch einen Benutzer eingegebene veröffentlichte Informationen zu übertragen; und
die Vegetationsverteilungsanzeigesteuereinheit (78) konfiguriert ist, um die veröffentlichten Informationen dem Standort der Vegetationsverteilung zuzuordnen, der durch die Standortinformationen angegeben wird, und
das Endgerät (12) veranlasst, die veröffentlichten Informationen als die zugehörigen Informationen anzuzeigen.

3. System nach Anspruch 2, wobei die Vegetationsverteilungsanzeigesteuereinheit (78) konfiguriert ist, um das Endgerät (12) zu veranlassen, selbstveröffentlichte Informationen derart anzuzeigen, dass der Standort der Vegetationsverteilung, der den selbstveröffentlichten Informationen zugeordnet ist, zu sehen ist, wobei die selbstveröffentlichten Informationen die durch den Benutzer eingegebenen veröffentlichten Informationen sind.

4. System nach Anspruch 3, wobei die Vegetationsverteilungsanzeigesteuereinheit (78) konfiguriert ist, um das Endgerät (12) zu veranlassen, eine Bewegungsbahn des Benutzers auf der Vegetationsverteilung anzuzeigen.

5. System nach Anspruch 3 oder 4, wobei die Vegetationsverteilungsanzeigesteuereinheit (78) konfiguriert ist, um das Endgerät (12) zu veranlassen, von anderen veröffentlichte Informationen derart anzuzeigen, dass ein Standort der Vegetationsverteilung, der den von anderen veröffentlichten Informationen zugeordnet ist, nicht zu sehen ist, wobei die von anderen veröffentlichten Informationen die durch einen Benutzer eingegebenen veröffentlichten Informationen sind.

6. Systemserver nach Anspruch 5, wobei die Vegetationsverteilungsanzeigesteuereinheit (78) konfiguriert ist, um das Endgerät (12) zu veranlassen, eine Liste der von anderen veröffentlichten Informationen anzuzeigen.

7. System nach Anspruch 1, ferner umfassend
eine Kommunikationseinheit, die konfiguriert ist, um Standortinformationen, die einen Standort und eine durch einen Benutzer eingegebene veröffentlichte Information angeben, an einen Server (13) zu übertragen,
wobei:
der Server (13) konfiguriert ist, um die veröffentlichten Informationen dem Standort der Vegetationsverteilung zuzuordnen, der durch die Standortinformationen angegeben wird;
die Erfassungseinheit (51) konfiguriert ist, um die veröffentlichten Informationen von dem Server (13) zu erfassen; und
die Anzeigesteuereinheit (52) konfiguriert ist, um zu veranlassen, dass die veröffentlichten Informationen als die zugehörigen Informationen angezeigt werden.

8. System nach Anspruch 7, wobei die Anzeigesteuereinheit (52) konfiguriert ist, um das Anzeigen von selbstveröffentlichten Informationen derart zu veranlassen, dass der Standort der Vegetationsverteilung, der den selbstveröffentlichten Informationen zugeordnet ist, zu sehen ist, wobei die selbstveröffentlichten Informationen die durch den Benutzer eingegebenen veröffentlichten Informationen sind.

9. System nach Anspruch 8, wobei die Anzeigesteuereinheit (52) konfiguriert ist, um zu veranlassen, dass eine Bewegungsbahn des Benutzers auf der Vegetationsverteilung angezeigt wird.

10. System nach Anspruch 8 oder 9, wobei die Anzeigesteuereinheit (52) konfiguriert ist, um das Anzeigen von von anderen veröffentlichten Informationen derart zu veranlassen, dass ein Standort der Vegetationsverteilung, der den von anderen veröffentlichten Informationen zugeordnet ist, nicht zu sehen ist, wobei die von anderen veröffentlichten Informationen die veröffentlichten Informationen sind, die durch einen anderen Benutzer als den Benutzer eingegeben wurden.

11. System nach Anspruch 10, wobei die Anzeigesteuereinheit (52) konfiguriert ist, um das Anzeigen einer Liste der von anderen veröffentlichten Informationen zu veranlassen.

12. Informationsverarbeitungsverfahren unter Verwendung des Systems nach einem der Ansprüche 1 bis 11, umfassend ein Endgerät (12) und einen Server (13), wobei das Verfahren umfasst:
Veranlassen, durch eine Diagrammanzeigesteuereinheit (72) des Servers (13), dass ein Endgerät (12) eine Vegetationsverteilung, zugehörige Informationen, die der Vegetationsverteilung zugeordnet sind und ein Netzwerkbeziehungsdiagramm, das Beziehungen zwischen verschiedenen Vegetationsarten und Beziehungen zwischen der Vegetation und den der Vegetation zugeordneten landwirtschaftlichen Felder angibt, anzeigt;
Übertragen, von einer Kommunikationseinheit (67) des Servers (13) an das Endgerät (12),
i) eines zweistufigen Diagramms, das von der Anzeigesteuereinheit (72) basierend auf Daten aus einer Datenbank erzeugt wird, sodass das Endgerät (12) das Beziehungsdiagramm aus dem zweistufigen Diagramm erzeugt, oder
ii) des Beziehungsdiagramms, das durch die Anzeigesteuereinheit (12) aus dem zweistufigen Diagramm erzeugt wird, sodass das Endgerät (12) das Beziehungsdiagramm anzeigt;
Erfassen einer Vegetationsverteilung, zugehöriger Informationen, die der Vegetationsverteilung zugeordnet sind und eines Netzwerkbeziehungsdiagramms über eine Kommunikationseinheit (40) des Endgeräts (12) oder Erzeugen des Beziehungsdiagramms aus einem über die Kommunikationseinheit (40) erfassten zweistufigen Diagramm; und
Veranlassen der Anzeige der Vegetationsverteilung, der zugehörigen Informationen und des Netzwerkbeziehungsdiagramms, wobei das Beziehungsdiagramm Beziehungen zwischen verschiedenen Vegetationsarten und Beziehungen zwischen der Vegetation und den der Vegetation zugeordneten landwirtschaftlichen Feldern angibt.

13. Programm zum Veranlassen eines Computers, die Schritte des in Anspruch 12 beanspruchten Verfahrens durchzuführen, wenn das Programm durch den Computer ausgeführt wird.

## Revendications

1. Système comprenant un terminal (12) et un serveur (13),
- le serveur (13) comprenant :
une unité de commande d'affichage de répartition de végétation (78) configurée pour amener un terminal (12) à afficher une répartition de végétation et des informations connexes associées à la répartition de végétation ; et
une unité de commande d'affichage de graphique (72) configurée pour amener le terminal (12) à afficher un graphique de relation qui indique des relations entre différents types de végétation et des relations entre la végétation et des champs agricoles associés à la végétation en transmettant, d'une unité de communication (67) du serveur (13) au terminal (12),
i) un graphique bipartite généré par l'unité de commande d'affichage (72) sur la base de données provenant d'une base de données de telle sorte que le terminal (12) génère le graphique de relation à partir du graphique bipartite et affiche le graphique de relation, ou
ii) le graphique de relation généré par l'unité de commande d'affichage (72) à partir du graphique bipartite de telle sorte que le terminal (12) affiche le graphique de relation ; et
- le terminal (12) comprenant :
une unité d'acquisition (51) configurée pour acquérir une répartition de végétation, des informations connexes associées à la répartition de végétation et un graphique de relation par le biais d'une unité de communication (40) du terminal (12) ou pour générer le graphique de relation à partir d'un graphique bipartite acquis par le biais de l'unité de communication (40) ; et
une unité de commande d'affichage (52) configurée pour amener la répartition de végétation, les informations connexes et le graphique de relation à être affichés, dans lequel le graphique de relation indique des relations entre différents types de végétation et des relations entre la végétation et des champs agricoles associés à la végétation.

2. Système selon la revendication 1, dans lequel :
le terminal (12) est configuré pour transmettre des informations d'emplacement indiquant un emplacement, et des informations déposées saisies par un utilisateur ; et
l'unité de commande d'affichage de répartition de végétation (78) est configurée pour associer les informations déposées à l'emplacement de la répartition de végétation indiqué par les informations d'emplacement, et
amène le terminal (12) à afficher les informations déposées en tant qu'informations connexes.

3. Système selon la revendication 2, dans lequel l'unité de commande d'affichage de répartition de végétation (78) est configurée pour amener le terminal (12) à afficher des informations déposées automatiquement d'une manière telle que l'emplacement de la répartition de végétation associé aux informations déposées automatiquement est visible, les informations déposées automatiquement étant les informations déposées saisies par l'utilisateur.

4. Système selon la revendication 3, dans lequel l'unité de commande d'affichage de répartition de végétation (78) est configurée pour amener le terminal (12) à afficher une trace de mouvement de l'utilisateur sur la répartition de végétation.

5. Système selon la revendication 3 ou 4, dans lequel l'unité de commande d'affichage de répartition de végétation (78) est configurée pour amener le terminal (12) à afficher des informations déposées par autrui d'une manière telle qu'un emplacement de la répartition de végétation associé aux informations déposées par autrui n'est pas visible, les informations déposées par autrui étant les informations déposées saisies par un utilisateur différent de l'utilisateur.

6. Serveur système selon la revendication 5, dans lequel l'unité de commande d'affichage de répartition de végétation (78) est configurée pour amener le terminal (12) à afficher une liste des informations déposées par autrui.

7. Système selon la revendication 1, comprenant en outre
une unité de communication configurée pour transmettre des informations d'emplacement indiquant un emplacement et des informations déposées saisies par un utilisateur, à un serveur (13),
dans lequel :
le serveur (13) est configuré pour associer les informations déposées à l'emplacement de la répartition de végétation indiqué par les informations d'emplacement ;
l'unité d'acquisition (51) est configurée pour acquérir les informations déposées depuis le serveur (13) ; et
l'unité de commande d'affichage (52) est configurée pour amener les informations déposées à être affichées en tant qu'informations connexes.

8. Système selon la revendication 7, dans lequel l'unité de commande d'affichage (52) est configurée pour amener des informations déposées automatiquement à être affichées d'une manière telle que l'emplacement de la répartition de végétation associé aux informations déposées automatiquement est visible, les informations déposées automatiquement étant les informations déposées saisies par l'utilisateur.

9. Système selon la revendication 8, dans lequel l'unité de commande d'affichage (52) est configurée pour amener une trace de mouvement de l'utilisateur sur la répartition de végétation à être affichée.

10. Système selon la revendication 8 ou 9, dans lequel l'unité de commande d'affichage (52) est configurée pour amener des informations déposées par autrui à être affichées d'une manière telle qu'un emplacement de la répartition de végétation associé aux informations déposées par autrui n'est pas visible, les informations déposées par autrui étant les informations déposées saisies par un utilisateur différent de l'utilisateur.

11. Système selon la revendication 10, dans lequel l'unité de commande d'affichage (52) est configurée pour amener une liste des informations déposées par autrui à être affichée.

12. Procédé de traitement d'informations employant le système selon l'une quelconque des revendications 1 à 11 comprenant un terminal (12) et un serveur (13), le procédé comprenant :
le fait d'amener, par une unité de commande d'affichage de graphique (72) du serveur (13), un terminal (12) à afficher une répartition de végétation, des informations connexes associées à la répartition de végétation et un graphique de relation de réseau qui indique des relations entre différents types de végétation et des relations entre la végétation et des champs agricoles associés à la végétation ;
la transmission, d'une unité de communication (67) du serveur (13) au terminal (12),
i) d'un graphique bipartite généré par l'unité de commande d'affichage (72) sur la base de données provenant d'une base de données de telle sorte que le terminal (12) génère le graphique de relation à partir du graphique bipartite, ou
ii) du graphique de relation généré par l'unité de commande d'affichage (12) à partir du graphique bipartite de telle sorte que le terminal (12) affiche le graphique de relation ;
l'acquisition d'une répartition de végétation, d'informations connexes associées à la répartition de végétation et d'un graphique de relation de réseau par le biais d'une unité de communication (40) du terminal (12) ou la génération du graphique de relation à partir d'un graphique bipartite acquis par le biais de l'unité de communication (40) ; et
le fait d'amener la répartition de végétation, les informations connexes et le graphique de relation de réseau à être affichés, dans lequel le graphique de relation indique des relations entre différents types de végétation et des relations entre la végétation et des champs agricoles associés à la végétation.

13. Programme permettant d'amener un ordinateur à mettre en oeuvre les étapes du procédé selon la revendication 12 lorsque ledit programme est exécuté par l'ordinateur.
